(19) Europäisches Patentamt
European Patent Office
Office européen des brevets

(11) **EP 4 563 975 A1**

(12) **EUROPEAN PATENT APPLICATION**
published in accordance with Art. 153(4) EPC

(43) Date of publication:
**04.06.2025 Bulletin 2025/23**

(21) Application number: **23842917.9**

(22) Date of filing: **13.07.2023**

(51) International Patent Classification (IPC):
*G01N 21/35* (2014.01)  *G01J 3/42* (2006.01)
*G01J 3/45* (2006.01)  *G02F 1/39* (2006.01)

(52) Cooperative Patent Classification (CPC):
**G01J 3/42; G01J 3/45; G01N 21/35; G02F 1/39**

(86) International application number:
**PCT/JP2023/025937**

(87) International publication number:
**WO 2024/018994 (25.01.2024 Gazette 2024/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.07.2022 JP 2022115504**

(71) Applicant: **Kyoto University
Kyoto-shi, Kyoto 606-8501 (JP)**

(72) Inventors:
• **TAKEUCHI, Shigeki
  Kyoto-shi, Kyoto 606-8501 (JP)**
• **MUKAI, Yu
  Kyoto-shi, Kyoto 606-8501 (JP)**
• **ARAHATA, Masaya
  Kyoto-shi, Kyoto 606-8501 (JP)**
• **OKAMOTO, Ryo
  Kyoto-shi, Kyoto 606-8501 (JP)**

(74) Representative: **Bals & Vogel Patentanwälte
PartGmbB
Konrad-Zuse-Str. 4
44801 Bochum (DE)**

(54) **QUANTUM ABSORPTION SPECTROSCOPY SYSTEM AND QUANTUM ABSORPTION SPECTROSCOPY METHOD**

(57)     A rotation stage (105) scans a wavelength of a quantum entangled photon pair by changing a crystal rotation angle θ. A moving mirror (110) and a driver (111) sweep an optical path difference between a signal photon and an idler photon. A photodetector (81) outputs a signal according to the signal count in a state where a target sample is disposed in an optical path of the idler photon. A processor (91) acquires, each time the wavelength is sequentially changed by changing crystal rotation angle (θ), a quantum interference signal under a condition that a sweep range of the optical path difference is limited compared with when sweeping the optical path difference to acquire an entire envelope of the quantum interference signal, or under a condition that the optical path difference is fixed, calculates amplitude of an interference fringe that appears in the acquired quantum interference signal, and calculates, based on the calculated amplitude of the interference fringe, an absorption spectroscopy characteristic at a wavelength of the idler photon corresponding to crystal rotation angle (θ).

FIG.1

EP 4 563 975 A1

# EP 4 563 975 A1

**Description**

TECHNICAL FIELD

The present disclosure relates to a quantum absorption spectroscopy system and a quantum absorption spectroscopy method.

BACKGROUND ART

In recent years, in the fields of quantum technology such as quantum metrology, quantum communication, and quantum computing, research for achieving a new function using a "quantum entangled" photon pair in which two photons have a quantum mechanical correlation has been advanced. Hereinafter, such a photon pair is referred to as "quantum entangled photon pair", and the spectroscopy using absorption of the quantum entangled photon pair is referred to as "quantum absorption spectroscopy". WO 2021/117632 (PTL 1) discloses a quantum absorption spectroscopy system and a quantum absorption spectroscopy method proposed by the present inventors.

CITATION LISTS

PATENT LITERATURES

    PTL 1: WO 2021/117632
    PTL 2: Japanese Patent Laying-Open No. 2004-54191

NON PATENT LITERATURES

    NPL 1: Y. Mukai, M. Arahata, T. Tashima, R. Okamoto, and S. Takeuchi, "Quantum Fourier-Transform Infrared Spectroscopy for Complex Transmittance Measurements", Physical Review Applied 15, 034019 (2021).
    NPL 2: Masaya Arahata, Yu Mukai, Bo Cao, Toshiyuki Tashima, Ryo Okamoto, and Shigeki Takeuchi, "Wavelength variable generation and detection of photon pairs in visible and mid-infrared regions via spontaneous parametric down conversion", Vol. 38, No. 6/June 2021/Journal of the Optical Society of America B.
    NPL 3: Masaya Arahata, Yu Mukai, Toshiyuki Tashima, Ryo Okamoto, and Shigeki Takeuchi, "Wavelength-tunable broadband infrared quantum absorption spectroscopy in the mid-infrared region 2-5 um", Abstracts of the 4th IFQMS, December 3, 2021.
    NPL 4: Yu Mukai, Ryo Okamoto, and Shigeki Takeuchi, "Quantum Fourier-transform infrared spectroscopy in the fingerprint region", Optics Express Vol. 30, No. 13, 22624-22636 (2022)
    NPL 5: Chiara Lindner, Sebastian Wolf, Jens Kiessling and Frank Kuhnemann, "Fourier transform infrared spectroscopy with visible light", Optics Express Vol. 28, No. 4, 4426-4432 (2020).

SUMMARY OF INVENTION

TECHNICAL PROBLEM

In quantum absorption spectroscopy, as with conventional absorption spectroscopy that uses classical optical systems, there is a demand to broaden the wavelength range in which the absorption spectroscopy characteristic of a sample is measurable, and a demand to shorten the measurement time. The inventors have noted that when targeting the absorption spectroscopy characteristic over a wide wavelength range in quantum absorption spectroscopy disclosed in PTL 1, for example, the measurement time can become long (details will be described later). An excessively long measurement time may result in reduced practicality. Therefore, in quantum absorption spectroscopy targeting a wide wavelength range, the demand to reduce measurement time is particularly pronounced.

The present disclosure has been made to solve the above problem, and one object of the present disclosure is to provide a technology capable of measuring the absorption spectroscopy characteristic of a sample over a wide wavelength range at high speed.

SOLUTION TO PROBLEM

In one aspect of the present disclosure, a quantum absorption spectroscopy system includes a quantum optical system that causes quantum interference between a plurality of physical processes in which a quantum entangled photon pair of a signal photon and an idler photon is generated. The quantum optical system includes a nonlinear optical element, a wavelength scanner, and an optical path sweeper. The nonlinear optical element generates the quantum entangled photon pair by irradiation with pump light. The wavelength scanner scans a wavelength of the quantum entangled photon pair by changing a control parameter. The optical path sweeper sweeps an optical path difference between the signal photon and the idler photon. The quantum absorption spectroscopy system further includes a photodetector and a processor. The photodetector outputs a signal depending on a detected number of the signal photons in a state where a target sample is disposed in an optical path of the idler photon. The processor controls the quantum optical system to cause the quantum interference and calculates an absorption spectroscopy characteristic of the target sample based on a quantum interference signal acquired from the photodetector during the control. The processor acquires, each time the wavelength is sequentially changed by changing the control parameter, the quantum interference signal under a condition that a sweep range of the optical path difference is limited compared with when sweeping the optical path difference to acquire an entire envelope of the quantum interference signal, or under a condition that the optical path difference is fixed. The processor calculates amplitude of an interference fringe that appears in the acquired quantum interference signal, and calculates, based on the calculated amplitude of the interference fringe, the absorption spectroscopy characteristic at a wavelength of the idler photon corresponding to the control parameter.

In another aspect of the present disclosure, the quantum absorption spectroscopy method uses a quantum optical system. The quantum optical system is configured to cause quantum interference between a plurality of physical processes in which a quantum entangled photon pair of a signal photon and an idler photon is generated, scan a wavelength of the quantum entangled photon pair by changing a control parameter, and sweep an optical path difference between the signal photon and the idler photon. The quantum absorption spectroscopy method includes first to fourth steps. The first step is scanning the wavelength by changing the control parameter in a state where a sample is disposed in an optical path of the idler photon. The second step is acquiring, each time the wavelength is changed sequentially, a quantum interference signal according to a detected number of the signal photons from a photodetector. The acquiring (the second step) includes acquiring the quantum interference signal under a condition that a sweep range of the optical path difference is limited compared with when sweeping the optical path difference to acquire an entire envelope of the quantum interference signal, or under a condition that the optical path difference is fixed. The third step is calculating amplitude of an interference fringe that appears in the quantum interference signal. The fourth step is calculating, based on the amplitude of the interference fringe, an absorption spectroscopy characteristic of the sample at a wavelength of the idler photon corresponding to the control parameter.

ADVANTAGEOUS EFFECTS OF INVENTION

According to the present disclosure, the absorption spectroscopy characteristic of the sample can be measured over a wide wavelength range at high speed.

BRIEF DESCRIPTION OF DRAWINGS

Fig. 1 is a diagram showing one example of an overall configuration of a quantum absorption spectroscopy system according to a first embodiment of the present disclosure.
Fig. 2 is a diagram showing a typical configuration example of a controller.
Fig. 3 is a conceptual diagram for describing the principle of quantum absorption spectroscopy.
Fig. 4 is a diagram for describing the rotation of a nonlinear optical crystal.
Fig. 5 is a conceptual diagram for describing an overview of a fine mode.
Fig. 6 is a flowchart showing one example of an overall processing procedure of the fine mode.
Fig. 7 is a flowchart showing one example of a processing procedure of second quantum measurement in the fine mode.
Fig. 8 is a flowchart showing one example of a processing procedure of arithmetic processing in the fine mode.
Fig. 9 is a diagram showing one example of a quantum interference signal and a Fourier spectrum obtained from the quantum interference signal.
Fig. 10 is a diagram showing another example of the quantum interference signal and the Fourier spectrum obtained from the quantum interference signal.
Fig. 11 is a diagram summarizing analysis results of the Fourier spectrum illustrated in Figs. 9 and 10.

Fig. 12 is a conceptual diagram for describing an overview of a coarse mode.

Fig. 13 is a flowchart showing one example of an overall processing procedure of the coarse mode.

Fig. 14 is a flowchart showing a first example of a processing procedure of second quantum measurement in the coarse mode.

Fig. 15 is a flowchart showing one example of a processing procedure of arithmetic processing in the coarse mode.

Fig. 16 is a diagram showing peak shift of the quantum interference signal accompanying rotational scanning of the nonlinear optical crystal.

Fig. 17 is a diagram showing one example of a relationship between an angle of the nonlinear optical crystal and a peak position of the quantum interference signal.

Fig. 18 is a conceptual diagram of a map about a sweep range of second sweep according to the first embodiment.

Fig. 19 is a flowchart showing a second example of the processing procedure of the second quantum measurement in the coarse mode.

Fig. 20 is a diagram showing one example of a transmission spectrum obtained in the coarse mode.

Fig. 21 is a flowchart showing one example of the overall processing procedure of the fine mode.

Fig. 22 is a flowchart showing one example of the processing procedure of the second quantum measurement in the fine mode.

Fig. 23 is a flowchart showing one example of the processing procedure of the arithmetic processing in the fine mode.

Fig. 24 is a diagram showing one example of measurement results in the fine mode near an idler wavelength 2.7 $\mu$m.

Fig. 25 is a diagram showing one example of the measurement results in the fine mode near an idler wavelength 4.3 $\mu$m.

Fig. 26 is a diagram showing another example of the overall configuration of the quantum absorption spectroscopy system according to the first embodiment of the present disclosure.

Fig. 27 is a diagram showing a configuration example of an ATR unit.

Fig. 28 is a diagram summarizing crystal materials of the nonlinear optical crystal.

Fig. 29 is a diagram showing an overall configuration of a quantum absorption spectroscopy system according to a first modification of the first embodiment.

Fig. 30 is a diagram showing how a quasi-phase-matched device is translated by a translation stage.

Fig. 31 is a diagram showing one example of simulation results regarding a wavelength of an idler photon generated accompanying the translation of the quasi-phase-matched device.

Fig. 32 is a conceptual diagram of the map regarding the sweep range of the second sweep according to the first modification of the first embodiment.

Fig. 33 is a flowchart showing one example of a processing procedure of the second quantum measurement according to the first modification of the first embodiment.

Fig. 34 is a diagram showing an overall configuration of a quantum absorption spectroscopy system according to a second modification of the first embodiment.

Fig. 35 is a diagram showing one example of simulation results regarding a change in the wavelength of the idler photon accompanying temperature control of the nonlinear optical crystal.

Fig. 36 is a conceptual diagram of the map regarding the sweep range of the second sweep according to the second modification of the first embodiment.

Fig. 37 is a flowchart showing one example of a processing procedure of the second quantum measurement according to the second modification of the first embodiment.

Fig. 38 is a diagram showing an overall configuration of a quantum absorption spectroscopy system according to a third modification of the first embodiment.

Fig. 39 is a diagram showing one example of simulation results regarding the change in the wavelength of the idler photon accompanying the change in a wavelength of pump light.

Fig. 40 is a conceptual diagram of the map regarding the sweep range of the second sweep according to the third modification of the first embodiment.

Fig. 41 is a flowchart showing one example of a processing procedure of the second quantum measurement according to the third modification of the first embodiment.

Fig. 42 is a diagram showing an overall configuration of a quantum absorption spectroscopy system according to a second embodiment.

Fig. 43 is a diagram showing a configuration example of a spectrometer 82.

Fig. 44 is a conceptual diagram for describing an analysis method of a quantum interference signal according to the second embodiment.

Fig. 45 is a diagram for describing a method of calculating visibility according to the second embodiment.

Fig. 46 is a flowchart showing one example of a processing procedure of second quantum measurement according to the second embodiment.

Fig. 47 is a flowchart showing one example of a processing procedure of arithmetic processing according to the second embodiment.

Fig. 48 is a diagram showing an overall configuration of a quantum absorption spectroscopy system according to a third embodiment.

Fig. 49 is a conceptual diagram for describing an analysis method of a quantum interference signal according to the third embodiment.

Fig. 50 is a diagram for describing a method of calculating visibility according to the third embodiment.

Fig. 51 is a flowchart showing one example of a processing procedure of second quantum measurement according to the third embodiment.

Fig. 52 is a flowchart showing one example of a processing procedure of arithmetic processing according to the third embodiment.

DESCRIPTION OF EMBODIMENTS

Embodiments of the present disclosure will be described in detail below with reference to the drawings. In the drawings, the same or corresponding parts are denoted with the same symbol and descriptions thereof will not be repeated.

[Description of terms]

In the present disclosure and the embodiments thereof, an ultraviolet range means a wavelength range of 10 nm to 360 nm. A visible range means a wavelength range of 360 nm to 1050 nm. A near infrared range means a wavelength range of 1050 nm to 2 $\mu$m. A mid-infrared range means a wavelength range of 2 $\mu$m to 5 $\mu$m. A far infrared range means a wavelength range of 5 $\mu$m to 20 $\mu$m. An ultra far infrared range means a wavelength range of 20 $\mu$m to 1 mm. An infrared range can include all the near infrared range, the mid-infrared range, the far infrared range, and the ultra far infrared range.

In the present disclosure and the embodiments thereof, the nanometer order includes the range from 1 nm to 1000 nm (= 1 $\mu$m). The micrometer order includes the range from 1 $\mu$m to 1000 $\mu$m (=1 mm). The millimeter order includes the range from 1 mm to 10 mm (=1 cm).

The following embodiments will describe a configuration in which the quantum absorption spectroscopy system according to the present disclosure measures an absorption spectroscopy characteristic of a sample in the infrared range (particularly mid-infrared range). However, the wavelength range that can be measured by the quantum absorption spectroscopy system according to the present disclosure is not limited to the infrared range, but may be the ultraviolet range or the visible range.

[First embodiment]

<System configuration>

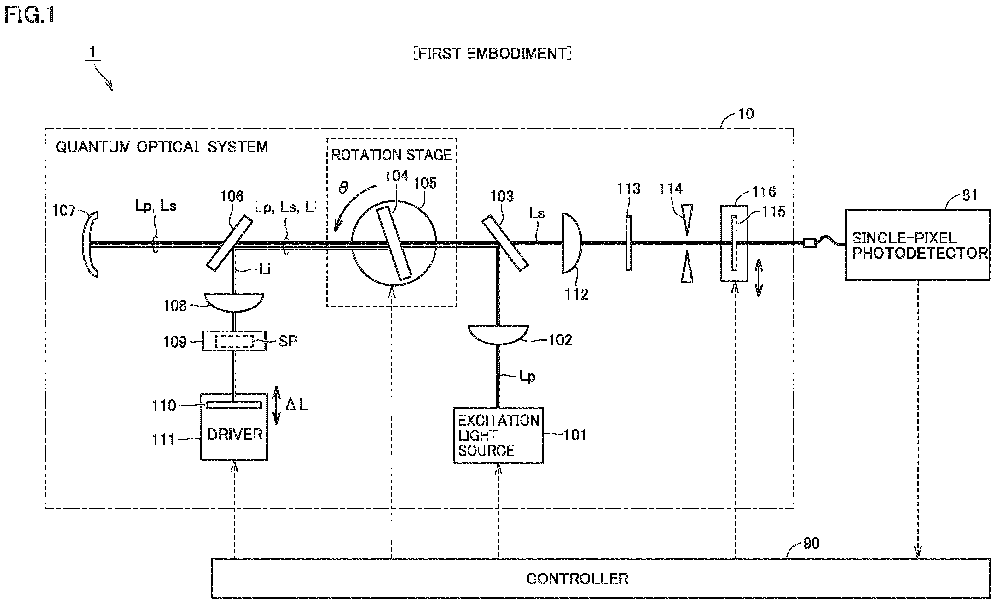

Fig. 1 is a diagram showing one example of an overall configuration of a quantum absorption spectroscopy (QAS) system according to the first embodiment of the present disclosure. A QAS system 1 is configured to measure the absorption spectroscopy characteristic (complex transmittance spectrum, transmission spectrum, absorption spectrum, and the like) in the infrared range of a sample. Quantum absorption spectroscopy system 1 includes a quantum optical system 10, a photodetector 81, and a controller 90.

Quantum optical system 10 is configured to cause quantum interference between a plurality of physical processes in which a quantum entangled photon pair of a signal photon and an idler photon is generated from pump light. In the diagram, the pump light is indicated by Lp. An optical path of signal light (light including signal photons) is indicated by Ls, and an optical path of idler light (light including idler photons) is indicated by Li. Thus, the subscripts p, s, and i denote parameters related to the pump light, the signal light, and the idler light, respectively. For example, the wavelength of the pump light is described as "pump wavelength $\lambda p$", the wavelength of the signal photon is described as "signal wavelength $\lambda s$", and the wavelength of the idler photon is described as "idler wavelength $\lambda i$". The same applies to the optical path, angular frequency, and the like.

Quantum optical system 10 includes an excitation light source 101, a lens 102, a dichroic mirror 103, a nonlinear optical crystal 104, a rotation stage 105, a dichroic mirror 106, a fixed mirror 107, a lens 108, a sample holder 109, a moving mirror 110, a driver 111, a lens 112, a long pass filter 113, an iris 114, a bandpass filter 115, and a translation stage 116.

Excitation light source 101 emits the pump light to excite nonlinear optical crystal 104. The pump light is laser light of a continuous wave (CW) included in the visible range. In the present embodiment, a semiconductor laser emitting green laser light with a wavelength of 532 nm is employed as excitation light source 101.

Lens 102 is disposed between excitation light source 101 and dichroic mirror 103. Lens 102 is adjusted to collect the pump light from excitation light source 101 and focus the collected pump light at nonlinear optical crystal 104.

Dichroic mirror 103 is disposed between lens 102 and nonlinear optical crystal 104. Dichroic mirror 103 transmits the signal light while reflecting the pump light and the idler light. The pump light is reflected by dichroic mirror 103, and nonlinear optical crystal 104 is irradiated with the pump light.

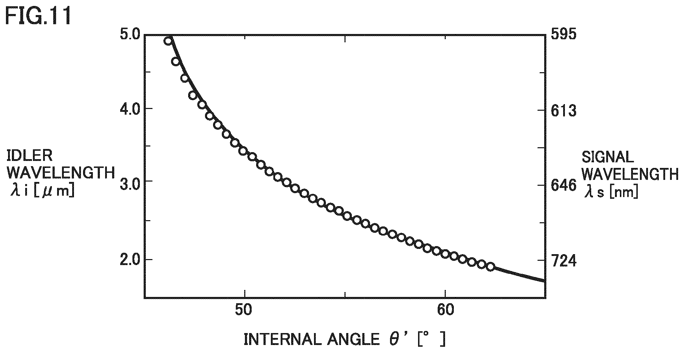

Nonlinear optical crystal 104 generates the signal light and the idler light from the pump light collected by lens 102. In more detail, nonlinear optical crystal 104 generates a photon pair of the signal photon and the idler photon through spontaneous parametric down-conversion (SPDC) of the pump light. In the SPDC of the pump light, the energy conservation law and the phase matching condition (the law of conservation of wave vector) are satisfied before and after the spontaneous parametric down-conversion. In the present embodiment, nonlinear optical crystal 104 is a type I lithium niobate (MgO:LiNbO$_3$) crystal (thickness 0.5 mm). In this case, the signal light is visible light, and the idler light is infrared light (near infrared light or mid-infrared light) (see Fig. 11).

Nonlinear optical crystal 104 is one example of "nonlinear optical element" in the present disclosure. The "nonlinear optical element" according to the present disclosure is not limited to the nonlinear optical crystal, and may be, for example, a ring resonator, or may be an optical waveguide formed of silicon (Si) and/or silicon nitride (SiN). For generation of the quantum entangled photon pair, spontaneous four-wave mixing (SFWM) may be used instead of SPDC of the pump light. When the ring resonator, the optical waveguide, or the like is employed as the "nonlinear optical element", SFWM can be suitably used.

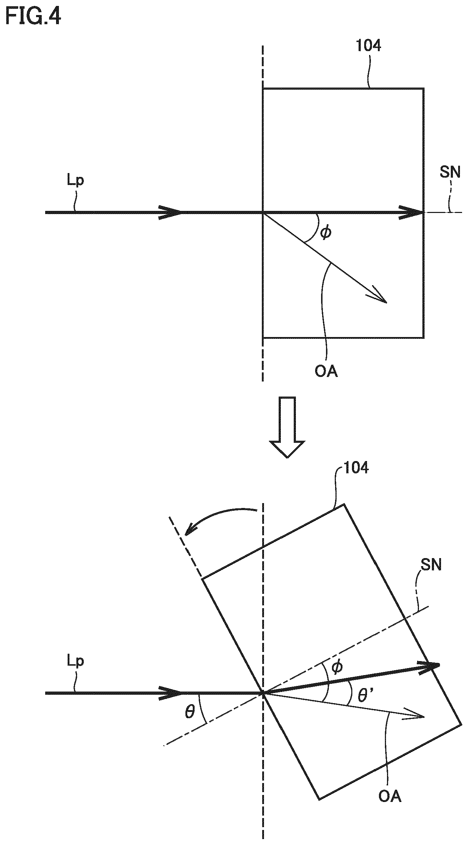

Rotation stage 105 is configured to rotate nonlinear optical crystal 104 with respect to the pump light in response to control commands from controller 90. The rotation angle of nonlinear optical crystal 104 based on the vertical incidence direction of the pump light (angle formed by the optical axis of nonlinear optical crystal 104 with respect to the incidence direction of the pump light) is described as "crystal rotation angle $\theta$". Crystal rotation angle $\theta$ is one example of "control parameter" according to the present disclosure. Rotation stage 105 is configured to change the phase matching condition of SPDC (see formula (1) below) by changing crystal rotation angle $\theta$ little by little within a predetermined range of crystal rotation angle $\theta$. The rotational scanning of nonlinear optical crystal 104 using rotation stage 105 will be described in detail in Fig. 4.

[Math. 1]

$$\frac{n(\lambda_p, \ \theta)}{\lambda_p} - \frac{n(\lambda_s)}{\lambda_s} - \frac{n(\lambda_i)}{\lambda_i} = 0 \quad \cdots (1)$$

Rotation stage 105 is one example of "wavelength scanner" according to the present disclosure. As the "wavelength scanner" according to the present disclosure, other configurations such as those shown in first to third modifications described later can also be employed.

Dichroic mirror 106 is disposed between nonlinear optical crystal 104 and moving mirror 110, and between nonlinear optical crystal 104 and fixed mirror 107. In the present embodiment, dichroic mirror 106 transmits visible light and reflects infrared light. The signal light of the visible range is transmitted through dichroic mirror 106 together with the pump light and heads toward fixed mirror 107. Meanwhile, the idler light of the infrared range is reflected by dichroic mirror 106 and heads toward moving mirror 110. Dichroic mirror 106 may transmit the infrared light and reflect the visible light.

Fixed mirror 107 is, for example, a concave mirror, and reflects the pump light and the signal light each transmitted through dichroic mirror 106. The reflected pump light and the reflected signal light are transmitted through dichroic mirror 106 again and return to nonlinear optical crystal 104. The pump light passes through nonlinear optical crystal 104 but is reflected by dichroic mirror 103. Meanwhile, the signal light passes through nonlinear optical crystal 104 and is also transmitted through dichroic mirror 103.

Lens 108 is disposed between dichroic mirror 106 and sample holder 109. Lens 108 collimates the idler light reflected by dichroic mirror 106.

Sample holder 109 is disposed between nonlinear optical crystal 104 and moving mirror 110. Sample holder 109 holds a sample (indicated as SP in the diagram). Various quantum measurement results described later are obtained using, as a sample, glass (more specifically, 1 mm thick ultraviolet (UV) fused silica) that exhibits high transmittance in the wavelength range from the visible range to the mid-infrared range. As a material for sample holder 109, a material transparent to the idler light (infrared light in this example) is used. The sample is irradiated with the idler light, and the transmitted light heads toward moving mirror 110.

Moving mirror 110 is, for example, a flat mirror and reflects the idler light transmitted through the sample. The reflected idler light is further reflected by dichroic mirror 106 and returns to nonlinear optical crystal 104. The idler light passes through nonlinear optical crystal 104 but is reflected by dichroic mirror 103 and is removed. Therefore, no idler light reaches photodetector 81.

Driver 111 is configured to move moving mirror 110 along the propagation direction of the idler light in response to control commands from controller 90. Driver 111 includes, for example, a motor driver that is mechanically displaced in response to control commands from controller 90 (servo motor, stepping motor, and the like). Driver 111 may include a piezoelectric element that is displaced in response to an applied voltage from controller 90.

Hereinafter, an optical path difference between the signal optical path length and the idler optical path length will be represented as $\Delta L$. Driver 111 is configured to change, by scanning moving mirror 110, optical path difference $\Delta L$ within a predetermined range including the position of $\Delta L = 0$, where the signal optical path length agrees with the idler optical path length. Optical path difference $\Delta L$ is equal to twice the displacement of moving mirror 110.

Lens 112 is disposed between dichroic mirror 103 and photodetector 81. Lens 112 collects the signal light transmitted through dichroic mirror 103 and outputs the collected signal light to photodetector 81.

Long pass filter 113, iris 114, and bandpass filter 115 remove the pump light (and background light) that heads toward photodetector 81 without being reflected by dichroic mirror 103. Bandpass filter 115 is disposed on translation stage 116 for adjusting the position of bandpass filter 115.

In quantum optical system 10 shown in Fig. 1, a quantum interferometer similar to a Michelson interferometer is employed. However, the quantum optical system according to the present disclosure may have a configuration similar to that of a Mach-Zehnder interferometer including a plurality of nonlinear optical elements.

Photodetector 81 is a silicon-based photodetector and has high sensitivity in the visible range (and some of the near infrared range). In the first embodiment, photodetector 81 includes a single-pixel light-receiving element (not shown). Specifically, photodetector 81 includes a photodiode such as a PIN photodiode or an avalanche photodiode (APD), for example. Photodetector 81 may include a phototube, a photomultiplier tube (PMT), or a superconducting single photon detector (SSPD). However, a configuration in which photodetector 81 includes a multi-pixel light-receiving element is not excluded. Photodetector 81 may be optically coupled to an optical fiber (multimode fiber) for guiding the signal light. Photodetector 81 detects the signal light and outputs a detection signal thereof to controller 90. The intensity of the detection signal of the signal light is directly proportional to the number of signal photons detected by photodetector 81.

Controller 90 controls each device (excitation light source 101, rotation stage 105, driver 111, and translation stage 116) inside QAS system 1. Controller 90 executes various types of arithmetic processing to calculate the infrared absorption spectroscopy characteristic of the sample based on the detection signal (quantum interference signal described later) of the signal light from photodetector 81.

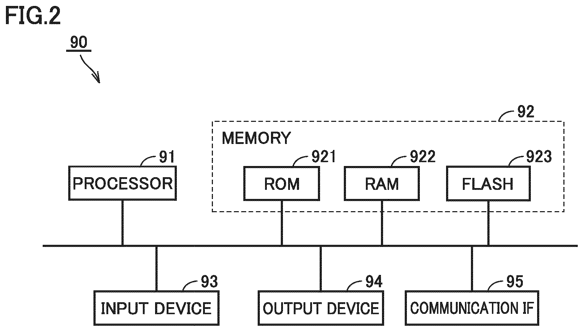

Fig. 2 is a diagram showing a typical configuration example of controller 90. Controller 90 includes a processor 91, a memory 92, an input device 93, an output device 94, and a communication interface (IF) 95. Memory 92 includes a read only memory (ROM) 921, a random access memory (RAM) 922, and a flash memory 923. Components of controller 90 are connected to each other by signal lines such as a bus. Controller 90 may be divided into parts greater than or equal to two based on functions.

Processor 91 is typically a central processing unit (CPU) that executes various types of arithmetic processing. The arithmetic processing executed by processor 91 will be described in detail later. Memory 92 stores a computer program (operating system, application program, and the like) executed by processor 91 and data used by the computer program (map, table, formula, parameter, and the like). Memory 92 temporarily stores arithmetic processing results executed by processor 91. Input device 93 receives input operations from a user (person who executes measurement, such as a researcher, engineer, or operator). Input device 93 includes a keyboard, a mouse, and the like. Output device 94 outputs various types of information to the user. Output device 94 is, for example, a display. Communication IF 95 is connected to devices in QAS system 1 to allow communication with each other. Communication IF 95 may be capable of communicating with an external device (such as a server not shown).

<Principle>

<<Principle of QAS>>

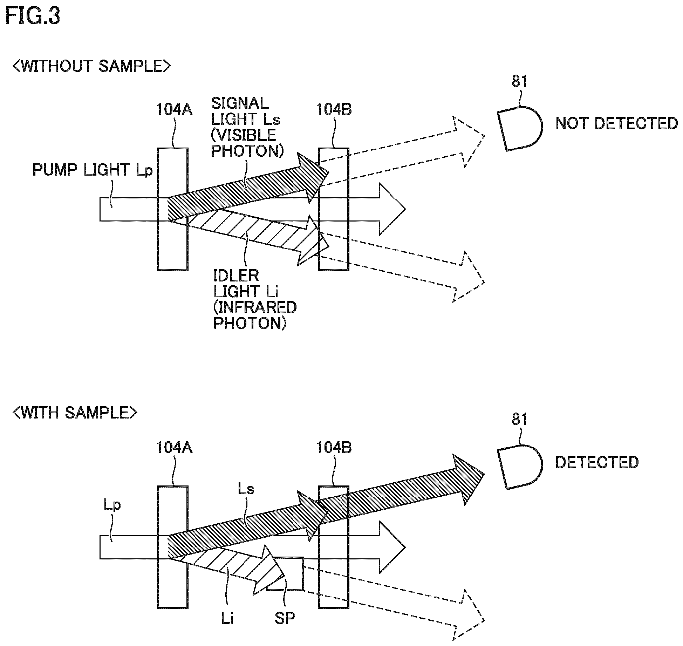

Fig. 3 is a conceptual diagram for describing the principle of QAS. For ease of understanding, a configuration in which two nonlinear optical crystals are disposed in the optical path of the pump light will be described here as an example. The two nonlinear optical crystals are described as a first crystal 104A and a second crystal 104B. The configuration of quantum optical system 10 shown in Fig. 1 is a configuration in which nonlinear optical crystal 104 serves both first crystal 104A and second crystal 104B.

When first crystal 104A is irradiated with the pump light from excitation light source 101, one photon with relatively large energy is split into two photons with smaller energy while satisfying the energy conservation law and the phase matching condition through SPDC in first crystal 104A. In the example shown in Fig. 3, from one visible photon (pump photon), a quantum entangled photon pair of one visible photon (signal photon) and one infrared photon (idler photon) is generated. Irradiation of second crystal 104B with the pump light similarly produces a quantum entangled photon pair of one visible photon and one infrared photon.

Quantum interference occurs between an event of generating a quantum entangled photon pair by first crystal 104A (first physical process) and an event of generating a quantum entangled photon pair by second crystal 104B (second physical process). In more detail, when the probability amplitude representing the first physical process and the probability amplitude representing the second physical process are added together, if the above two probability amplitudes are in the same phase, the first physical process and the second physical process will reinforce each other, and if the above two probability amplitudes are in the opposite phase, the first physical process and the second physical process will cancel each other out (quantum interference effect). Interference between the first physical process and the second physical process canceling each other (destructive interference) will be described below as an example. However, quantum optical system 10 may also be configured to cause constructive interference. Quantum optical system 10 may cause quantum interference between three or more physical processes.

Photodetector 81 is disposed in the direction in which the visible photon (signal light) travels, out of the quantum entangled photon pair. When the sample is not disposed in the idler optical path, the first physical process cannot be distinguished from the second physical process, causing the first physical process and the second physical process to undergo quantum interference, which in this example cancels out. In this case, it is observed that the quantum entangled photon pair is not generated downstream of second crystal 104B. That is, the signal light is not detected by photodetector 81. In contrast, when the sample is disposed in the idler optical path, the idler photon will be absorbed into the sample. Then, it will be possible to distinguish between the first physical process and the second physical process, and the quantum interference between the first physical process and the second physical process will be incomplete. As a result, the signal photon is detected by photodetector 81.

Thus, in QAS, by detecting one visible photon (signal photon) of the quantum entangled photon pair with photodetector 81, it is possible to determine that the other infrared photon (idler photon) is absorbed by the sample.

In the Michelson quantum interferometer as shown in Fig. 1, the number of detected signal photons per unit time is expressed by the following formula (2). Hereinafter, this parameter will be described as "signal count $P_s$". The signal frequency is expressed as $\omega s$ and the idler frequency is expressed as $\omega i$. The optical delay time between the signal optical path and the idler optical path is expressed as $\Delta t$. Two-photon field amplitude is expressed as $F(\omega i)$. The complex transmittance (complex transmission amplitude) of the sample is expressed as $\tau$. The time-independent phase is expressed as $\theta$.

[Math. 2]

$$P_s \propto 2 + \int_0^\infty d\omega_i \, |F(\omega_i)|^2 \{ [\tau^*(\omega_i)]^2 e^{-i\omega_i \Delta t} e^{i\Theta} + c.c. \} \quad \cdots (2)$$

<<Rotation of nonlinear optical crystal>>

Fig. 4 is a diagram for describing the rotation of nonlinear optical crystal 104. As described above, crystal rotation angle $\theta$ is a rotation angle of nonlinear optical crystal 104 with respect to the perpendicular incidence direction of the pump light. An optical axis of nonlinear optical crystal 104 is indicated by OA. A surface normal of nonlinear optical crystal 104 is indicated by SN. A cut angle of nonlinear optical crystal 104 is indicated by $\phi$. Cut angle $\phi$ is known from the specification of nonlinear optical crystal 104. Cut angle $\phi$ of nonlinear optical crystal 104 used in quantum measurement described later is 57.9°. The angle between the propagation direction of the pump light and optical axis OA of nonlinear optical crystal 104 is described as an internal angle $\theta'$.

As described in detail in NPL 2, crystal rotation angle $\theta$ and internal angle $\theta'$ are mutually convertible. When crystal rotation angle $\theta$ (or internal angle $\theta'$) is set from a relational expression that holds between crystal rotation angle $\theta$ and internal angle $\theta'$ (see formulas (4) to (7) in NPL 2) and the energy conservation law of in SPDC and phase matching condition (see formulas (1) to (3) in NPL 2), the relationship can be derived such that idler wavelength $\lambda i$ and signal wavelength $\lambda s$ are also uniquely determined. That is, idler wavelength $\lambda i$ and signal wavelength $\lambda s$ can be calculated from crystal rotation angle $\theta$ (see Fig. 11 described later).

Quantum absorption spectroscopy system 1 configured as described above has the following three control modes.

1. Q-FTIR(quantum Fourier-transform infrared spectroscopy) mode
2. Coarse mode
3. Fine mode

The user can use one of three control modes by operating input device 93. In order to clarify the features of each control mode, the control modes will be described below in the above order. The fine mode corresponds to "first mode" according to the present disclosure, and the coarse mode corresponds to "second mode" according to the present disclosure. Numerical values described below are for illustrative purposes to aid in understanding and should not be used for restrictive interpretation.

<Q-FTIR mode>

<<Overview of Q-FTIR mode>>

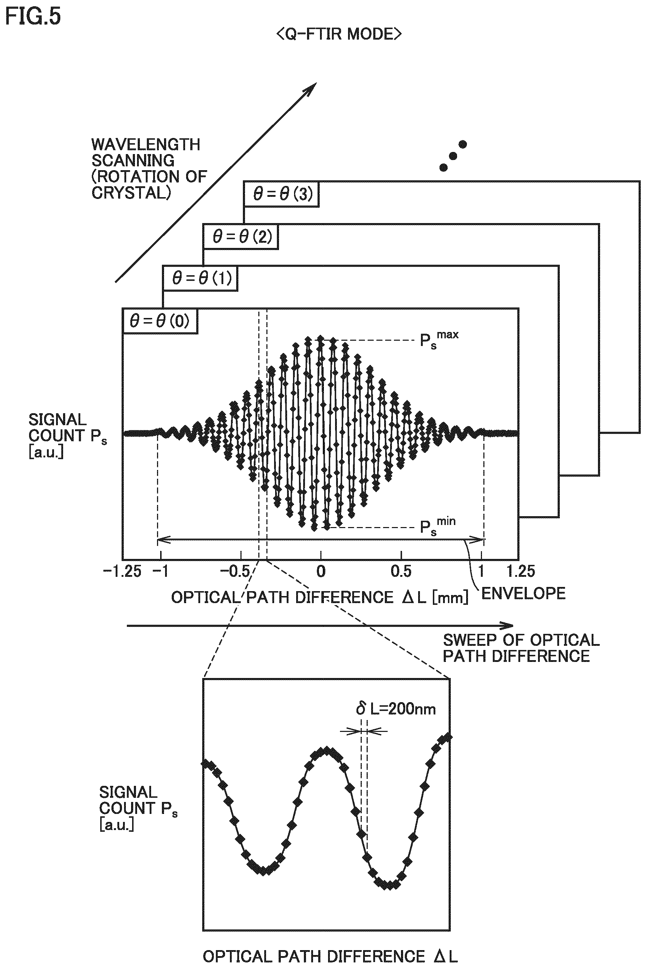

Fig. 5 is a conceptual diagram for describing the overview of the Q-FTIR mode. In this example, a displacement range D of moving mirror 110 is set to 1.25 mm (sweep range W of the optical path difference is 2.5 mm). A displacement step $\delta d$ of the moving mirror is set to 100 nm (sweep step $\delta L$ of the optical path difference per displacement of moving mirror 110 is 200 nm).

With reference to Figs. 4 and 5, first, crystal rotation angle $\theta$ is set to a starting angle $\theta(0)$ (for example, $\theta(0) = -10°$) by controlling rotation stage 105. Then, moving mirror 110 is displaced such that optical path difference $\Delta L$ changes over the entire range from -1.25 mm (left end) to 1.25 mm (right end). The signal count $P_s$ is acquired with the optical path difference set to $\Delta L = -1.25$ mm, for example. Subsequently, moving mirror 110 is displaced by displacement step $\delta d = 100$ nm, thereby increasing optical path difference $\Delta L$ by sweep step $\delta L = 200$ nm and acquiring the signal count $P_s$ again. Thus, the signal count $P_s$ is acquired while sweeping optical path difference $\Delta L$ by sweep step $\delta L$ until reaching $\Delta L = 1.25$ mm. Next, optical path difference $\Delta L$ is swept in a similar way after changing crystal rotation angle $\theta$ from $\theta(0)$ to $\theta(1)$ (for example, $\theta(1) = -9°$). After that, until crystal rotation angle $\theta$ reaches a final angle (for example, 30°), while scanning the wavelength of the quantum entangled photon pair by changing crystal rotation angle $\theta$ (in this example, in 1° increments), a similar sweep of optical path difference $\Delta L$ is repeatedly performed.

Black markers in the diagram indicate execution positions of sampling (displacement of moving mirror 110 and acquisition of the signal count $P_s$). As will be described later, the actual number of sampling is too large to illustrate. The upper diagram in Fig. 5 shows only part of the sampling execution positions.

In the following, a portion of the quantum interference signal where the signal count $P_s$ fluctuates and a quantum interference fringe (fringe structure) appears is referred to as "envelope". In the Q-FTIR mode, optical path difference $\Delta L$ is swept such that the entire envelope of the quantum interference signal is acquired.

<<Processing flow of Q-FTIR mode>>

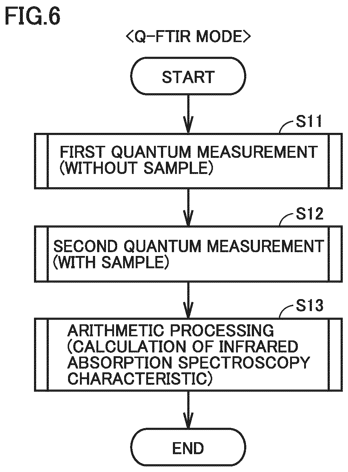

Fig. 6 is a flowchart showing one example of the overall processing procedure of the Q-FTIR mode. The series of processes shown in this flowchart is called from a main routine and executed when, for example, input device 93 receives a user operation (such as pressing a start button). Each step is executed by electrical circuitry including one or more processors 91 disposed inside controller 90. Each step is typically implemented by software processing, but some or all steps may also be implemented by hardware processing. The same applies to other flowcharts. Hereinafter, step is abbreviated as "S".

In S11, controller 90 executes "first quantum measurement" in a state where the sample is not installed in sample holder 109 disposed in the idler optical path. The first quantum measurement can be omitted as appropriate. Results of the first quantum measurement previously executed by the user may be stored in memory 92 of controller 90. The manufacturer of QAS system 1 may execute the first quantum measurement before shipping, and the results may be stored in memory 92.

In S12, controller 90 executes "second quantum measurement" in a state where the sample is installed in sample holder 109. The sample is typically installed by the user. However, it is also possible to automate the process by providing a feeder (not shown) for feeding the sample. The order of the first quantum measurement and the second quantum measurement may be swapped.

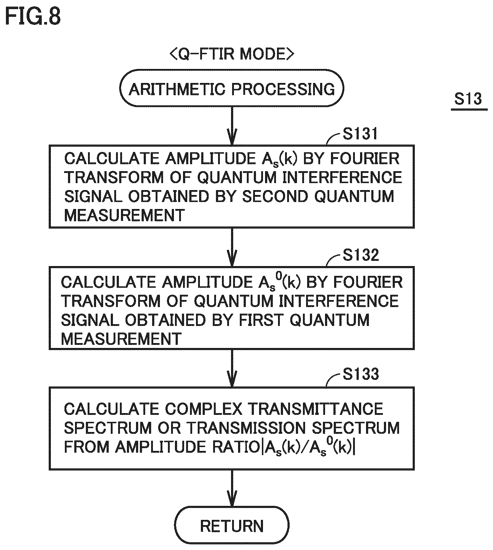

In S13, controller 90 executes arithmetic processing to calculate the infrared absorption spectroscopy characteristic of the sample based on the results of the first and second quantum measurements. This arithmetic processing will be described in Fig. 8.

The first quantum measurement and the second quantum measurement are equivalent except for whether or not the sample is installed. Therefore, the second quantum measurement will be described below as a representative example.

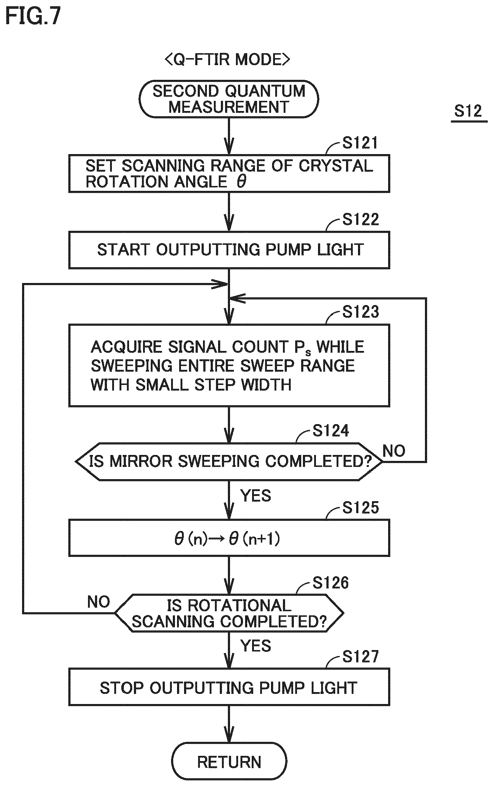

Fig. 7 is a flowchart showing one example of a processing procedure of the second quantum measurement in the Q-FTIR mode. In S121, controller 90 sets the range in which nonlinear optical crystal 104 is rotated (scanning range of crystal rotation angle $\theta$). The scanning range of crystal rotation angle $\theta$ can be set according to the wavelength at which the infrared absorption spectroscopy characteristic of the sample is to be measured (idler wavelength $\lambda i$) based on the correspondence between crystal rotation angle $\theta$ (or internal angle $\theta'$) and idler wavelength $\lambda i$ (see Fig. 11). The scanning range of crystal rotation angle $\theta$ may be set according to the wavelength range of the quantum entangled photon pair to be generated, for example, by the user's manual operation. In the example of Fig. 5, the scanning range of crystal rotation angle $\theta$ is set such that crystal rotation angle $\theta$ changes in increments of 1° from -10° to 30°. However, the change in crystal rotation angle $\theta$ at equal intervals (equal steps) is merely an illustration, and the amount of change in crystal rotation angle $\theta$ may be different each time the angle changes. During initial processing, crystal rotation angle $\theta$ is set to a predefined starting angle θ(0).

In S122, controller 90 controls excitation light source 101 to start outputting the pump light.

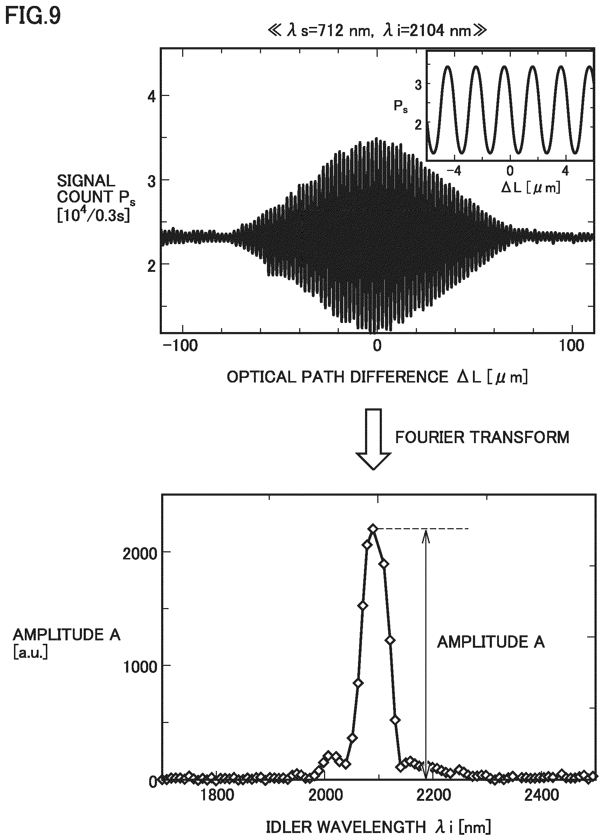

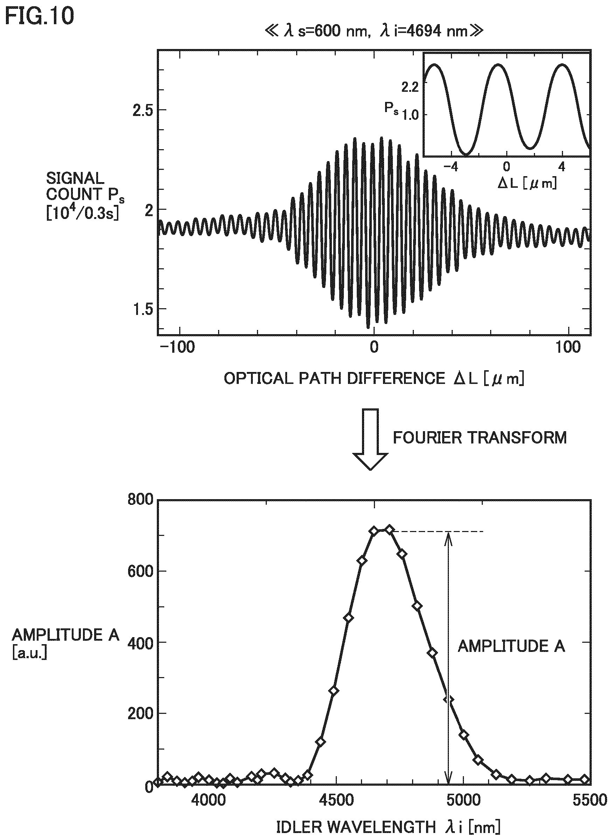

In S123 and S124, controller 90 changes optical path difference ΔL with sweep step δL over entire wide sweep range W by controlling driver 111 such that moving mirror 110 is displaced. Controller 90 executes a sweep with sweep step δL on the order of nanometers, over sweep range W on the order of micrometers or millimeters, for example. To describe the specific processing procedure, controller 90 controls driver 111 provided in moving mirror 110 such that moving mirror 110 is displaced by a displacement step δw from the previous position. This causes optical path difference ΔL to change by sweep step δL (= 2δw). Then, controller 90 acquires the signal count $P_s$ from photodetector 81 (S123). When the sweep over entire sweep range W is not completed (NO in S124), controller 90 returns the process to S123 and again changes optical path difference ΔL by sweep step δL to acquire the signal count $P_s$. When the sweep over entire sweep range W is completed (YES in S124), the quantum interference signal corresponding to set crystal rotation angle θ is acquired (see Figs. 9 and 10). Controller 90 advances the process to S125.

In general, the signal-to-noise ratio can be improved by integrating the light detection results. Therefore, controller 90 may repeat the sweep of optical path difference ΔL (displacement of moving mirror 110) a prescribed number of times. However, controller 90 may also execute the sweep only once.

In S125, controller 90 controls rotation stage 105 such that nonlinear optical crystal 104 rotates by an angle determined in S121, that is, crystal rotation angle θ changes from θ(n) to θ(n+1) (n: 0 or a natural number).

In S126, controller 90 determines whether a rotational scanning completion condition of nonlinear optical crystal 104 is met. When crystal rotation angle θ has not reached the final angle (NO in S126), the controller returns the process to S123. This causes optical path difference ΔL to be swept again with nonlinear optical crystal 104 rotating further. When crystal rotation angle θ reaches the final angle (YES in S126), the controller advances the process to S127 and controls excitation light source 101 to stop outputting the pump light.

Fig. 8 is a flowchart showing one example of a processing procedure of the arithmetic processing in the Q-FTIR mode. The processing shown in this flowchart may be executed automatically following the second quantum measurement, or may be executed in response to a manual operation by the user (such as pressing an analysis start button). The same applies to other arithmetic processing, which will be described later.

In the Q-FTIR mode, Fourier transform is executed on respective quantum interference signals acquired by the first and second quantum measurements. In the above formula (1), when an optical delay time Δt is converted to optical path difference ΔL and an angular frequency ω is converted to a wave number k, the following formula (3) is derived.

[Math. 3]

$$P_s(\Delta L) \propto 2 + \int_0^\infty dk_i \, |F_k(k_i)|^2 \{ [\tau_k'^*(k_i)]^2 \times e^{-ik_i\Delta L} e^{i\theta'} + c.c. \} \quad \cdots (3)$$

In S 131, controller 90 calculates amplitude $A_s(k)$ of the Fourier spectrum based on Fourier transform of the quantum interference signal obtained by the second quantum measurement (see formula (4) below).

[Math. 4]

$$A_s(k) = \frac{1}{2\pi} \int d\Delta L P_s(\Delta L) e^{ik\Delta L} \propto |F_k(k)|^2 [\tau_k'^*(k)]^2 e^{i\phi} \quad \cdots (4)$$

In S132, controller 90 calculates amplitude $A_s^0(k)$ of the Fourier spectrum based on Fourier transform of the quantum interference signal obtained by the first quantum measurement, as in the process of S131.

In S133, controller 90 calculates a complex transmittance spectrum $\tau_k'^*(k)$ of the sample by taking the ratio of the above two types of amplitude as shown in the following formula (5). Controller 90 may calculate a transmission spectrum T(k) of the sample by squaring the absolute value of the complex transmittance spectrum.

[Math. 5]

$$|A_s(k)/A_s^0(k)| = |\tau_k'^*(k)|^2 = T(k) \quad \cdots (5)$$

Thus, in the Q-FTIR mode, based on the amplitude ratio of two types of Fourier spectrum with and without the sample, the infrared absorption spectroscopy characteristic of the sample is calculated. The infrared absorption spectroscopy characteristic of the sample can include a complex transmittance spectrum τ(k) and transmission spectrum T(k) of the sample.

<<Measurement result in Q-FTIR mode>>

Fig. 9 is a diagram showing one example of the quantum interference signal and the Fourier spectrum obtained from the quantum interference signal. Fig. 10 is a diagram showing another example of the quantum interference signal and the Fourier spectrum obtained from the quantum interference signal. In the above diagram, the horizontal axis represents optical path difference $\Delta L$ and the vertical axis represents the signal count $P_s$. The upper right shows an enlarged view of the quantum interference signal near optical path difference $\Delta L = 0$. In the lower diagram, the horizontal axis represents the wavelength (= idler wavelength $\lambda i$) and the vertical axis represents intensity of the Fourier spectrum (amplitude A). In this example, sweep range W of the optical path difference is set to 200 $\mu$m, and sweep step $\delta L$ of the optical path difference is set to 100 nm. Light integration time at each position of moving mirror 110 is 300 ms.

At crystal rotation angle $\theta$ during quantum measurement shown in Fig. 9, nonlinear optical crystal 104 generates the signal photon with a wavelength of 712 nm, and the idler photon with a wavelength of 2104 nm. The peak wavelength of the Fourier spectrum obtained by Fourier transform of the quantum interference signal is (that is, wavelength transmitted through the sample glass) 2.1 $\mu$m. The full width at half maximum (FWHM) of the Fourier spectrum is 51 nm. At crystal rotation angle $\theta$ during quantum measurement shown in Fig. 10, signal wavelength $\lambda s$ = 600 nm, and idler photon wavelength $\lambda i$ = 4696 nm. The peak wavelength of the Fourier spectrum is 4.7 $\mu$m, and the full width at half maximum of the Fourier spectrum is 344 nm. Thus, at wavelengths located at both ends of the mid-infrared range (2.1 $\mu$m and 4.7 $\mu$m), the wavelengths actually measured by QAS system 1 are in good agreement with idler photon generation wavelengths.

Fig. 11 is a diagram summarizing analysis results of the Fourier spectrum illustrated in Figs. 9 and 10. The horizontal axis represents internal angle $\theta'$. The left vertical axis represents idler wavelength $\lambda i$, and the right vertical axis represents signal wavelength $\lambda s$. The black line indicates a theoretical curve (see formulas (1) to (7) in NPL 2). The open circles indicate actual measurement values obtained from the Fourier spectrum.

From Fig. 11, it can be seen that the idler photon can be generated over the entire mid-infrared range from 2 $\mu$m to 5 $\mu$m by using rotation stage 105 to rotate nonlinear optical crystal 104. That is, by rotating nonlinear optical crystal 104, the wavelength range of the idler photon generation is expanded, making it possible to measure the infrared absorption characteristic of the sample over a very wide wavelength range. In addition, since the signal photon has a wavelength in the visible range, silicon-based photodetector 81 with high sensitivity in the visible range can be suitably used. Furthermore, the measured values are on the theoretical curve over the entire mid-infrared range. This indicates successful infrared absorption spectroscopy over a wide wavelength range in the entire mid-infrared range.

<<Quantum measurement time>>

In general, the wavenumber resolution of the Fourier spectrum obtained by FTIR or the like is determined by the reciprocal of sweep range W of the optical path difference ($\Delta k$ = 1/W). Therefore, to increase the wavenumber resolution of the Fourier spectrum (to reduce $\Delta k$), it is necessary to widen sweep range W of the optical path difference.

Sweep range W of the optical path difference, the number of sampling N, and sweep step $\delta L$ of the optical path difference are related by W = N $\times$ $\delta L$. Sweep step $\delta L$ of the optical path difference is determined based on the wavelength range of the measurement target (idler wavelength $\lambda i$) and cannot be arbitrarily set. Therefore, when widening sweep range W of the optical path difference, an increase in the number of sampling N cannot be avoided.

Thus, to measure the infrared absorption spectroscopy characteristic of the sample in the Q-FTIR mode with high precision, it is required to acquire the Fourier spectrum with high wavenumber resolution. To achieve this, it is required in principle to set sweep range W of the optical path difference sufficiently wide. In addition, sweep step $\delta L$ of the optical path difference is also set finely enough. Sweep step $\delta L1$ is approximately one-tenth of idler wavelength $\lambda i$, for example. Consequently, the number of sampling N inevitably increases and the quantum measurement time increases.

With reference to Fig. 5 again and providing descriptions using specific numerical values, when the required wavenumber resolution is 4 cm$^{-1}$, sweep range W of the optical path difference is set to W = 2.5 mm. When idler wavelength $\lambda i$ is approximately 2 $\mu$m, sweep step $\delta L$ of the optical path difference is set to $\delta L$ = 200 nm. In this case, the number of sampling is N = W/$\delta L$ = 2.5 mm/200 nm = 1.25 $\times$ 10$^4$. That is, at crystal rotation angle $\theta$ = starting angle $\theta(0)$, sampling (displacement of moving mirror 110 and acquisition of the signal count $P_s$) greater than 10,000 times is executed. Sampling greater than 10,000 times is executed at subsequent crystal rotation angle $\theta$ = $\theta(1)$ similarly. When crystal rotation angle $\theta$ is changed to some extent (for example, several tens of degrees), this will lead to repeated sampling of several hundred thousand times, which can require a long time (for example, several hours). Therefore, in QAS system 1 according to the present embodiment, a coarse mode is provided to shorten the quantum measurement time and improve practicality.

<Coarse mode>

<<Overview of coarse mode>>

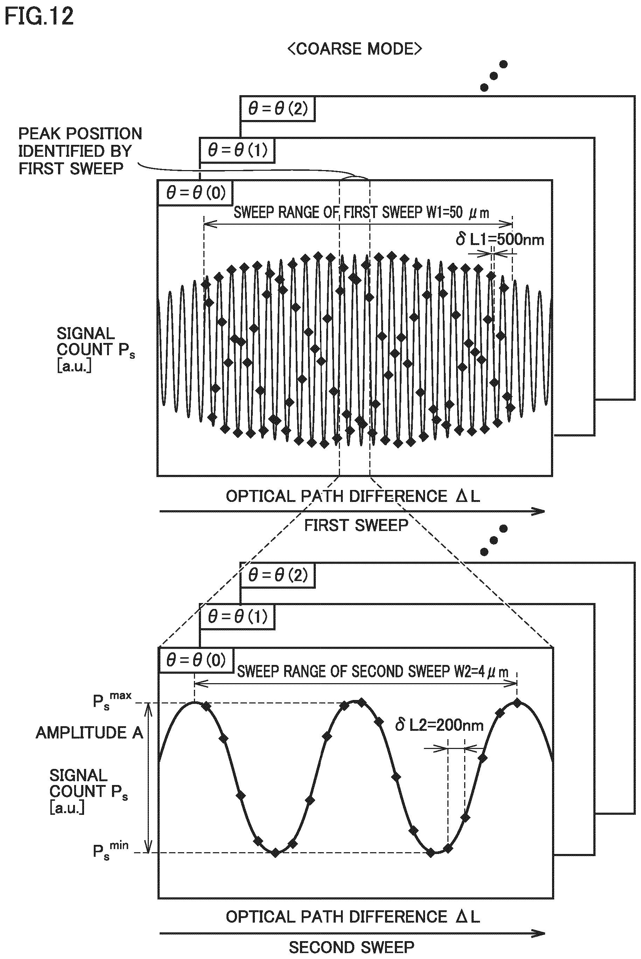

Fig. 12 is a conceptual diagram for describing an overview of the coarse mode. In this example, in the coarse mode, a two-stage sweep of the optical path difference by "first sweep" and "second sweep" is executed.

First, the first sweep is executed with crystal rotation angle $\theta$ set to starting angle $\theta(0)$. An object of the first sweep is to identify the peak position of the quantum interference signal. In more detail, the peak position of the quantum interference signal when no sample is installed in sample holder 109 is known from the specification of QAS system 1. When the sample is installed in sample holder 109, the peak position of the quantum interference signal shifts according to basic data (refractive index and thickness) of the sample. An object of the first sweep is to determine this shift amount. In the first sweep, large sweep step $\delta L1$ is set for wide sweep range W1.

Sweep range W1 of the optical path difference in the first sweep may be set according to the refractive index and thickness of the sample. In more detail, the thickness of the sample can usually be measured easily. When the refractive index of the sample is known, sweep range W1 can be set to the value of the optical path length (= refractive index x thickness) of the sample. Even if the refractive index of the sample is unknown, the refractive index of most materials is approximately 1 to 3. Therefore, it is required at least to set sweep range W1 to about three times the thickness of the sample at maximum.

It is not required to set sweep step $\delta L1$ of the optical path difference too finely in the first sweep. Sweep step $\delta L1$ can be set to a value close to idler wavelength $\lambda i$. For example, it is required at least to set sweep step $\delta L1$ to about one-fourth of idler wavelength $\lambda i$ ($\delta L1 = \lambda i/4$).

As a specific example, when the sample is a glass with a thickness of 1 mm and a refractive index of 1.5, sweep range W1 can be set to a maximum of, for example, 1.5 mm. When idler wavelength $\lambda i$ is approximately 2 $\mu$m, sweep step $\delta L1$ is set to 500 nm, for example. In this case, the number of sampling N1 in the first sweep needs to be only N1 = W1/$\delta L1$ = 1.5 mm/500 nm = 3000 times. Even with such a small number of sampling, it is possible to identify the peak position of the quantum interference signal.

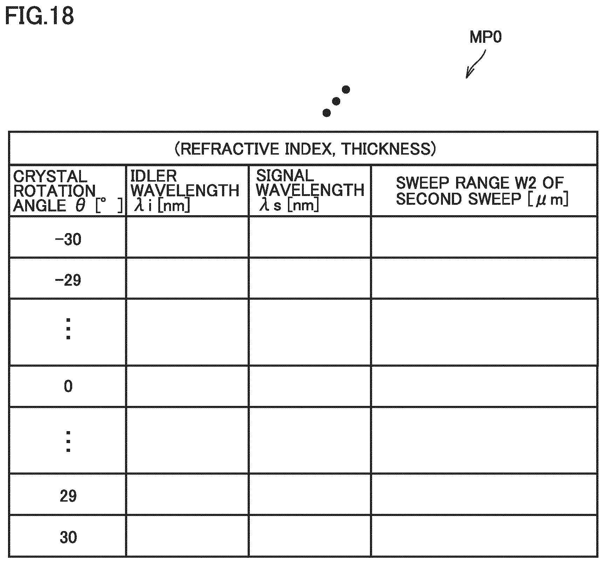

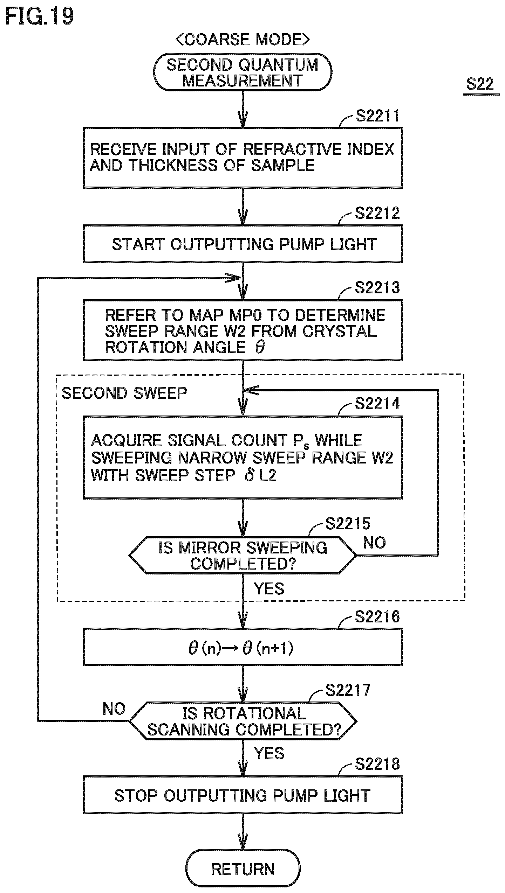

In fact, as will be described later in Figs 18 and 19, for a sample with known thickness and refractive index, an approximate shift amount of the peak position is known in advance. Therefore, sweep range W1 can be narrowed down to a narrower range as shown in Fig. 12. For example, when sweep range W1 = 50 $\mu$m and sweep step $\delta L1$ = 500 nm, the number of sampling N1 in the first sweep needs to be only N1 = W1/$\delta L1$ = 50 $\mu$m/500 nm = 100 times.

Next, the second sweep is executed. An object of the second sweep is to take precision measurements near the peak position identified in the first sweep. In the second sweep, small sweep step $\delta L2$ is set for narrow sweep range W2.

Sweep range W2 of the second sweep is wide enough to include the peak of the quantum interference signal, but is much narrower than sweep range W1 of the first sweep. More specifically, sweep range W2 can be set to a distance of one to two wavelengths of the interference fringe that appears near the peak position of the quantum interference signal.

Sweep step $\delta L2$ of the second sweep is, for example, about 1/10 of idler wavelength $\lambda i$ in a similar manner to sweep step $\delta L$ in the Q-FTIR mode ($\delta L1 = \lambda i/10$).

As a specific example, sweep range W2 is set to 4 $\mu$m. When idler wavelength $\lambda i$ is approximately 2 $\mu$m, sweep step $\delta L2$ is set to 200 nm. In this case, the number of sampling N2 in the second sweep only needs to be N2 = W2/$\delta L2$ = 4 $\mu$m/200 nm = 20 times. Therefore, when nonlinear optical crystal 104 undergoes rotational scanning, the total number of sampling of the second sweep can also be kept small (for example, about 1000 times).

As will be described in more detail below, parameters required to calculate the infrared absorption spectroscopy characteristic (transmission spectrum) of the sample are amplitude A of the quantum interference signal, and more specifically, a maximum value $P_s^{max}$ and a minimum value $P_s^{min}$ of the signal count. Maximum value $P_s^{max}$ and minimum value $P_s^{min}$ of the signal count are determined from near the peak position of the quantum interference signal. Therefore, the first sweep is introduced to identify the peak position of the quantum interference signal. Then, in the second sweep that follows, the sweep range of the optical path difference is more limited than when sweeping the optical path difference to acquire the entire envelope of the quantum interference signal, such as in the Q-FTIR mode, and the vicinity of the peak position identified by the first sweep is precisely swept. Meanwhile, sweeping is omitted at positions away from the peak position. Therefore, in the coarse mode, the quantum measurement time can be significantly reduced (for example, to a few minutes).

<<Processing flow of coarse mode>>

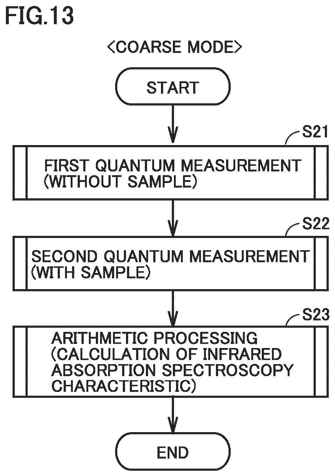

Fig. 13 is a flowchart showing one example of the overall processing procedure of the coarse mode. The overall flow of processing in the coarse mode is equivalent to the overall flow of processing in the Q-FTIR mode (see Fig. 6), and thus the description thereof will not be repeated.

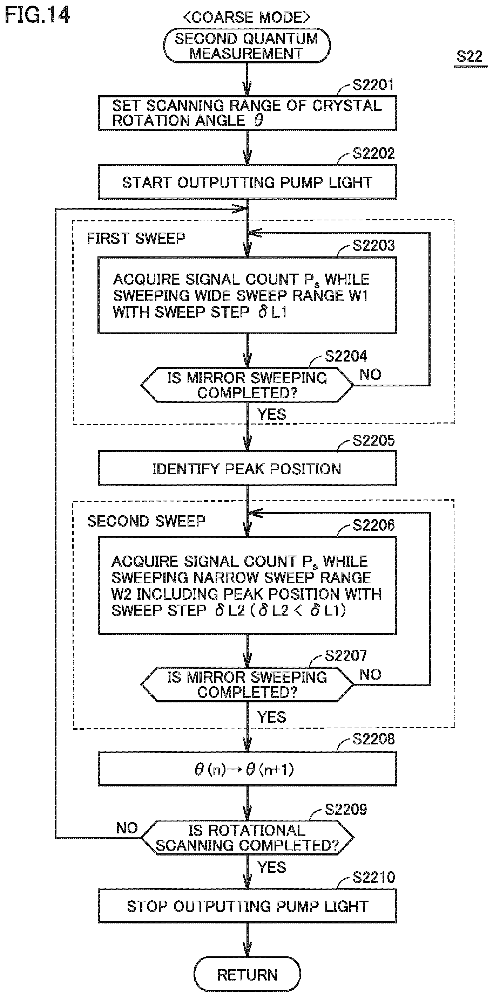

Fig. 14 is a flowchart showing a first example of a processing procedure of the second quantum measurement in the coarse mode. In a similar manner to the Q-FTIR mode, the scanning range of crystal rotation angle $\theta$ is set by user operation or the like (S2201). Controller 90 controls excitation light source 101 to start outputting the pump light (S2202).

In S2203 and S2204, controller 90 executes the first sweep with relatively large sweep step $\delta L1$ on sweep range W1 that is set relatively wider than the second sweep as described in Fig. 12. More specifically, controller 90 controls driver 111 provided in moving mirror 110 such that optical path difference $\Delta L$ changes by sweep step $\delta L1$ from the previous value. Then, controller 90 acquires the signal count $P_s$ from photodetector 81 (S2203). Until the sweep on all sweep range W1 is completed (NO in S2204), controller 90 returns the process to S2203 and executes the sweep of optical path difference $\Delta L$ and acquisition of the signal count $P_s$ again. When the sweep on all sweep range W1 is completed (YES in S2204), controller 90 advances the process to S2205.

In S2205, controller 90 identifies the peak position of the coarse quantum interference signal obtained by the first sweep (see the upper diagram of Fig. 12). As can be seen from the waveform shape of the quantum interference signal shown in Figs. 9 and 10, the signal count $P_s$ is substantially constant at a position distant from the peak position and fluctuates only within the envelope range. Therefore, controller 90 can identify the peak position from the range of optical path difference $\Delta L$ in which the fluctuation in the signal count $P_s$ occurs. For example, controller 90 takes the value of the signal count $P_s$ in a range where the signal count $P_s$ is substantially constant as a reference value, and extracts a range where the difference from the reference value is larger than a predetermined amount as the fluctuation range of the signal count $P_s$. Then, controller 90 can identify the middle position of the fluctuation range of the signal count $P_s$ as the peak position of the quantum interference signal.

Alternatively, a more rigorous approach may be employed. By rewriting the above formula (2) by using the relational expression $\Delta L = c\Delta t$, the following formulas (6) and (7) are obtained. Formulas (6) and (7) show an envelope function of the quantum interference signal. The envelope of the quantum interference signal may be obtained by curve fitting using such an envelope function, and the peak position may be identified from the envelope. Two-photon field amplitude is represented as F'($\Omega$). Phase shift is represented as φi'($\Omega$). $\Omega$ refers to detuning, and satisfies the relationships ωs = ωs0 - $\Omega$ (ωs0: center frequency) and ωi = ωi0 + $\Omega$ (ωi0: center frequency).

[Math. 6]

$$P_s(\Delta L) \propto 2 + 2T|\mu(\Delta L)| \, cos \left[ \frac{\omega_{i0}}{c} \Delta L - \Theta \right] \quad \cdots (6)$$

$$\mu(\Delta L) = \int d\,\Omega |F'(\Omega)|^2 \, e^{i2\phi_i'(\Omega)} e^{-i\frac{\Omega}{c}\Delta L} \quad \cdots (7)$$

In S2206 and S2207, controller 90 executes the second sweep with relatively small sweep step $\delta L2$ on narrow sweep range W2 including the peak position of the quantum interference signal. More specifically, controller 90 controls driver 111 of moving mirror 110 such that optical path difference $\Delta L$ changes by sweep step $\delta L2$ from the previous value. Then, controller 90 acquires the signal count $P_s$ from photodetector 81 (S2206). Until the sweep on all sweep range W2 is completed (NO in S2207), controller 90 returns the process to S2206 and executes the sweep of optical path difference $\Delta L$ and acquisition of the signal count $P_s$ again. When the sweep on all sweep range W2 is completed (YES in S2207), controller 90 advances the process to S2208.

In S2208, controller 90 controls rotation stage 105 such that nonlinear optical crystal 104 rotates to the next angle.

In S2209, controller 90 determines whether a rotational scanning completion condition of nonlinear optical crystal 104 is met. When crystal rotation angle θ has not reached the final angle (NO in S2209), the controller returns the process to S2203. This causes the first sweep and the following second sweep to be executed, with nonlinear optical crystal 104 being further rotated. When crystal rotation angle θ reaches the final angle (YES in S2209), the controller advances the process to S2210 and controls excitation light source 101 to stop outputting the pump light.

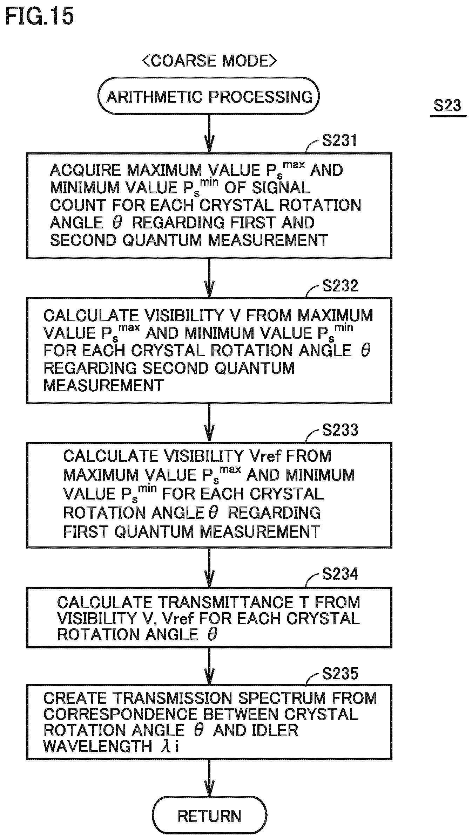

Fig. 15 is a flowchart showing one example of a processing procedure of the arithmetic processing in the coarse mode. In S231, controller 90 acquires maximum value $P_s^{max}$ and minimum value $P_s^{min}$ of the signal count from the quantum interference signal obtained by the second sweep in the first and second quantum measurements for each crystal rotation angle θ.

In S232, controller 90 calculates, for each crystal rotation angle θ, visibility V of quantum interference from maximum value $P_s^{max}$ and minimum value $P_s^{min}$ of the signal count in the second quantum measurement, according to the following formula (8).

[Math. 7]

$$V = \frac{P_s^{max} - P_s^{min}}{P_s^{max} + P_s^{min}} \quad \cdots (8)$$

In S233, controller 90 calculates visibility Vref from maximum value $P_s^{max}$ and minimum value $P_s^{min}$ of the signal count in the first quantum measurement, with the sample not installed, according to a formula similar to the above formula (8). If the first quantum measurement is executed in advance and Vref is already known, the process can be skipped.

In S234, controller 90 calculates, for each crystal rotation angle $\theta$, transmittance T from visibility V based on the relational expression V/Vref = T. This gives transmittance T at each crystal rotation angle $\theta$ (dependence of transmittance T on crystal rotation angle $\theta$).

In S235, controller 90 creates a transmission spectrum $T(\lambda i)$ by converting crystal rotation angle $\theta$ to idler wavelength $\lambda i$ by using the correspondence between crystal rotation angle $\theta$ and idler wavelength $\lambda i$ (see Fig. 11). Controller 90 may store created transmission spectrum $T(\lambda i)$ in memory 92 or output to output device 94 (for example, display on a display).

<<Comparison of two modes>>

As described above, in the Q-FTIR mode, the quantum interference signal is Fourier transformed, and based on the amplitude ratio of the Fourier spectrum, the infrared absorption spectroscopy characteristic of the sample is calculated (see above formulas (3) to (5)). In this case, to improve wavenumber resolution of the Fourier spectrum, it is required to set sweep range W of the optical path difference long enough. As a result, the quantum measurement time can become longer.

In contrast, in the coarse mode, according to the above formula (8), visibility V of quantum interference is calculated directly from the interference fringe that appears in the quantum interference signal (more specifically, maximum value $P_s^{max}$ and minimum value $P_s^{min}$ of the signal count). That is, the Fourier spectrum of the quantum interference signal is not used. Therefore, there is no decrease in precision due to a narrow sweep range of the optical path difference. Therefore, it is possible to set sweep range W2 of the second sweep sufficiently narrow, thereby allowing the quantum measurement time to be shortened. Furthermore, since a precise sweep by the second sweep is executed near the peak position, the interference fringe that appears in the quantum interference signal can be measured with high precision. Therefore, by using the course scan, it is possible to significantly shorten the quantum measurement time while suppressing the decrease in the measurement precision of the infrared absorption spectroscopy characteristic of the sample.

<<Peak shift>>

Descriptions have been given that the first sweep identifies the peak position of the quantum interference signal, and sweep range W2 of the second sweep is determined based on the peak position. However, the first sweep is not essential for determination of sweep range W2 of the second sweep. The peak position of the quantum interference signal shifts with the rotational scanning of nonlinear optical crystal 104 (peak shift). The peak position of the quantum interference signal can also change depending on the sample's basic data (specifically, refractive index, thickness, and the like). Based on these pieces of information, it is possible to estimate the peak position of the quantum interference signal.

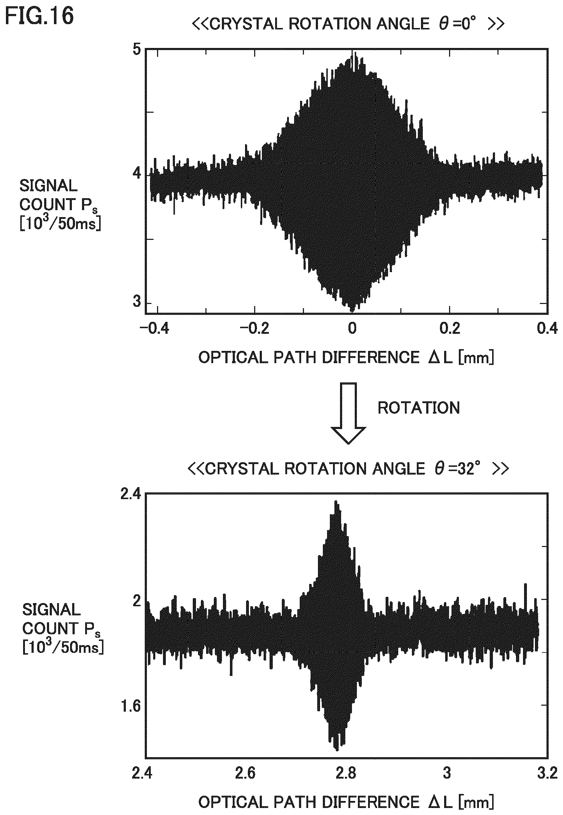

Fig. 16 is a diagram showing peak shift of the quantum interference signal accompanying rotational scanning of nonlinear optical crystal 104. The horizontal axis represents optical path difference $\Delta L$. The vertical axis represents the signal count $P_s$. In this example, it can be seen that when nonlinear optical crystal 104 is rotated from $\theta=0°$ to $32°$, the peak position of the quantum interference signal shifts by approximately 2.8 mm.

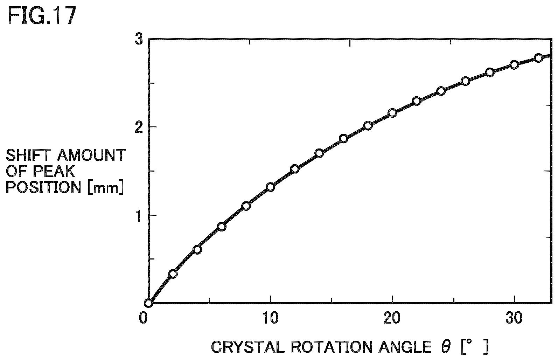

Fig. 17 is a diagram showing one example of a relationship between crystal rotation angle $\theta$ and the peak position of the quantum interference signal. The horizontal axis represents crystal rotation angle $\theta$. The vertical axis represents the shift amount of the peak position of the quantum interference signal (amount of change when the peak position at crystal rotation angle $\theta = 0°$ is used as a reference). As shown in Fig. 17, the shift amount of the peak position increases monotonically as crystal rotation angle $\theta$ increases. By obtaining such correspondence in advance, sweep range W2 of the second sweep can be determined in advance. Sweep range W2 of the second sweep can be summarized, for example, in the form of a map (this can be a table or a function).

Fig. 18 is a conceptual diagram of a map about sweep range W2 of the second sweep according to the first embodiment. In this example, a map MP0 includes, for each basic data(combination of refractive index and thickness in this example) of the sample, the correspondence between crystal rotation angle $\theta$ and sweep range W2 of the second sweep. Map MP0 may further include the correspondence between crystal rotation angle $\theta$, and idler wavelength $\lambda i$ and signal wavelength $\lambda s$ (relationship shown in Fig. 11). By preparing such a map in advance, the first sweep can be omitted. Map MP0 may be prepared by the manufacturer of QAS system 1 before shipment and stored in memory 92 of controller 90. Alternatively, the user may prepare map MP0 and store the map in memory 92. Map MP0 corresponds to both "first correspondence" and "second correspondence" according to the present disclosure. "First correspondence" and "second correspondence" may be defined separately.

Fig. 19 is a flowchart showing a second example of the processing procedure of the second quantum measurement in the coarse mode. In S2211, controller 90 receives input of basic data (refractive index and thickness) of the sample. These basic data may be input by the user's operation on input device 93 or may be acquired from outside via communication IF 95. If no sample is installed, data of the medium (usually air) can be set.

In S2212, controller 90 controls excitation light source 101 to start outputting the pump light.

In S2213, with reference to map MP0 shown in Fig. 18, controller 90 determines sweep range W2 of the second sweep corresponding to the refractive index and thickness of the sample input in S2211, and current crystal rotation angle $\theta$.

In S2214 and S2215, controller 90 executes the second sweep with small sweep step $\delta L2$ on narrow sweep range W2 determined in S2213. These processes and the subsequent processes from S2216 to S2218 are equivalent to the processes from S2206 to S2210 in the first example (see Fig. 14). Therefore, the description will not be repeated.

<<Measurement results in coarse mode>>

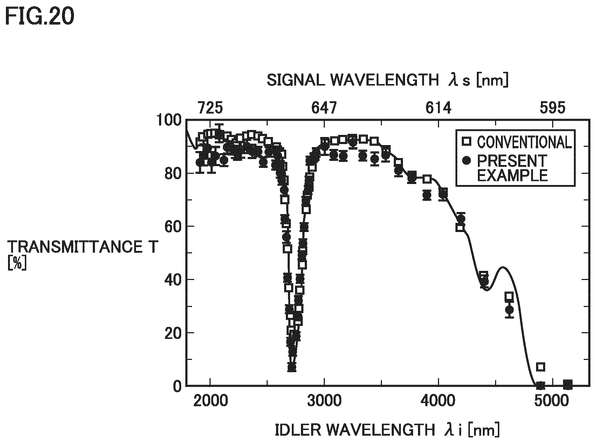

Fig. 20 is a diagram showing one example of the transmission spectrum obtained in the coarse mode. The lower horizontal axis represents idler wavelength $\lambda i$ over the entire mid-infrared range. The upper horizontal axis represents signal wavelength $\lambda s$ corresponding to the lower horizontal axis. The vertical axis represents transmittance T. Measurement results by QAS system 1 are shown with black circles. For comparison, measurements results using a conventional Fourier transform infrared spectrometer (FTIR device) are also shown (see open squares and solid line).

From Fig. 20, it can be seen that the transmission spectrum obtained by QAS system 1 according to the present embodiment is in good agreement with the transmission spectrum obtained by the conventional FTIR device. The dip in transmittance T near idler wavelengths 2.7 $\mu$m and near 4.3 $\mu$m is thought to be due to absorption by OH stretching vibration of impurities in the sample (glass).

<Fine mode>

<<Overview of fine mode>>

In the coarse mode, the quantum measurement time can be shortened significantly. Meanwhile, there are cases where it is desired to measure infrared absorption spectroscopy characteristic of the sample with higher precision while shortening the quantum measurement time to a certain extent. In such a case, the fine mode can be used in which the rotational scanning range of nonlinear optical crystal 104 is narrower than in the Q-FTIR mode, and the Fourier spectrum of the quantum interference signal is acquired. For example, when it is desired to analyze results obtained in the coarse mode in more detail, the fine mode can be selected. As one example, the fine mode can be used to analyze the dip in transmittance T near idler wavelength 2.7 $\mu$m and near 4.3 $\mu$m shown in Fig. 20.

<<Processing flow of fine mode>>

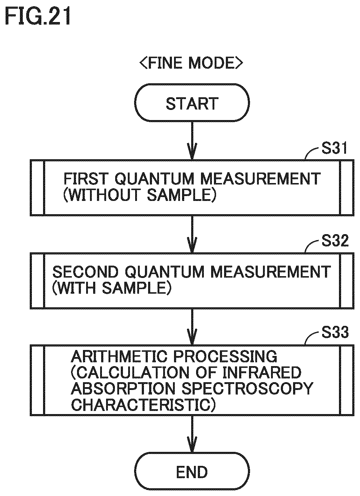

Fig. 21 is a flowchart showing one example of the overall processing procedure of the fine mode. The overall flow of processing in the fine mode is equivalent to the overall flow of processing in the Q-FTIR mode (see Fig. 6), and thus the description thereof will not be repeated.

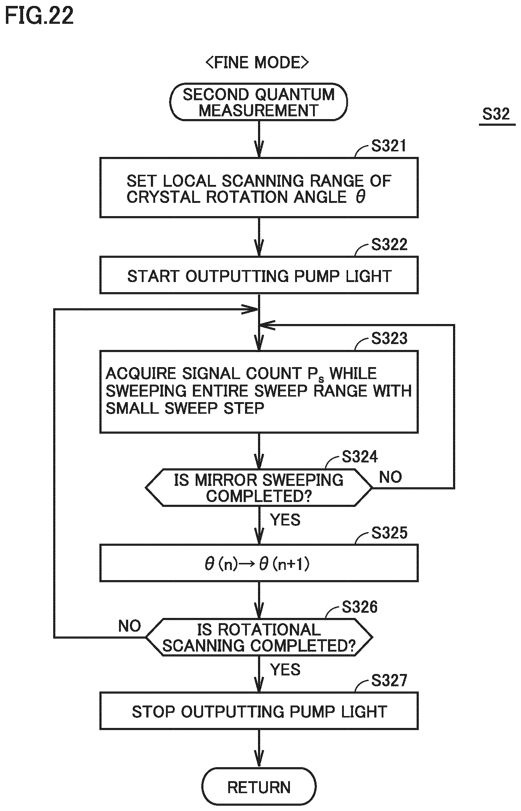

Fig. 22 is a flowchart showing one example of the processing procedure of the second quantum measurement in the fine mode. In S321, controller 90 sets the rotational scanning range of nonlinear optical crystal 104 based on the results obtained in the coarse mode. For example, controller 90 may set the rotational scanning range in which the idler wavelength corresponding to the dip in transmittance T shown in Fig. 20 can be generated.

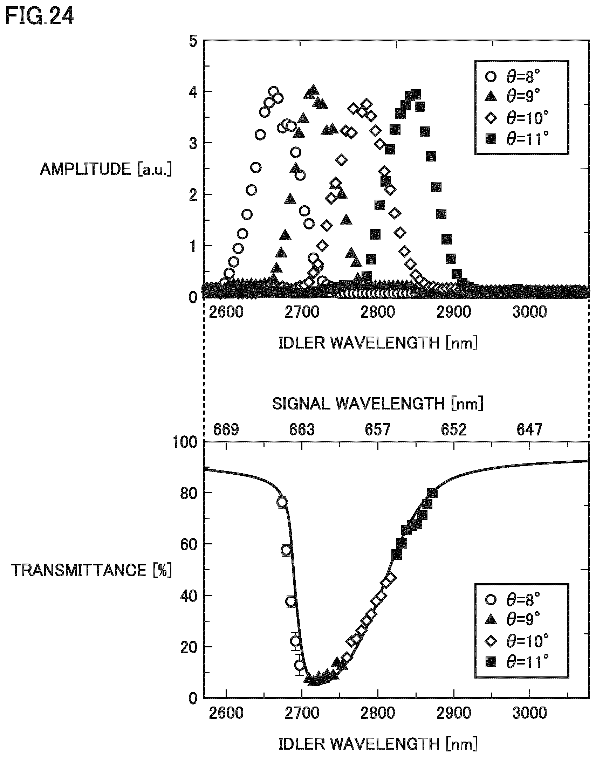

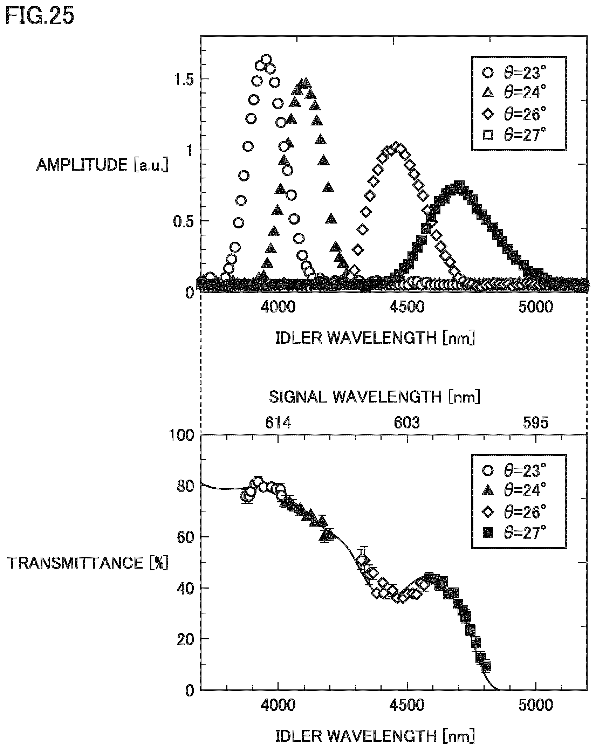

The rotational scanning range in the fine mode is preferably narrower than the rotational scanning range in the Q-FTIR mode and more pinpoint (local). While the range of crystal rotation angle $\theta$ is set to 40° from -30° to 10° in the example of the Q-FTIR mode described above, the range of crystal rotation angle $\theta$ in the fine mode is 4° (see Figs. 24 and 25).

Controller 90 may output a candidate for the rotational scanning range of nonlinear optical crystal 104 from output device 94 (such as a display). When the user agrees with the candidate, controller 90 sets the candidate as the rotational scanning range of nonlinear optical crystal 104. On the other hand, when the user does not agree with the candidate, controller 90 accepts the user's operation to change the rotational scanning range.

The subsequent processing from S322 to S327 is equivalent to the processing from S122 to S127 in the Q-FTIR mode (see Fig. 7), and thus the description thereof will not be repeated.

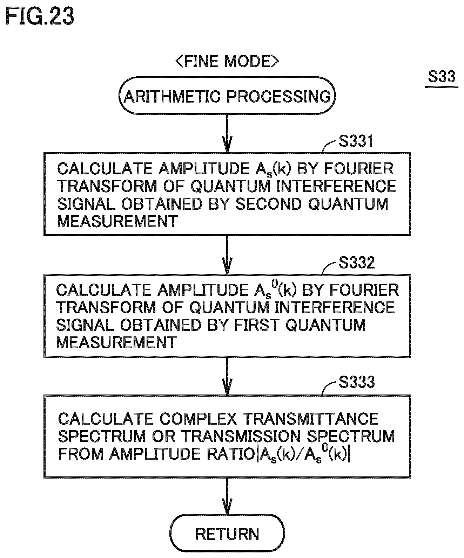

Fig. 23 is a flowchart showing one example of a processing procedure of the arithmetic processing in the fine mode. The arithmetic processing in the fine mode is equivalent to the arithmetic processing in the Q-FTIR mode (see Fig. 8), and thus the description thereof will not be repeated.

<<Measurement results in fine mode>>

Fig. 24 is a diagram showing one example of the measurement results in the fine mode near idler wavelength 2.7 $\mu$m. Fig. 25 is a diagram showing one example of the measurement results in the fine mode near idler wavelength 4.3 $\mu$m. The upper diagram in Fig. 24 shows four Fourier spectra at crystal rotation angle $\theta = 8°, 9°, 10°$, and $11°$. The upper diagram in Fig. 25 shows four Fourier spectra at crystal rotation angle $\theta = 23°, 24°, 26°$, and $27°$. The Fourier spectra are acquired when the sample is not installed. The lower diagrams in Figs. 24 and 25 show transmission spectra calculated from the Fourier spectra (composite of four transmission spectra calculated from four Fourier spectra). The transmission spectra are acquired when the sample (glass) is installed. Sweep range W of the optical path difference is set to 2.4 mm, and sweep step $\delta$L of the optical path difference is set to 200 nm. The light integration time in each step is 50 ms.

From Figs. 24 and 25, it can be seen that the transmission spectrum obtained in the fine mode is in good agreement with the transmission spectrum obtained by the conventional FTIR device, at both near the idler wavelength of 4.3 $\mu$m and near the wavelength of 4.3 $\mu$m. Since the wavenumber resolution in the fine mode is sufficiently high (specifically, 8.33 cm$^{-1}$ in this example), the transmission spectrum can be measured with high precision, in a similar manner to the Q-FTIR mode. Meanwhile, in the fine mode, since the rotational scanning range of nonlinear optical crystal 104 is narrower than in the Q-FTIR mode (1/10th in this example), the quantum measurement time can be shortened.

<Brief summary>

As described above, in the first embodiment, it is possible to generate the idler photon over the entire mid-infrared range by rotational scanning of nonlinear optical crystal 104. In the Q-FTIR mode, sampling is executed many times over the entire wide sweep range. This allows the infrared absorption spectroscopy characteristic of the sample to be measured with high precision.

In the coarse mode, after identifying the peak position of the quantum interference signal by sweeping on wide sweep range W1 with large sweep step $\delta$L1 (first sweep), or by using a correspondence prepared in advance (map MP0), narrow sweep range W2 including the peak position is swept with small sweep step $\delta$L2 (second sweep). This allows the quantum measurement time to be shortened significantly. Therefore, the first embodiment allows the absorption spectroscopy characteristic of the sample to be measured over a wide wavelength range at high speed.

In the fine mode, sampling is executed many times over the entire wide sweep range, in a similar manner to the Q-FTIR mode. However, in the fine mode, the rotational scanning range of nonlinear optical crystal 104 is pinpointed based on results in the coarse mode. This allows the infrared absorption spectroscopy characteristic of the sample to be measured with high precision while preventing the quantum measurement time from becoming excessively long.

It has been described that QAS system 1 according to the first embodiment has three modes: Q-FTIR mode, coarse mode, and fine mode. However, the Q-FTIR mode and the fine mode are not essential, and QAS system 1 may have only the coarse mode. Alternatively, QAS system 1 may have only one mode of the Q-FTIR mode and the fine mode, in addition to the coarse mode.

<Other examples>

<<ATR unit>>

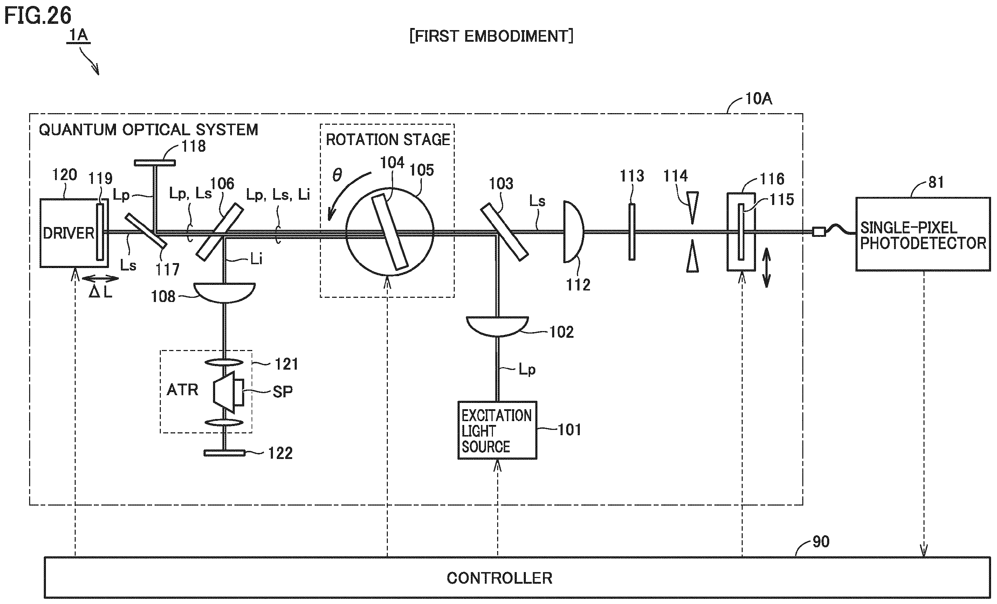

Fig. 26 is a diagram showing another example of an overall configuration of the QAS system according to the first embodiment of the present disclosure. A QAS system 1A differs from QAS system 1 according to the first embodiment (see Fig. 1) by including a quantum optical system 10A instead of quantum optical system 10. Quantum optical system 10A differs from quantum optical system 10 by including a dichroic mirror 117 and a fixed mirror 118, by including a moving mirror 119 and a driver 120 in the signal optical path instead of fixed mirror 107, by including an ATR (attenuated total reflection) unit 121 instead of sample holder 109, and by including a fixed mirror 122 in the idler optical path instead of moving mirror 110 and driver 111.

Of the pump light and signal light transmitted through dichroic mirror 106, dichroic mirror 117 reflects the pump light while transmitting the signal light. The pump light is reflected by fixed mirror 118 and returns to nonlinear optical crystal 104. The signal light is reflected by moving mirror 119 where driver 120 is provided and returns to nonlinear optical crystal 104.

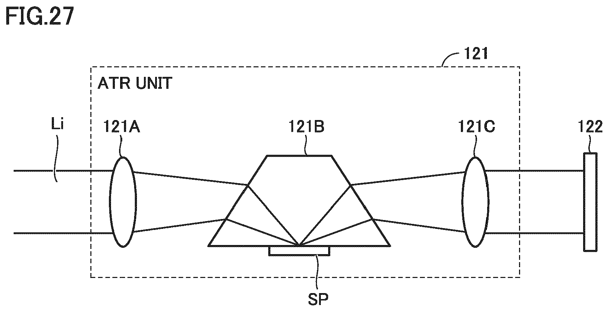

Fig. 27 is a diagram showing a configuration example of ATR unit 121. ATR unit 121 includes a lens 121A, a prism 121B, and a lens 121C. Lens 121A, prism 121B, and lens 121C are disposed in this order along the propagation direction of the idler photon. ATR unit 121 may include a mirror for adjusting the optical axis instead of or in addition to lenses 121A and 121C.

Prism 121B has a high refractive index and is disposed to be in contact with a sample surface. The idler photon that enters the inside of prism 121B from lens 121A is totally reflected at the interface between prism 121B and the sample.

At this time, since the idler photon that seeps out to the sample side (evanescent wave) is absorbed by the sample surface, by detecting the total reflected light, the infrared absorption spectroscopy characteristic of the sample surface can be measured. ATR unit 121 is also applicable to second and third embodiments described later.

(a) When sweeping optical path difference ΔL by displacement of moving mirror 110 disposed in the idler optical path (see Fig. 1), the optical axis of the idler light may change periodically as moving mirror 110 is displaced. It is not easy to construct quantum optical system 10 such that the optical axis of the idler light is always maintained at an appropriate position even if moving mirror 110 is displaced. (b) ATR unit 121, which includes prism 121B, can be larger. Given the constraints of device size, it may be difficult to ensure a space that allows moving mirror 110 to move back and forth while avoiding mechanical contact between the sample and moving mirror 110, downstream of the sample. (c) Furthermore, if the sample surface is microscopically rough, by a typical transmission method, multiple modes can be generated as the idler photon is scattered and/or reflected by the sample surface. This may result in reduced signal intensity and increased noise.

(a) In contrast, in QAS system 1A according to this example, optical path difference ΔL is swept by the displacement of moving mirror 119 disposed in the signal optical path, and the optical axis of the idler light does not change over time. Therefore, the difficulty of constructing quantum optical system 10A can be reduced. (b) No mechanical contact between the sample and moving mirror 119 can occur. Therefore, the problem of securing space can be avoided. (c) Furthermore, prism 121B is configured to come into contact with the sample surface. Therefore, even if minute irregularities exist on the sample surface, a decrease in signal intensity and/or an increase in noise can be suppressed.

(d) In addition, when the idler light is transmitted through the sample, the optical path length of the idler photon changes depending on the refractive index and thickness of the sample. Therefore, as described above, sweep range W1 of the optical path difference in the first sweep is set according to the refractive index and thickness of the sample. When the refractive index and thickness (especially refractive index) of the sample are unknown, there is a possibility that sweep range W1 will not be set in an appropriate range, or trial and error will be required to set sweep range W1 in an appropriate range. In contrast, in ATR unit 121, the optical path length of the idler photon is constant regardless of the refractive index and thickness of the sample. Therefore, there is no need to change the settings of sweep range W1, and sweep range W1 can be fixed in advance. Therefore, the execution procedures of the first and second quantum measurements can be further simplified.

<<Nonlinear optical crystal>>

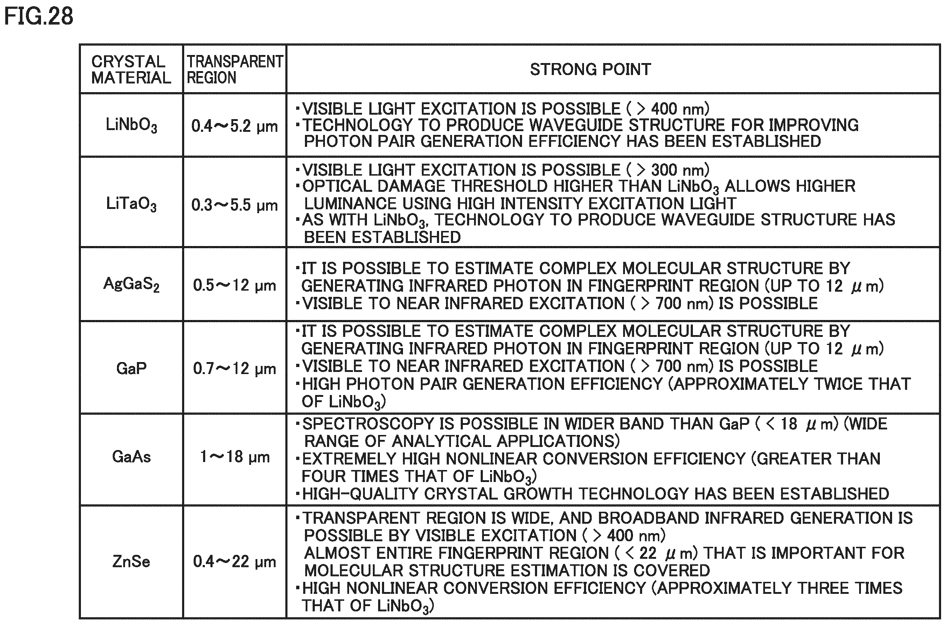

Fig. 28 is a diagram summarizing crystal materials of nonlinear optical crystal 104. The crystal materials of nonlinear optical crystal 104 are not limited to $LiNbO_3$, but lithium tantalate ($LiTaO_3$), silver thiogallate ($AgGaS_2$), gallium phosphide (GaP), gallium arsenide (GaAs), zinc selenide (ZnSe), and the like can also be employed.

However, the various materials shown in Fig. 28 are merely examples, and it is clearly described that the crystal materials that can be employed as nonlinear optical crystal 104 are not limited to these examples. When compounds are expressed herein by a stoichiometric formula, the stoichiometric formula is merely representative. The composition ratio may be non-stoichiometric. For example, when lithium niobate is expressed as "$LiNbO_3$", unless otherwise specified, lithium niobate is not limited to a composition ratio of "Li/Nb/O = 1/1/3" and can contain Li, Nb, and O in an arbitrary composition ratio. The same applies to other compounds.

[First modification of first embodiment]

The first modification of the first embodiment describes a configuration that scans the wavelength of the quantum entangled photon pair by using a quasi-phase-matched (QPM) device.

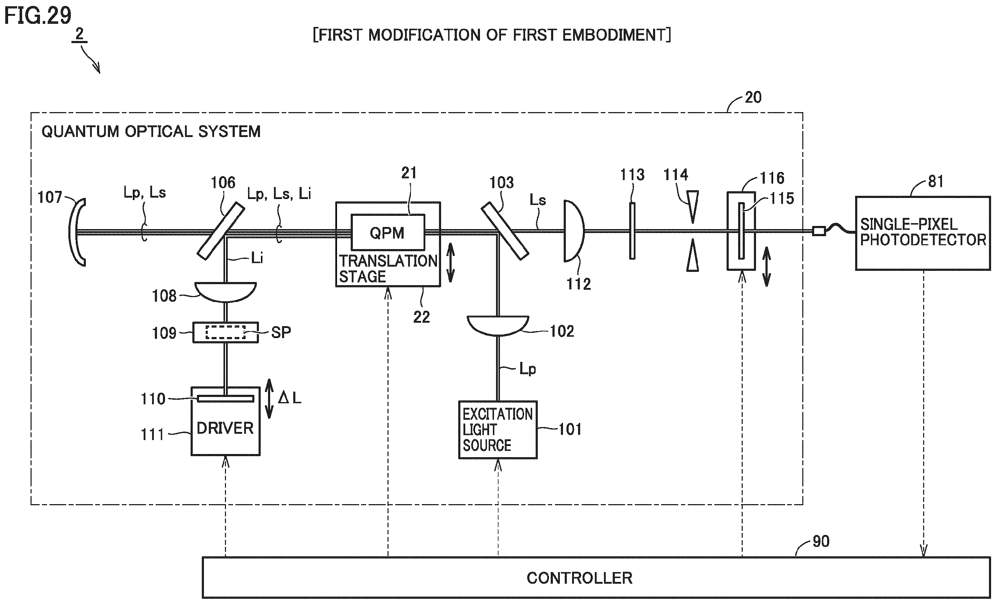

Fig. 29 is a diagram showing an overall configuration of a QAS system according to the first modification of the first embodiment. A QAS system 2 differs from QAS system 1 according to the first embodiment (see Fig. 1) by including a quantum optical system 20 instead of quantum optical system 10. Quantum optical system 20 differs from quantum optical system 10 by including a QPM device 21 instead of nonlinear optical crystal 104, and including a translation stage 22 instead of rotation stage 105.

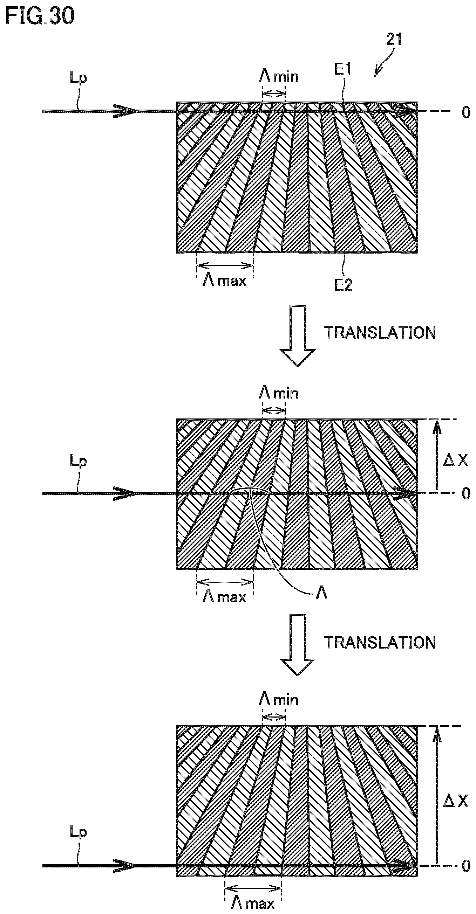

QPM device 21 is a fan-out element. That is, a nonlinear optical crystal (QPM crystal) of QPM device 21 has a poling period that changes in a fan shape (radially) (see Fig. 30). Materials of the QPM crystal is, for example, Mg doped stoichiometric lithium tantalate (Mg: SLT).

Translation stage 22 is configured to translate QPM device 21 in a direction perpendicular to the propagation direction of the pump light in response to control commands from controller 90. The moving direction of QPM device 21 does not have to be strictly perpendicular to the propagation direction of the pump light, but may be any direction intersecting the propagation direction of the pump light.

Fig. 30 is a diagram showing how QPM device 21 is translated by translation stage 22. QPM device 21 may include lenses and filters (see Fig. 7 of Patent Literature 1), but to prevent the diagram from becoming complicated, only the QPM crystal is shown in Fig. 30.

In the diagram of QPM device 21 (QPM crystal), the upper end face is described as first end E1, and the lower end face is described as second end E2. The movement amount of QPM device 21 in the direction connecting first end E1 and second end E2, with first end E1 as a reference, is described as $\Delta$X. Movement amount $\Delta$X is one example of "control parameter" according to the present disclosure. When the length between first end E1 and second end E2 is 5 mm, translation stage 22 can change $\Delta$X from 0 to 5 mm in a predetermined movement step.

Poling period A of the QPM crystal has a minimum value Amin at first end E1 and a maximum value Amax at second end E2. By translating QPM device 21 by using translation stage 22, poling period A of the QPM crystal in the optical path of the pump light changes. This allows poling period A to change in the range from Amin to Amax. The phase matching condition is expressed as the following formula (9).

[Math. 8]

$$\frac{n(\lambda_p)}{\lambda_p} - \frac{n(\lambda_s)}{\lambda_s} - \frac{n(\lambda_i)}{\lambda_i} = \frac{1}{\Lambda} \quad \cdots (9)$$

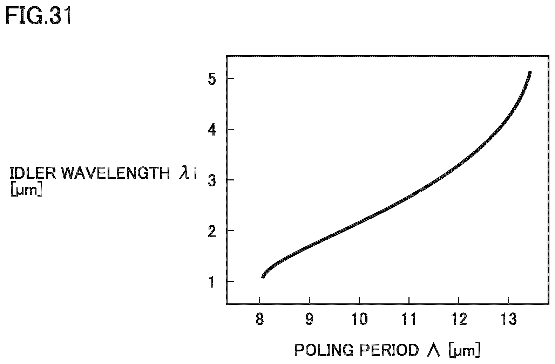

Fig. 31 is a diagram showing one example of simulation results regarding wavelength $\lambda$i of the idler photon generated accompanying the translation of QPM device 21. The horizontal axis represents poling period A in the optical path of the pump light. The vertical axis represents idler wavelength $\lambda$i. Here, it is assumed that pump wavelength $\lambda$p = 532 nm, poling period's minimum value Amin = 8 $\mu$m, and poling period's maximum value Amax = 13.5 $\mu$m. As shown in Fig. 31, by translating QPM device 21, the idler photon can be generated over a wavelength range from 1 $\mu$m to 5 $\mu$m, which is wider than the entire mid-infrared range.

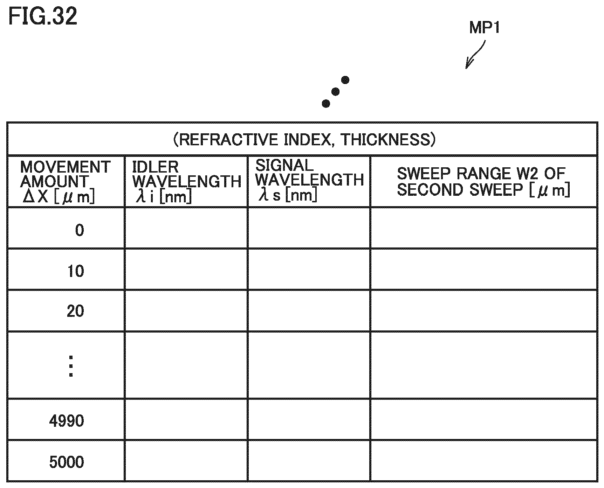

Fig. 32 is a conceptual diagram of a map regarding the sweep range of the second sweep according to the first modification of the first embodiment. Map MP1 includes the correspondence between movement amount $\Delta$X of QPM device 21 and sweep range W2 of the second sweep for each basic data (combination of refractive index and thickness) of the sample. Map MP1 may further include the correspondence between movement amount $\Delta$X of QPM device 21, and idler wavelength $\lambda$i and signal wavelength $\lambda$s.

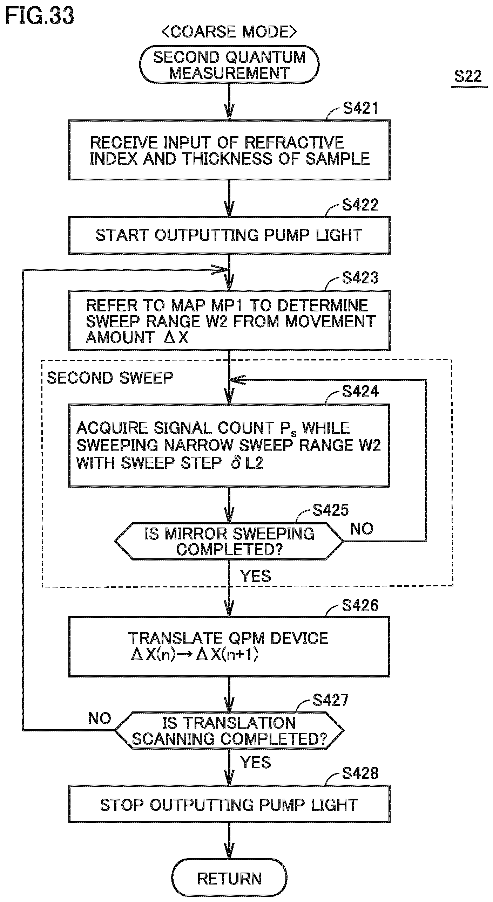

Fig. 33 is a flowchart showing one example of a processing procedure of the second quantum measurement according to the first modification of the first embodiment. The processing S421 and S422 is equivalent to the processing of S2211 and S2212 in the first embodiment (see Fig. 19).

In S423, with reference to map MP1, controller 90 determines sweep range W2 of the second sweep corresponding to current movement amount $\Delta$X(n) of QPM device 21. The subsequent processing S424 and S425 is equivalent to the processing of S2214 and S2215 in the first embodiment (see Fig. 19).

In S426, controller 90 controls translation stage 22 such that QPM device 21 changes from current movement amount $\Delta$X(n) to next movement amount $\Delta$X(n+1). The processing from S427 onward is also equivalent to the processing from S2217 onward.

In Fig. 33, an example in which the first sweep is omitted in the coarse mode has been described, but controller 90 may execute the first sweep. In the present modification as well, controller 90 has the fine mode. The same applies to subsequent second and third modifications.

As described above, in the first modification of the first embodiment, by executing translation scanning on QPM device 21 (changing the irradiation position of QPM device 21 with the pump light), it is possible to generate the idler photon over the entire mid-infrared range. According to the first modification, in a similar manner to the first embodiment, the absorption spectroscopy characteristic of the sample can be measured over a wide wavelength range at high speed.

When executing rotational scanning on nonlinear optical crystal 104 as in the first embodiment, changes can occur in the optical paths of the pump light, the signal light, and the idler light. In contrast, in the translation scanning of QPM device 21, such a change in the optical path can be suppressed. Furthermore, in general, the translation stage has greater control over position and is smaller in size than the rotation stage. Therefore, the first modification can provide QAS system 2 that is highly precise and compact.

Although not shown, the first embodiment may also employ the QPM device in place of nonlinear optical crystal 104. That is, the QPM device and rotation stage 105 may be combined. In this case, it is preferable to use a chirped element whose poling period changes along the optical path.

[Second modification of first embodiment]

A second modification of the first embodiment describes a configuration that scans the wavelength of the quantum entangled photon pair by temperature scanning of the nonlinear optical crystal.

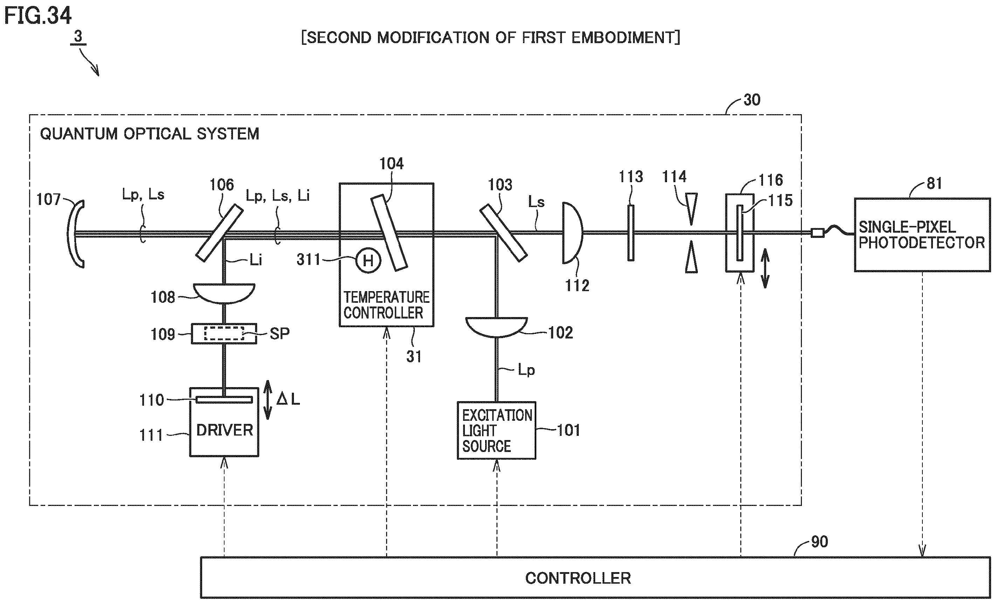

Fig. 34 is a diagram showing an overall configuration of a QAS system according to the second modification of the first embodiment. A QAS system 3 differs from QAS system 1 according to the first embodiment (see Fig. 1) by including a quantum optical system 30 instead of quantum optical system 10. Quantum optical system 30 differs from quantum optical system 10 by including a temperature controller 31 instead of rotation stage 105.

Temperature controller 31 includes a temperature sensor (not shown) that detects the temperature of nonlinear optical crystal 104 (hereinafter described as "crystal temperature T"). Crystal temperature T is one example of "control parameter" according to the present disclosure. Temperature controller 31 is configured to control crystal temperature T in response to control commands from controller 90. Temperature controller 31 includes a heater 311 such as a positive temperature coefficient (PTC) heater, for example. Temperature controller 31 may include a cooler (not shown), such as a Peltier element, in addition to or instead of heater 311. Since the refractive index of nonlinear optical crystal 104 shows temperature dependence, the phase matching condition (see formula (10) below) can be changed by controlling crystal temperature T.

[Math. 9]

$$\frac{n(\lambda_p,\ T)}{\lambda_p} - \frac{n(\lambda_s,\ T)}{\lambda_s} - \frac{n(\lambda_i,\ T)}{\lambda_i} = \frac{1}{\Lambda} \quad \cdots (10)$$

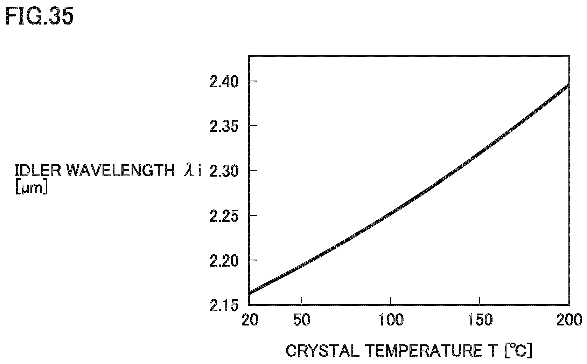

Fig. 35 is a diagram showing one example of simulation results regarding the change in idler wavelength $\lambda i$ accompanying the control of crystal temperature T. The horizontal axis represents crystal temperature T. The vertical axis represents idler wavelength $\lambda i$. Here, it is assumed that pump wavelength $\lambda p = 532$ nm and poling period A = 10 $\mu$m. As shown in Fig. 35, it is possible to change the wavelength range of the idler photon by controlling the temperature (heating/cooling) of nonlinear optical crystal 104.

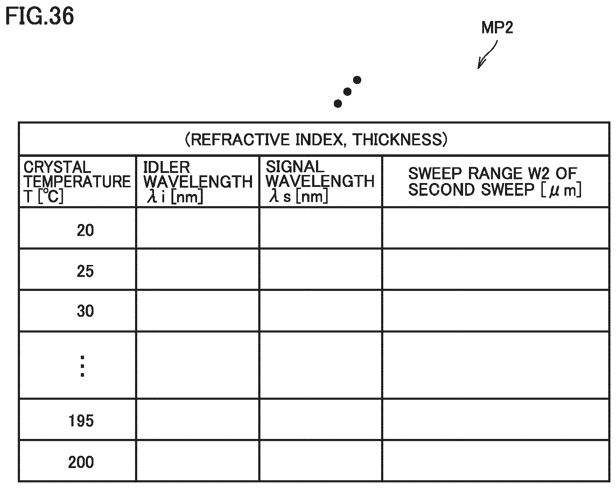

Fig. 36 is a conceptual diagram of the map regarding the sweep range of the second sweep according to the second modification of the first embodiment. Map MP2 includes the correspondence between crystal temperature T and sweep range W2 of the second sweep for each basic data (combination of refractive index and thickness) of the sample. Map MP2 may further include the correspondence between crystal temperature T, and idler wavelength $\lambda i$ and signal wavelength $\lambda s$.

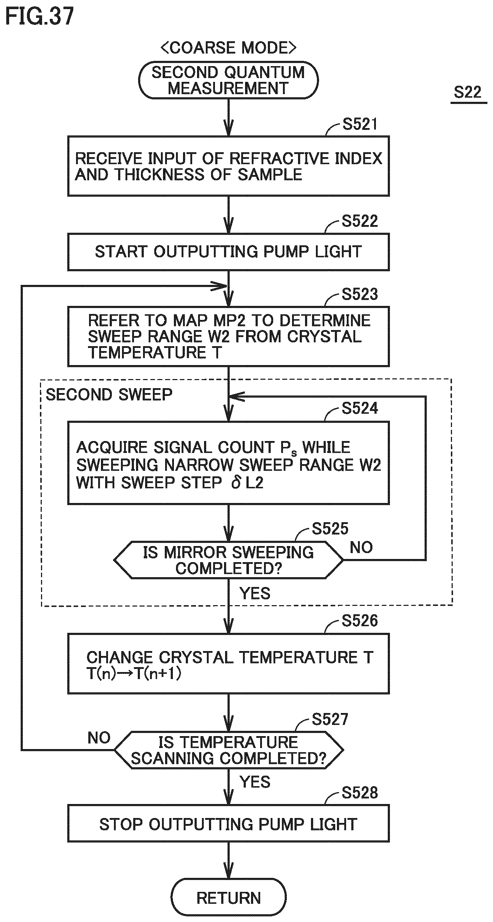

Fig. 37 is a flowchart showing one example of a processing procedure of the second quantum measurement according to the second modification of the first embodiment. The processing S521 and S522 is equivalent to the processing S2211 and S2212 in the first embodiment (see Fig. 19).

In S523, with reference to map MP2, controller 90 determines sweep range W2 of the second sweep corresponding to current crystal temperature T(n). The peak shift of the quantum interference signal accompanying the change in crystal temperature T is small. Therefore, in this modification, sweep range W2 of the second sweep may be fixed regardless of crystal temperature T. The processing S524 and S545 is also equivalent to the processing S2214 and S2215.

In S526, controller 90 controls temperature controller 31 to change crystal temperature T from a current set value T(n) to a next set value T(n+1). The processing from S527 onward is also equivalent to the processing from S2217 onward.

As described above, in the second modification of the first embodiment, it is possible to generate the idler photon in a part of the mid-infrared range by temperature scanning of nonlinear optical crystal 104. According to the second modification, it is possible to measure the absorption spectroscopy characteristic of the sample over a wide wavelength range of a certain degree at high speed.

Generally, mechanical mechanisms tend to be more prone to malfunctions than electrical or electronic mechanisms. Temperature controller 31, which does not include any mechanical mechanism for the rotation or translation of the nonlinear optical element, is less prone to malfunctions. Typical components of temperature controller 31 (such as PTC heaters and Peltier elements) are small in size. Therefore, the second modification can provide robust and compact QAS system 3.

A nonlinear optical element applicable to QAS system 3 is not limited to bulk-type nonlinear optical crystal 104. Quantum absorption spectroscopy system 3 may include a ring resonator, an optical waveguide, or a QPM device. The QPM device may be a fan-out element or a chirped element.

[Third modification of first embodiment]

The third modification of the first embodiment describes a configuration of scanning the wavelength of the quantum entangled photon pair by wavelength scanning on pump light emitted from an excitation light source.

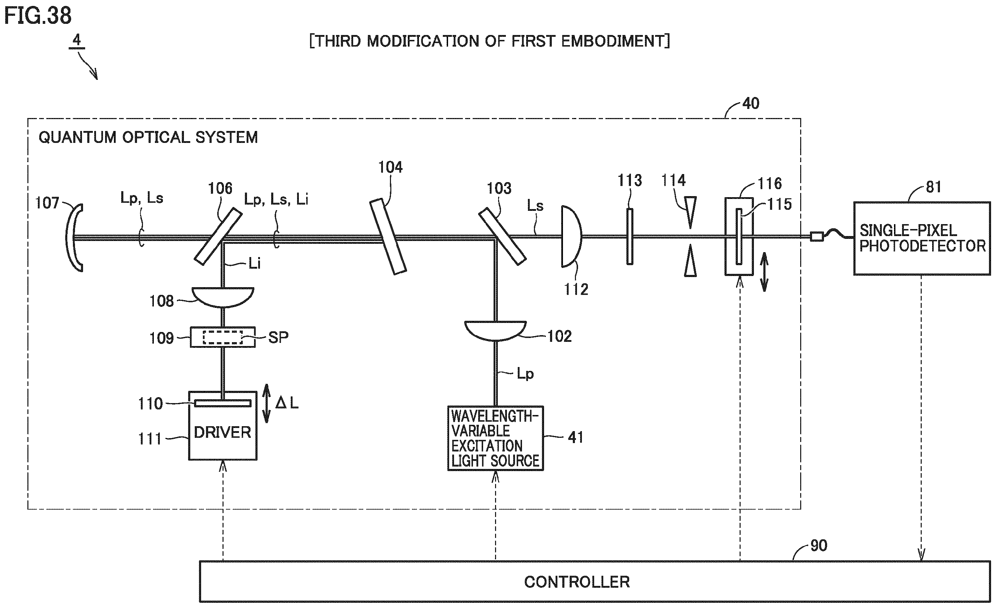

Fig. 38 is a diagram showing an overall configuration of a QAS system according to the third modification of the first embodiment. A QAS system 4 differs from QAS system 1 according to the first embodiment (see Fig. 1) by including a quantum optical system 40 instead of quantum optical system 10. Quantum optical system 40 differs from quantum optical system 10 by including a wavelength-variable excitation light source 41 instead of excitation light source 101.

Wavelength-variable excitation light source 41 is configured to vary pump wavelength $\lambda p$ at least in the visible range in response to control commands from controller 90. In this example, wavelength-variable excitation light source 41 can vary pump wavelength $\lambda p$ in the range from 450 nm to 570 nm. By varying pump wavelength $\lambda p$, the energy conservation law and the phase matching condition (see formula (11) below) can be changed. Wavelength-variable excitation light source 41 is, for example, various types of semiconductor lasers, but may also be other types of lasers (dye lasers and the like). Pump wavelength $\lambda p$ is one example of "control parameter" according to the present disclosure.

[Math. 10]

$$\frac{n(\lambda_p)}{\lambda_p} - \frac{n(\lambda_s)}{\lambda_s} - \frac{n(\lambda_i)}{\lambda_i} = \frac{1}{\Lambda} \quad \cdots (11)$$

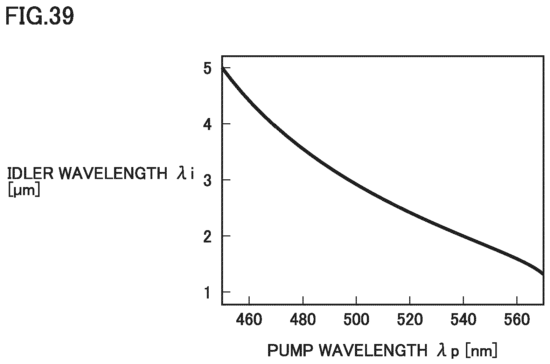

Fig. 39 is a diagram showing one example of simulation results regarding the change in idler wavelength $\lambda i$ accompanying the change in pump wavelength $\lambda p$. The horizontal axis represents pump wavelength $\lambda p$. The vertical axis represents idler wavelength $\lambda i$. Here, it is assumed that crystal temperature T = 20°C and poling period A = 10 $\mu$m. As shown in Fig. 39, by varying pump wavelength $\lambda p$, the idler photon can be generated over a wavelength range from 1 $\mu$m to 5 $\mu$m, which is wider than the entire mid-infrared range.

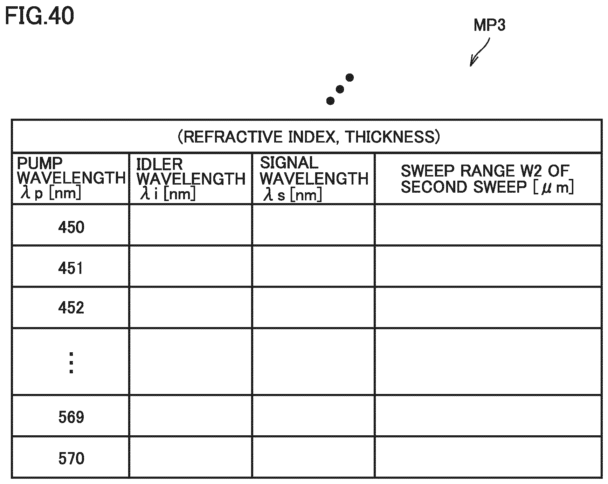

Fig. 40 is a conceptual diagram of a map regarding sweep range W2 of the second sweep according to the third modification of the first embodiment. A map MP3 includes the correspondence between pump wavelength $\lambda p$ and sweep range W2 of the second sweep for each basic data (combination of refractive index and thickness) of the sample. Map MP3 may further include the correspondence between pump wavelength $\lambda p$, and idler wavelength $\lambda i$ and signal wavelength $\lambda s$.

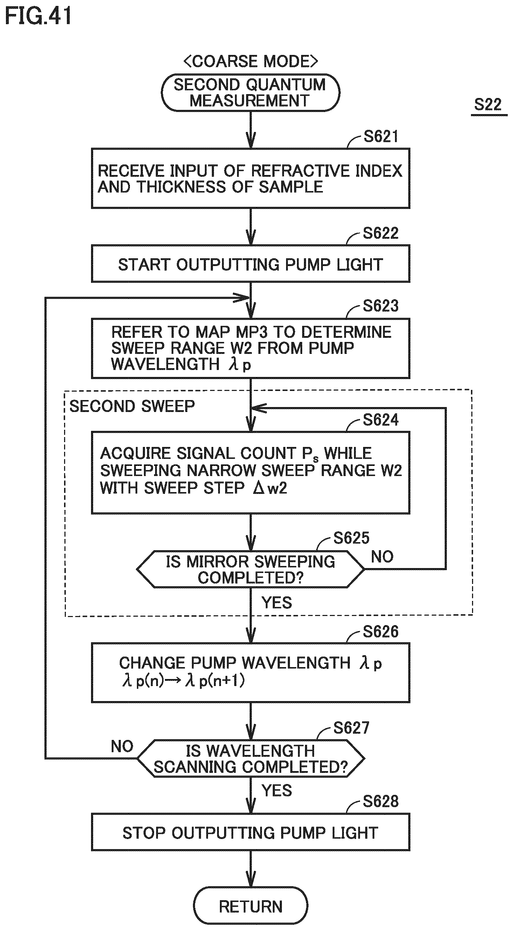

Fig. 41 is a flowchart showing one example of a processing procedure of the second quantum measurement according to the third modification of the first embodiment. The processing S621 and S622 is equivalent to the processing S2211 and S2212 in the first embodiment (see Fig. 19).

In S623, with reference to map MP3, controller 90 determines sweep range W2 of the second sweep corresponding to current wavelength $\lambda p(n)$ of the pump light. The peak shift of the quantum interference signal accompanying the change in pump wavelength $\lambda p$ is small. Therefore, in the present modification as well, sweep range W2 of the second sweep may be fixed regardless of pump wavelength $\lambda p$. The processing S624 and S625 is also equivalent to the processing S2214 and S2215.

In S626, controller 90 controls wavelength-variable excitation light source 41 to vary pump wavelength $\lambda p$ from a current set value $\lambda p (n)$ to a next set value $\lambda p (n+1)$. The processing from S627 onward is also equivalent to the processing from S2217 onward.

As described above, in the third modification of the first embodiment, it is possible to generate the idler photon over the entire mid-infrared range by scanning pump wavelength $\lambda p$ (excitation wavelength of nonlinear optical crystal 104). Therefore, according to the third modification, in a similar manner to the first embodiment, the absorption spectroscopy characteristic of the sample can be measured over a wide wavelength range at high speed.

Depending on the configuration of wavelength-variable excitation light source 41, it is possible to generate the idler photon over a very wide wavelength range as shown in Fig. 39, and furthermore, multi-wavelength excitation is also possible. Therefore, the third modification can provide QAS system 4 that is particularly suitable for measurement in the wide wavelength range.

The nonlinear optical element applicable to QAS system 4 is not limited to bulk type nonlinear optical crystal 104, but may be a ring resonator, an optical waveguide, or a fan-out or chirped QPM device (none shown).

The rotational scanning of nonlinear optical crystal 104 (first embodiment), the translation scanning of QPM device 21 (first modification), the temperature scanning of nonlinear optical crystal 104 (second modification), and the wavelength scanning of the pump light (third modification) can be combined as appropriate. For example, the rotational scanning of nonlinear optical crystal 104 may be combined with the temperature scanning of nonlinear optical crystal 104, may be combined with the wavelength scanning of the pump light, or may be combined with both (three techniques in total). Similarly, the translation scanning of QPM device 21 may be combined with the temperature scanning of QPM device 21, may be combined with the wavelength scanning of the pump light, or may be combined with both. The temperature scanning of nonlinear optical crystal 104 may be combined with the wavelength scanning of the pump light.

[Second embodiment]

The second embodiment will describe a system configuration that fixes an optical path difference $\Delta L$ during quantum measurement without executing stepwise displacement of a moving mirror 110.

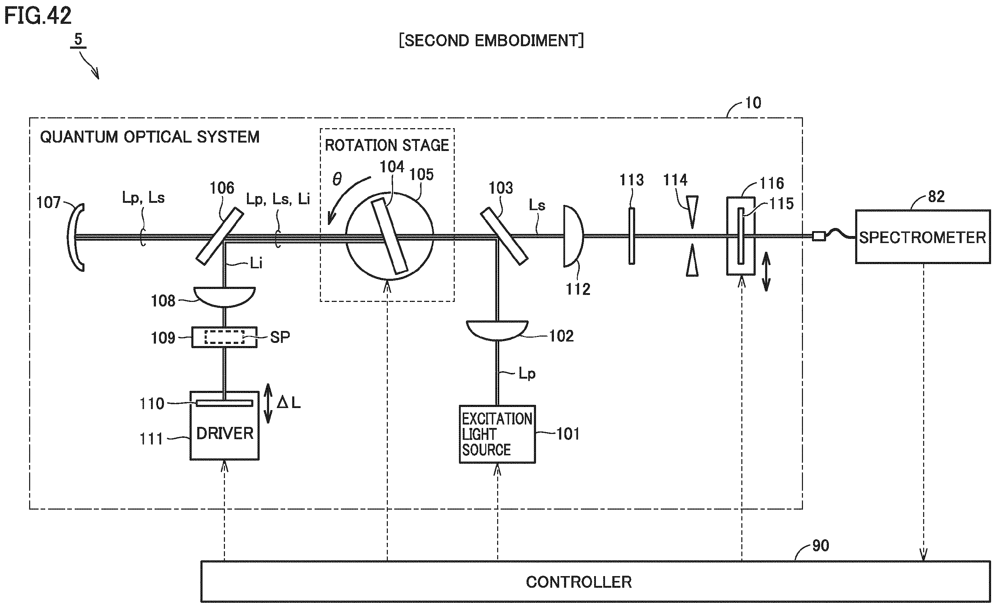

Fig. 42 is a diagram showing an overall configuration of a QAS system according to the second embodiment. A QAS system 5 differs from QAS system 1 according to the first embodiment (see Fig. 1) by including a spectrometer 82 instead of single-pixel photodetector 81.

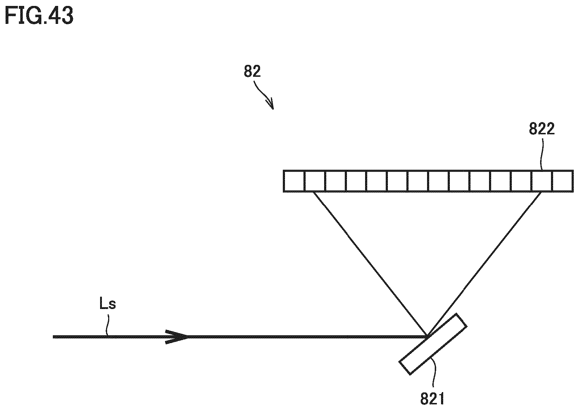

Fig. 43 is a diagram showing a configuration example of spectrometer 82. Spectrometer 82 includes a dispersive optical element 821 and a light-receiving element 822.

Dispersive optical element 821 is a diffraction grating in this example. Dispersive optical element 821 disperses (wavelength-resolves) signal light into different directions according to a wavelength. Dispersive optical element 821 may be other types of element (such as prism).

Light-receiving element 822 is a multi-pixel element that includes multiple pixels arranged in an array. Specifically, light-receiving element 822 is a charged-coupled device (CCD) image sensor or a complementary metal-oxide-semiconductor (CMOS) image sensor. Light-receiving element 822 is configured to detect light intensity of the signal light with different wavelengths for respective pixels.

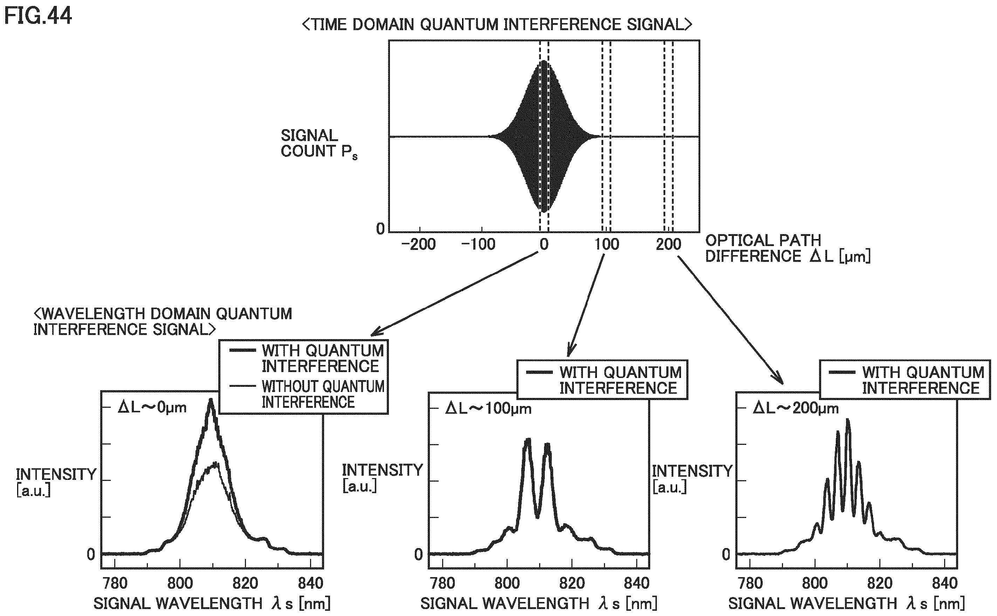

Fig. 44 is a conceptual diagram for describing an analysis method of a quantum interference signal according to the second embodiment. The upper side of Fig. 44 shows the quantum interference signal acquired by sweeping optical path difference $\Delta L$ in a Q-FTIR mode by using QAS system 1 according to the first embodiment. The horizontal axis represents optical path difference $\Delta L$ and the vertical axis represents the signal count $P_s$. As described above, since optical path difference $\Delta L$ on the horizontal axis can be converted to delay time $\Delta t$ by using the relational expression $\Delta L = c\Delta t$, this quantum interference signal can be said to be the quantum interference signal in the time domain.

On the other hand, the lower side of Fig. 44 shows the quantum interference signal acquired with optical path difference $\Delta L$ fixed, by using QAS system 5 according to the second embodiment. The quantum interference signal on the left corresponds to $\Delta L = 0$, the quantum interference signal in the middle corresponds to $\Delta L = 100 \ \mu m$, and the quantum interference signal on the right corresponds to $\Delta L = 200 \ \mu m$. The horizontal axis represents a signal wavelength $\lambda s$ detected after wavelength resolution by spectrometer 82. The vertical axis represents light intensity. The quantum interference signals shown in three diagrams below are quantum interference signals in the wavelength domain.

From the three diagrams below, it can be seen that the interference fringe (fringe structure) is not observed in the quantum interference signal in the wavelength domain when $\Delta L = 0$, while the interference fringe is observed when $\Delta L = 100 \ \mu m$ or $200 \ \mu m$. Furthermore, it can be seen that when $\Delta L = 200 \ \mu m$, the spacing between the interference fringes is narrower than when $\Delta L = 100 \ \mu m$. Thus, in the quantum interference signal in the wavelength domain measured using spectrometer 82, the interference fringe that is clearer with narrower spacing appears as optical path difference $\Delta L$ increases. By displacing moving mirror 110 to cause optical path difference $\Delta L$ to have a relatively large value (in this example, $\Delta L$ is greater than or equal to $200 \ \mu m$) and fixing moving mirror 110 at that position, the quantum interference signal can be acquired in the wavelength domain where the clear interference fringe appears. It can also be said that fixing optical path difference $\Delta L$ is one aspect of limiting the sweep range of optical path difference $\Delta L$.

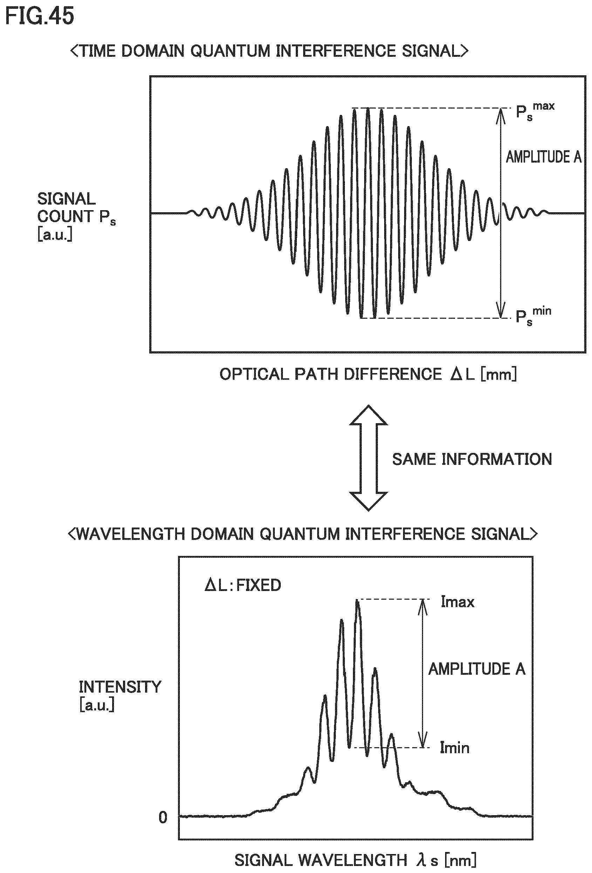

Fig. 45 is a diagram for describing a method of calculating visibility according to the second embodiment. Again, for comparison, the upper side shows the quantum interference signal in the time domain, and the lower side shows the quantum interference signal in the wavelength domain.

Amplitude A of the interference fringe that appears in the quantum interference signal in the wavelength domain provides the same information as amplitude A of the interference fringe that appears in the quantum interference signal in the time domain. Therefore, in a similar manner to amplitude A of the quantum interference signal acquired while sweeping optical path difference $\Delta L$ by displacing moving mirror 110, visibility V of quantum interference can also be calculated from amplitude A of the quantum interference signal acquired using spectrometer 82 with optical path difference $\Delta L$ fixed to a relatively large value. Specifically, the following formula (12) can be used ($A = I_{max} - I_{min}$). Then, as in the first embodiment, based on the ratio of visibility V between first quantum measurement where no sample is installed and second quantum measurement where the sample is installed, transmittance T of the sample can be calculated.

[Math. 11]

$$V = \frac{I_{max} - I_{min}}{I_{max} + I_{min}} \quad \cdots (12)$$

Thus, QAS system 5 according to the second embodiment can calculate visibility V of quantum interference based on the interference fringe that appears in the quantum interference signal in the wavelength domain, without sweeping optical path difference $\Delta L$. This indicates that "one-shot measurement" that does not require repeated sampling is implemented. Therefore, the quantum measurement time can be shortened further.

A driver 111 of moving mirror 110 only needs to be able to set optical path difference $\Delta L$ to a fairly large value (for example, several hundred $\mu m$) in order to observe the clear interference fringe. It is sufficient for driver 111 to control moving mirror 110 on the order of micrometers, and precise control on the order of nanometers is not required. Therefore, an inexpensive device capable of only coarse movement can be employed for driver 111. Therefore, material costs for QAS system 5 can be reduced.

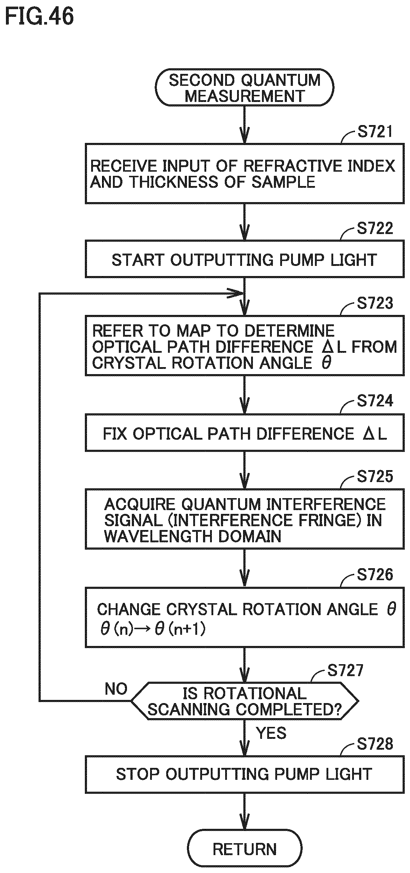

Fig. 46 is a flowchart showing one example of a processing procedure of the second quantum measurement according to the second embodiment. A controller 90 receives input of basic data (refractive index and thickness) of the sample (S721). Controller 90 controls an excitation light source 101 to start outputting pump light (S722).

In S723, controller 90 refers to a map (not shown) prepared in advance and determines optical path difference ΔL from a crystal rotation angle θ. In the map, optical path difference ΔL is determined such that the clear interference fringe is observed in the quantum interference signal in the wavelength domain. The map preferably includes the refractive index and thickness input in S721.

In S724, controller 90 controls driver 111 such that moving mirror 110 moves to a position where optical path difference ΔL determined in S724 occurs. Moving mirror 110 is fixed at the position. That is, controller 90 does not execute second sweep. Of course, sweep to identify the peak position of the quantum interference signal in the time domain (first sweep) is also not required. Then, controller 90 acquires the quantum interference signal in the wavelength domain from spectrometer 82 (S725).

In S726, controller 90 controls a rotation stage 105 such that crystal rotation angle θ changes to the next angle.

In S727, controller 90 determines whether a rotational scanning completion condition of nonlinear optical crystal 104 is met. When crystal rotation angle θ has not reached a final angle (NO in S727), the controller returns the process to S723. This allows the quantum interference signal in the wavelength domain to be acquired with crystal rotation angle θ further changed to the next angle. When crystal rotation angle θ reaches the final angle (YES in S727), the controller advances the process to S728 and controls excitation light source 101 to stop outputting the pump light.

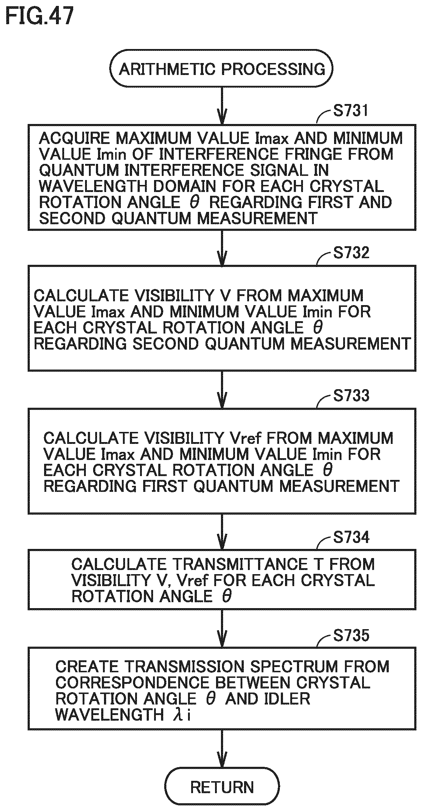

Fig. 47 is a flowchart showing one example of a processing procedure of arithmetic processing according to the second embodiment. The processing shown in the flowchart is equivalent to arithmetic processing in a coarse mode (see Fig. 15), except for using a maximum value $I_{max}$ and $I_{min}$ of the interference fringe instead of maximum value $P_s^{max}$ and minimum value $P_s^{min}$ of the signal count. Therefore, detailed descriptions will not be repeated.

As described above, in the second embodiment as well, as in the first embodiment, it is possible to generate an idler photon over the entire mid-infrared range by rotational scanning of nonlinear optical crystal 104. Furthermore, in the second embodiment, in a state where moving mirror 110 is shifted (detuned) to a certain degree from the position ΔL = 0 where the signal optical path length agrees with the idler optical path length, the quantum interference signal in the wavelength domain is acquired by wavelength resolution using spectrometer 82. Then, based on maximum value $I_{max}$ and minimum value $I_{min}$ of the interference fringe that appears in the quantum interference signal in the wavelength domain, visibility V, Vref of quantum interference is calculated. This allows the sweep of optical path difference ΔL to be omitted, further shortening the quantum measurement time. Therefore, the second embodiment allows the absorption spectroscopy characteristic of the sample to be measured over a wide wavelength range at higher speed.

The second embodiment has described a configuration that combines the rotational scanning of nonlinear optical crystal 104 with the wavelength resolution by spectrometer 82. However, the wavelength scanning of a quantum entangled photon pair that can be combined with the wavelength resolution by spectrometer 82 is not limited to the rotational scanning of nonlinear optical crystal 104. Translation scanning of a QPM device 21 (first modification) and the wavelength resolution by spectrometer 82 may be combined. Temperature scanning of nonlinear optical crystal 104 (second modification) may be combined with the wavelength resolution by spectrometer 82. The wavelength scanning of the pump light (third modification) may be combined with the wavelength resolution by spectrometer 82.

[Third embodiment]

The third embodiment will describe a system configuration that does not displace a moving mirror 110 and does not use a spectrometer 82.

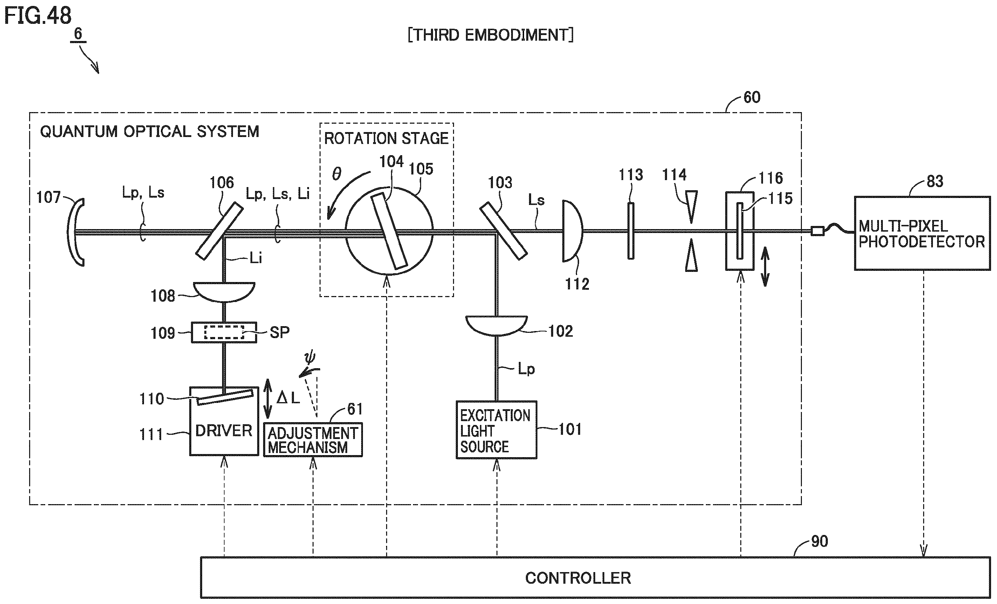

Fig. 48 is a diagram showing an overall configuration of a QAS system according to the third embodiment. A QAS system 6 differs from QAS system 5 according to the second embodiment (see Fig. 42) by including a quantum optical system 60 instead of a quantum optical system 10, and including a photodetector 83 instead of a spectrometer 82. Quantum optical system 60 differs from quantum optical system 10 by including an adjustment mechanism 61 of moving mirror 110 in addition to a driver 111 of moving mirror 110.

Photodetector 83 includes a multi-pixel light-receiving element including multiple pixels arranged in an array. Photodetector 83 is, for example, a CCD image sensor or a CMOS image sensor. Unlike the second embodiment, photodetector 83 does not include a dispersive optical element 821 (see Fig. 43) such as diffraction grating.

Adjustment mechanism 61 is configured to adjust the angle of moving mirror 110 with respect to the propagation direction of idler light in response to control commands from a controller 90. Adjustment mechanism 61 is, for example, a tilt rotation stage capable of single-axis tilt or dual-axis tilt. Adjustment mechanism 61 may be a manual stage that is adjusted by a user.

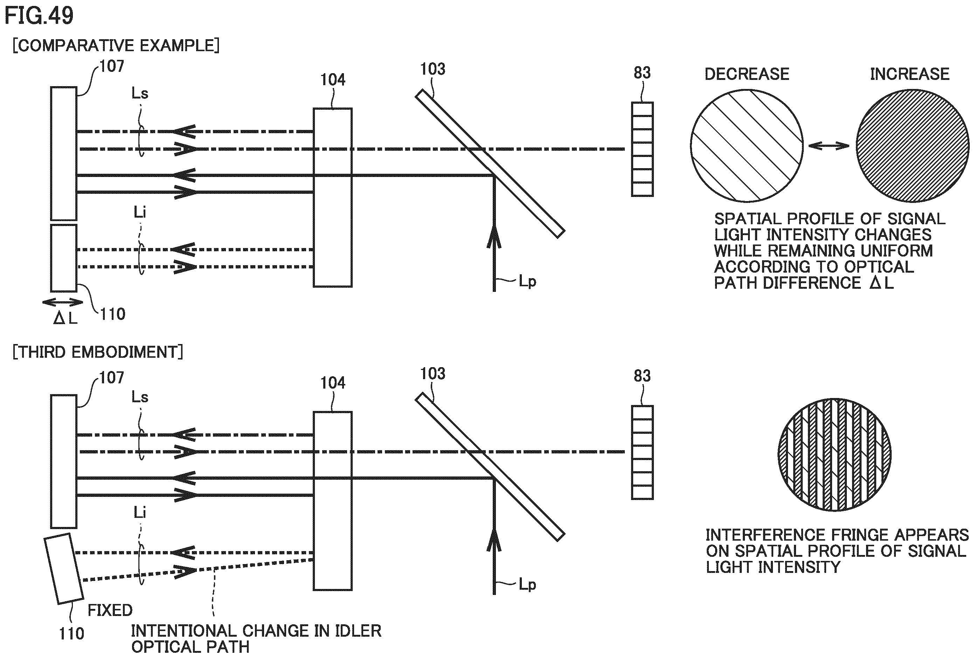

Fig. 49 is a conceptual diagram for describing an analysis method of a quantum interference signal according to the third embodiment. Again, for ease of understanding, a comparative example will be described. The quantum optical system according to the comparative example is adjusted such that forward and return paths of pump light between a nonlinear optical crystal 104 and a fixed mirror 107 completely overlap each other. Similarly, the forward and return paths of signal light completely overlap each other between nonlinear optical crystal 104 and fixed mirror 107. The forward and return paths of idler light completely overlap each other between nonlinear optical crystal 104 and moving mirror 110.

In this case, as a result of quantum interference between a signal photon and an idler photon, intensity of the signal light detected by photodetector 83 is approximately equal among multiple pixels arranged on a light-receiving surface of photodetector 83. In other words, a spatial profile of the signal light intensity on the light-receiving surface of photodetector 83 is uniform. When moving mirror 110 is swept, the spatial profile of the signal light intensity remains uniform, although with increases and decreases overall.

In contrast, quantum optical system 60 according to the third embodiment is adjusted such that the forward and return paths of the idler light are slightly offset from each other. Meanwhile, for the pump light and the signal light, the forward and return paths completely overlap each other. In this case as well, quantum interference occurs between the signal photon and the idler photon, and the interference fringe (fringe structure) is observed in the spatial profile of the signal light intensity on the light-receiving surface of photodetector 83. An optical path difference $\Delta L$ between a signal optical path and an idler optical path is preferably set near zero. Instead of or in addition to the idler light, the forward and return paths of the signal light may be adjusted to be slightly offset from each other.

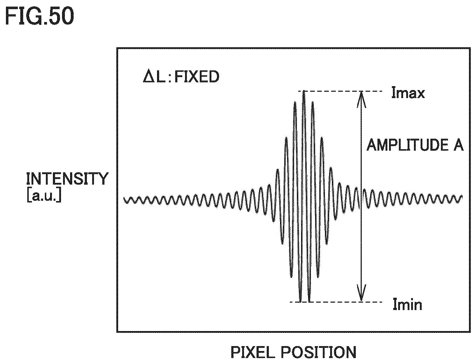

Fig. 50 is a diagram for describing a method of calculating visibility according to the third embodiment. The horizontal axis represents the positions of multiple pixels arranged on the light-receiving surface of photodetector 83 (distance of each pixel from the reference position). The vertical axis represents light intensity. Visibility V of quantum interference can also be calculated from a maximum value $I_{max}$ and a minimum value $I_{min}$ of such a spatial interference fringe according to the above formula (12). Then, as in the first and second embodiments, based on the ratio of visibility V between first quantum measurement where no sample is installed and second quantum measurement where the sample is installed, transmittance T of the sample can be calculated. Therefore, there is no need to sweep optical path difference $\Delta L$, and there is no need to provide spectrometer 82.

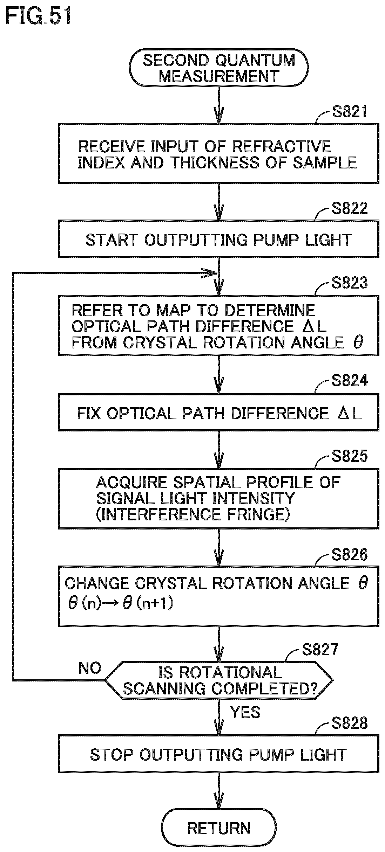

Fig. 51 is a flowchart showing one example of a processing procedure of the second quantum measurement according to the third embodiment. In S826, controller 90 acquires the spatial interference fringe that appears in the spatial profile of the signal light intensity. Other processing is equivalent to the corresponding processing of the second quantum measurement according to the second embodiment (see Fig. 46), and thus the description will not be repeated.

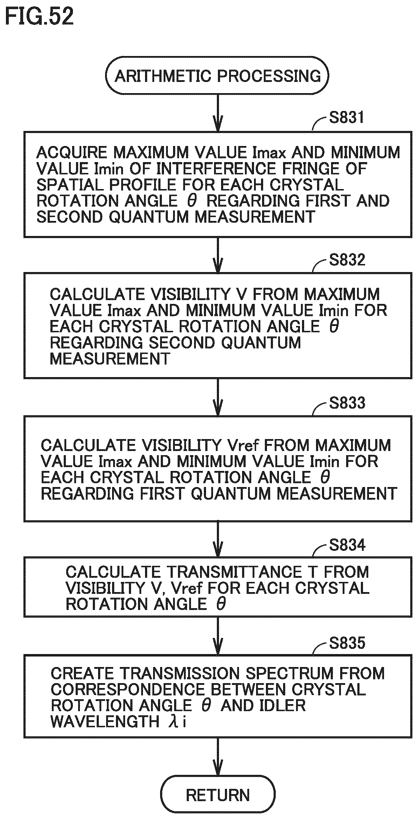

Fig. 52 is a flowchart showing one example of a processing procedure of arithmetic processing according to the third embodiment. In S831, controller 90 acquires maximum value $I_{max}$ and $I_{min}$ of the spatial interference fringe based on the signal light intensity detected by each pixel of photodetector 83. The processing from S832 onward is equivalent to the corresponding processing of the arithmetic processing according to the second embodiment (see Fig. 47), and thus the description will not be repeated.

As described above, in the third embodiment as well, as in the first and second embodiments, it is possible to generate the idler photon over the entire mid-infrared range by rotational scanning of nonlinear optical crystal 104. Furthermore, in the third embodiment, in a state where moving mirror 110 is shifted (detuned) to a certain degree from the position of $\Delta L = 0$ where the signal optical path length agrees with the idler optical path length, and in a state where the forward and return paths of the idler light are adjusted to be slightly offset from each other, the spatial profile of the signal light intensity is acquired by multi-pixel photodetector 83. Then, based on maximum value $I_{max}$ and minimum value $I_{min}$ of the spatial interference fringe that appears in the spatial profile of the signal light intensity, visibility V, Vref of quantum interference is calculated. This allows the sweep of optical path difference $\Delta L$ to be omitted, further shortening the quantum measurement time. Therefore, the third embodiment allows the absorption spectroscopy characteristic of the sample to be measured over a wide wavelength range at higher speed. Furthermore, since there is no need to install spectrometer 82, inexpensive and compact QAS system 6 can be provided.

The third embodiment has described a configuration that generates the idler light of a wide wavelength range by rotational scanning of nonlinear optical crystal 104. However, the idler light of a wide wavelength range may be generated by the translation scanning of QPM device 21 (first modification), the temperature scanning of nonlinear optical crystal 104 (second modification), or the wavelength scanning of the pump light (third modification). That is, the third embodiment and the first to third modifications of the first embodiment can be combined as appropriate.

[Clause]

Finally, various aspects of the present disclosure will be summarized as clauses.

(Clause 1)

A quantum absorption spectroscopy system comprising:

a quantum optical system that causes quantum interference between a plurality of physical processes in which a quantum entangled photon pair of a signal photon and an idler photon is generated, the quantum optical system including

a nonlinear optical element that generates the quantum entangled photon pair by irradiation with pump light,
a wavelength scanner that scans a wavelength of the quantum entangled photon pair by changing a control parameter, and
an optical path sweeper that sweeps an optical path difference between the signal photon and the idler photon

a photodetector that outputs a signal depending on a detected number of the signal photons in a state where a target sample is disposed in an optical path of the idler photon; and
a processor that controls the quantum optical system to cause the quantum interference and calculates an absorption spectroscopy characteristic of the target sample based on a quantum interference signal acquired from the photodetector during the control, wherein
the processor:

acquires, each time the wavelength is sequentially changed by changing the control parameter, the quantum interference signal under a condition that a sweep range of the optical path difference is limited compared with when sweeping the optical path difference to acquire an entire envelope of the quantum interference signal, or under a condition that the optical path difference is fixed,
calculates amplitude of an interference fringe that appears in the acquired quantum interference signal, and
calculates, based on the calculated amplitude of the interference fringe, the absorption spectroscopy characteristic at a wavelength of the idler photon corresponding to the control parameter.

(Clause 2)

The quantum absorption spectroscopy system according to clause 1 or 2, wherein

the photodetector detects the signal photon without performing wavelength resolution,
the processor:

limits, each time the wavelength is changed sequentially, the sweep range of the optical path difference such that the quantum interference signal is selectively acquired in a specific time domain that is narrower than a time domain of the entire envelope of the quantum interference signal and includes a peak position of the quantum interference signal, and
calculates the amplitude of the interference fringe that appears in the quantum interference signal in the specific time domain.

(Clause 3)

The quantum absorption spectroscopy system according to clause 2, further comprising

a memory that stores first correspondence between the control parameter and the sweep range of the optical path difference, wherein
the processor limits, by referring to the first correspondence, the sweep range of the optical path difference according to the control parameter.

(Clause 4)

The quantum absorption spectroscopy system according to clause 2 or 3, further comprising

a memory that stores second correspondence between a refractive index and thickness of the sample, and the sweep range of the optical path difference, wherein
the processor limits, by referring to the second correspondence, the sweep range of the optical path difference according to the refractive index and the thickness of the target sample.

(Clause 5)

The quantum absorption spectroscopy system according to any one of clauses 2 to 4, wherein
the processor:

determines the specific time domain by sweeping the optical path difference with a first step width, and

selectively acquires the quantum interference signal in the specific time domain by sweeping the optical path difference with a second step width smaller than the first step width.

(Clause 6)

The quantum absorption spectroscopy system according to any one of clauses 1 to 5, wherein

the processor has first and second modes,
the first mode is a mode of calculating the absorption spectroscopy characteristic of the target sample based on amplitude of a Fourier spectrum obtained by performing Fourier transform on the quantum interference signal,
the second mode is a mode of calculating the absorption spectroscopy characteristic of the target sample based on the amplitude of the interference fringe that appears in the quantum interference signal, and
the processor limits the sweep range of the optical path difference more in the second mode than in the first mode.

(Clause 7)

The quantum absorption spectroscopy system according to clause 1, wherein

the photodetector includes:

a dispersive optical element that performs wavelength resolution on the signal photon, and
a multi-pixel light-receiving element that detects light that undergoes the wavelength resolution by the dispersive optical element,

the processor:

acquires, each time the wavelength is changed sequentially, the quantum interference signal in a wavelength domain under a condition that the optical path difference is fixed, and
calculates the amplitude of the interference fringe that appears in the quantum interference signal in the wavelength domain.

(Clause 8)

The quantum absorption spectroscopy system according to clause 1, wherein

the photodetector includes a multi-pixel light-receiving element that detects the signal photon without performing wavelength resolution,
the processor:

acquires, each time the wavelength is changed sequentially, a spatial profile of light intensity of the signal photon in the multi-pixel light-receiving element as the quantum interference signal under a condition that the optical path difference is fixed, and
calculates the amplitude of the interference fringe that appears in the spatial profile.

(Clause 9)

The quantum absorption spectroscopy system according to any one of clause 1 to 8, wherein

the wavelength scanner includes a rotation mechanism that rotates the nonlinear optical element, and
the processor controls an angle formed by an optical axis of the nonlinear optical element with respect to an incidence direction of the pump light as the control parameter.

(Clause 10)

The quantum absorption spectroscopy system according to any one of clauses 1 to 8, wherein

the nonlinear optical element is a fan-out quasi-phase matching element,
the wavelength scanner includes a moving mechanism that translates the quasi-phase matching element in a direction intersecting a propagation direction of the pump light, and
the processor controls a movement distance of the quasi-phase matching element by the moving mechanism as the control parameter.

(Clause 11)

The quantum absorption spectroscopy system according to any one of clauses 1 to 8, wherein

the wavelength scanner includes a temperature controller that scans a temperature of the nonlinear optical element, and
the processor controls the temperature of the nonlinear optical element as the control parameter.

(Clause 12)

The quantum absorption spectroscopy system according to any one of clauses 1 to 8, wherein

the wavelength scanner includes a light source with a variable wavelength of the pump light, and
the processor controls the wavelength of the pump light as the control parameter.

(Clause 13)

The quantum absorption spectroscopy system according to any one of clauses 1 to 12, in which the quantum optical system further includes an attenuated total reflection device that is configured to perform attenuated total reflection of the target sample.

(Clause 14)

A quantum absorption spectroscopy method using a quantum optical system, the quantum optical system being configured to cause quantum interference between a plurality of physical processes in which a quantum entangled photon pair of a signal photon and an idler photon is generated, scan a wavelength of the quantum entangled photon pair by changing a control parameter, and sweep an optical path difference between the signal photon and the idler photon, the quantum absorption spectroscopy method comprising:

changing the wavelength sequentially by changing the control parameter in a state where a sample is disposed in an optical path of the idler photon;
acquiring, each time the wavelength is changed sequentially, a quantum interference signal according to a detected number of the signal photons from a photodetector, the acquiring including acquiring the quantum interference signal under a condition that a sweep range of the optical path difference is limited compared with when sweeping the optical path difference to acquire an entire envelope of the quantum interference signal, or under a condition that the optical path difference is fixed;
calculating amplitude of an interference fringe that appears in the quantum interference signal; and
calculating, based on the amplitude of the interference fringe, an absorption spectroscopy characteristic of the sample at a wavelength of the idler photon corresponding to the control parameter .

The embodiments disclosed this time should be considered as illustrative in all respects and not restrictive. The scope of the present disclosure is indicated by the claims, rather than the above description of the embodiments and is intended to include all modifications within the meaning and scope equivalent to the claims.

REFERENCE SIGNS LIST

1, 1A, 2 to 6: quantum absorption spectroscopy system, 10, 10A, 20, 30, 40, 60: quantum optical system, 101: excitation light source, 102: lens, 103: dichroic mirror, 104: nonlinear optical crystal, 105: rotation stage, 106: dichroic mirror, 107: fixed mirror, 108: lens, 109: sample holder, 110: moving mirror, 111: driver, 112: lens, 113: long pass filter, 114: iris, 115: bandpass filter, 116: translation stage, 117: dichroic mirror, 118: mirror, 119: fixed mirror, 120: driver, 121: ATR unit, 121A: lens, 121B: prism, 121C: lens, 122: fixed mirror, 21: QPM device, 22: translation stage, 31: temperature controller, 311: heater, 41: wavelength-variable excitation light source, 61: adjustment mechanism, 81: photodetector, 82: spectrometer, 821: dispersive optical element, 822: light-receiving element, 83: photodetector, 90: controller, 91: processor, 92: memory, 921: ROM, 922: RAM, 923: flash memory, 93: input device, 94: output device, 95: communication IF.

Claims

1. A quantum absorption spectroscopy system comprising:

a quantum optical system that causes quantum interference between a plurality of physical processes in which a quantum entangled photon pair of a signal photon and an idler photon is generated, the quantum optical system including

a nonlinear optical element that generates the quantum entangled photon pair by irradiation with pump light, a wavelength scanner that scans a wavelength of the quantum entangled photon pair by changing a control parameter, and an optical path sweeper that sweeps an optical path difference between the signal photon and the idler photon;

a photodetector that outputs a signal depending on a detected number of the signal photons in a state where a target sample is disposed in an optical path of the idler photon; and a processor that controls the quantum optical system to cause the quantum interference and calculates an absorption spectroscopy characteristic of the target sample based on a quantum interference signal acquired from the photodetector during the control, wherein the processor:

acquires, each time the wavelength is sequentially changed by changing the control parameter, the quantum interference signal under a condition that a sweep range of the optical path difference is limited compared with when sweeping the optical path difference to acquire an entire envelope of the quantum interference signal, or under a condition that the optical path difference is fixed, calculates amplitude of an interference fringe that appears in the acquired quantum interference signal, and calculates, based on the calculated amplitude of the interference fringe, the absorption spectroscopy characteristic at a wavelength of the idler photon corresponding to the control parameter.

2. The quantum absorption spectroscopy system according to claim 1, wherein

the photodetector detects the signal photon without performing wavelength resolution, the processor:

limits, each time the wavelength is changed sequentially, the sweep range of the optical path difference such that the quantum interference signal is selectively acquired in a specific time domain that is narrower than a time domain of the entire envelope of the quantum interference signal and includes a peak position of the quantum interference signal, and calculates the amplitude of the interference fringe that appears in the quantum interference signal in the specific time domain.

3. The quantum absorption spectroscopy system according to claim 2, further comprising

a memory that stores first correspondence between the control parameter and the sweep range of the optical path difference, wherein the processor limits, by referring to the first correspondence, the sweep range of the optical path difference according to the control parameter.

4. The quantum absorption spectroscopy system according to claim 2, further comprising

a memory that stores second correspondence between a refractive index and thickness of a sample, and the sweep range of the optical path difference, wherein the processor limits, by referring to the second correspondence, the sweep range of the optical path difference according to the refractive index and the thickness of the target sample.

5. The quantum absorption spectroscopy system according to claim 2, wherein the processor:

determines the specific time domain by sweeping the optical path difference with a first step width, and selectively acquires the quantum interference signal in the specific time domain by sweeping the optical path difference with a second step width smaller than the first step width.

6. The quantum absorption spectroscopy system according to claim 1, wherein

the processor has first and second modes,
the first mode is a mode of calculating the absorption spectroscopy characteristic of the target sample based on amplitude of a Fourier spectrum obtained by performing Fourier transform on the quantum interference signal,
the second mode is a mode of calculating the absorption spectroscopy characteristic of the target sample based on the amplitude of the interference fringe that appears in the quantum interference signal, and
the processor limits the sweep range of the optical path difference more in the second mode than in the first mode.

7. The quantum absorption spectroscopy system according to claim 1, wherein

the photodetector includes:

a dispersive optical element that performs wavelength resolution on the signal photon, and
a multi-pixel light-receiving element that detects light that undergoes the wavelength resolution by the dispersive optical element,

the processor:

acquires, each time the wavelength is changed sequentially, a quantum interference signal in a wavelength domain under a condition that the optical path difference is fixed, and
calculates the amplitude of the interference fringe that appears in the quantum interference signal in the wavelength domain.

8. The quantum absorption spectroscopy system according to claim 1, wherein

the photodetector includes a multi-pixel light-receiving element that detects the signal photon without performing wavelength resolution,
the processor:

acquires, each time the wavelength is changed sequentially, a spatial profile of light intensity of the signal photon in the multi-pixel light-receiving element as the quantum interference signal under a condition that the optical path difference is fixed, and
calculates the amplitude of the interference fringe that appears in the spatial profile.

9. The quantum absorption spectroscopy system according to any one of claims 1 to 8, wherein

the wavelength scanner includes a rotation mechanism that rotates the nonlinear optical element, and
the processor controls an angle formed by an optical axis of the nonlinear optical element with respect to an incidence direction of the pump light as the control parameter.

10. The quantum absorption spectroscopy system according to any one of claims 1 to 8, wherein

the nonlinear optical element is a fan-out quasi-phase matching element,
the wavelength scanner includes a moving mechanism that translates the quasi-phase matching element in a direction intersecting a propagation direction of the pump light, and
the processor controls a movement distance of the quasi-phase matching element by the moving mechanism as the control parameter.

11. The quantum absorption spectroscopy system according to any one of claims 1 to 8, wherein

the wavelength scanner includes a temperature controller that scans a temperature of the nonlinear optical element, and
the processor controls the temperature of the nonlinear optical element as the control parameter.

12. The quantum absorption spectroscopy system according to any one of claims 1 to 8, wherein

the wavelength scanner includes a light source configured to vary a wavelength of the pump light, and
the processor controls the wavelength of the pump light as the control parameter.

13. The quantum absorption spectroscopy system according to any one of claims 1 to 8, wherein the quantum optical system further includes an attenuated total reflection device that is configured to perform attenuated total reflection of the target sample.

14. A quantum absorption spectroscopy method using a quantum optical system, the quantum optical system being configured to cause quantum interference between a plurality of physical processes in which a quantum entangled photon pair of a signal photon and an idler photon is generated, scan a wavelength of the quantum entangled photon pair by changing a control parameter, and sweep an optical path difference between the signal photon and the idler photon, the quantum absorption spectroscopy method comprising:

scanning the wavelength by changing the control parameter in a state where a sample is disposed in an optical path of the idler photon;
acquiring, each time the wavelength is changed sequentially, a quantum interference signal according to a detected number of the signal photons from a photodetector, the acquiring including acquiring the quantum interference signal under a condition that a sweep range of the optical path difference is limited compared with when sweeping the optical path difference to acquire an entire envelope of the quantum interference signal, or under a condition that the optical path difference is fixed;
calculating amplitude of an interference fringe that appears in the quantum interference signal; and
calculating, based on the amplitude of the interference fringe, an absorption spectroscopy characteristic of the sample at a wavelength of the idler photon corresponding to the control parameter.

FIG.1

[FIRST EMBODIMENT]

1

QUANTUM OPTICAL SYSTEM

SINGLE-PIXEL PHOTODETECTOR — 81

10

116 115

113 114

112

Ls

103

Lp

102

EXCITATION LIGHT SOURCE — 101

ROTATION STAGE

104 105

θ

Lp, Ls, Li

106

Li

SP

108 109

ΔL

DRIVER

110 111

Lp, Ls

107

90

CONTROLLER

FIG.2

90

92

MEMORY

91

921

922

923

PROCESSOR

ROM

RAM

FLASH

93

94

95

INPUT DEVICE

OUTPUT DEVICE

COMMUNICATION IF

FIG.3

<WITHOUT SAMPLE>

104A   SIGNAL       104B
       LIGHT Ls
       (VISIBLE
       PHOTON)

PUMP LIGHT Lp

IDLER
LIGHT Li
(INFRARED
PHOTON)

81

NOT DETECTED

<WITH SAMPLE>

104A                104B

Lp          Ls

Li     SP

81

DETECTED

**FIG.4**

## FIG.5

<Q-FTIR MODE>

OPTICAL PATH DIFFERENCE $\Delta L$

# FIG.6

<Q-FTIR MODE>

```
        START
          │
          ▼            ┌─ S11
  ┌──────────────────────────────┐
  │ FIRST QUANTUM MEASUREMENT    │
  │ (WITHOUT SAMPLE)             │
  └──────────────────────────────┘
          │
          ▼            ┌─ S12
  ┌──────────────────────────────┐
  │ SECOND QUANTUM MEASUREMENT   │
  │ (WITH SAMPLE)                │
  └──────────────────────────────┘
          │
          ▼            ┌─ S13
  ┌──────────────────────────────┐
  │ ARITHMETIC PROCESSING        │
  │ (CALCULATION OF INFRARED     │
  │ ABSORPTION SPECTROSCOPY      │
  │ CHARACTERISTIC)              │
  └──────────────────────────────┘
          │
          ▼
         END
```

## FIG.7

<Q-FTIR MODE>

S12

SECOND QUANTUM
MEASUREMENT

S121
SET SCANNING RANGE OF CRYSTAL
ROTATION ANGLE $\theta$

S122
START OUTPUTTING PUMP LIGHT

S123
ACQUIRE SIGNAL COUNT $P_s$ WHILE
SWEEPING ENTIRE SWEEP RANGE
WITH SMALL STEP WIDTH

S124
IS MIRROR SWEEPING COMPLETED?    NO

YES

S125
$\theta(n) \rightarrow \theta(n+1)$

S126
NO    IS ROTATIONAL
SCANNING COMPLETED?

YES

S127
STOP OUTPUTTING PUMP LIGHT

RETURN

FIG.8

<Q-FTIR MODE>

$$\text{ARITHMETIC PROCESSING}$$

S13

S131

CALCULATE AMPLITUDE $A_s(k)$ BY FOURIER TRANSFORM OF QUANTUM INTERFERENCE SIGNAL OBTAINED BY SECOND QUANTUM MEASUREMENT

S132

CALCULATE AMPLITUDE $A_s^0(k)$ BY FOURIER TRANSFORM OF QUANTUM INTERFERENCE SIGNAL OBTAINED BY FIRST QUANTUM MEASUREMENT

S133

CALCULATE COMPLEX TRANSMITTANCE SPECTRUM OR TRANSMISSION SPECTRUM FROM AMPLITUDE RATIO $|A_s(k)/A_s^0(k)|$

RETURN

FIG.9

≪ λs=712 nm, λi=2104 nm ≫

FIG.10

≪ λs=600 nm, λi=4694 nm≫

OPTICAL PATH DIFFERENCE ΔL [μm]

FOURIER TRANSFORM

IDLER WAVELENGTH λi [nm]

FIG.11

FIG.12

<COARSE MODE>

$\theta = \theta(2)$

$\theta = \theta(1)$

PEAK POSITION
IDENTIFIED BY
FIRST SWEEP

$\theta = \theta(0)$

SWEEP RANGE OF FIRST SWEEP W1=50 $\mu$m

$\delta$L1=500nm

SIGNAL
COUNT $P_s$
[a.u.]

OPTICAL PATH DIFFERENCE $\Delta$L

FIRST SWEEP

$\theta = \theta(2)$

$\theta = \theta(1)$

$\theta = \theta(0)$ SWEEP RANGE OF SECOND SWEEP W2=4 $\mu$m

$P_s^{max}$

AMPLITUDE A

$\delta$L2=200nm

SIGNAL
COUNT $P_s$
[a.u.]

$P_s^{min}$

OPTICAL PATH DIFFERENCE $\Delta$L

SECOND SWEEP

# FIG.13

<COARSE MODE>

START

FIRST QUANTUM MEASUREMENT
(WITHOUT SAMPLE) — S21

SECOND QUANTUM MEASUREMENT
(WITH SAMPLE) — S22

ARITHMETIC PROCESSING
(CALCULATION OF INFRARED
ABSORPTION SPECTROSCOPY
CHARACTERISTIC) — S23

END

**FIG.14**

<COARSE MODE>

$$\left(\begin{array}{c}\text{SECOND QUANTUM}\\\text{MEASUREMENT}\end{array}\right)$$

S22

S2201

SET SCANNING RANGE OF CRYSTAL
ROTATION ANGLE $\theta$

S2202

START OUTPUTTING PUMP LIGHT

FIRST SWEEP

S2203

ACQUIRE SIGNAL COUNT $P_s$ WHILE
SWEEPING WIDE SWEEP RANGE W1
WITH SWEEP STEP $\delta$L1

S2204

IS MIRROR SWEEPING
COMPLETED? — NO

YES

S2205

IDENTIFY PEAK POSITION

SECOND SWEEP

S2206

ACQUIRE SIGNAL COUNT $P_s$ WHILE
SWEEPING NARROW SWEEP RANGE
W2 INCLUDING PEAK POSITION WITH
SWEEP STEP $\delta$L2 ($\delta$L2 < $\delta$L1)

S2207

IS MIRROR SWEEPING
COMPLETED? — NO

YES

S2208

$\theta$(n)→$\theta$(n+1)

S2209

NO — IS ROTATIONAL
SCANNING COMPLETED?

YES

S2210

STOP OUTPUTTING PUMP LIGHT

$$\left(\text{RETURN}\right)$$

## FIG.15

<COARSE MODE>

( ARITHMETIC PROCESSING )                S23

↓  S231

ACQUIRE MAXIMUM VALUE $P_s^{max}$ AND MINIMUM VALUE $P_s^{min}$ OF SIGNAL COUNT FOR EACH CRYSTAL ROTATION ANGLE $\theta$ REGARDING FIRST AND SECOND QUANTUM MEASUREMENT

↓  S232

CALCULATE VISIBILITY V FROM MAXIMUM VALUE $P_s^{max}$ AND MINIMUM VALUE $P_s^{min}$ FOR EACH CRYSTAL ROTATION ANGLE $\theta$ REGARDING SECOND QUANTUM MEASUREMENT

↓  S233

CALCULATE VISIBILITY Vref FROM MAXIMUM VALUE $P_s^{max}$ AND MINIMUM VALUE $P_s^{min}$ FOR EACH CRYSTAL ROTATION ANGLE $\theta$ REGARDING FIRST QUANTUM MEASUREMENT

↓  S234

CALCULATE TRANSMITTANCE T FROM VISIBILITY V, Vref FOR EACH CRYSTAL ROTATION ANGLE $\theta$

↓  S235

CREATE TRANSMISSION SPECTRUM FROM CORRESPONDENCE BETWEEN CRYSTAL ROTATION ANGLE $\theta$ AND IDLER WAVELENGTH $\lambda i$

↓

( RETURN )

# FIG.16

《CRYSTAL ROTATION ANGLE $\theta$ =0° 》

ROTATION

《CRYSTAL ROTATION ANGLE $\theta$ =32° 》

FIG.17

CRYSTAL ROTATION ANGLE $\theta$ [°]

SHIFT AMOUNT OF PEAK POSITION [mm]

FIG.18

MP0

| (REFRACTIVE INDEX, THICKNESS) | | | |
|---|---|---|---|
| CRYSTAL ROTATION ANGLE $\theta$ [°] | IDLER WAVELENGTH $\lambda$ i [nm] | SIGNAL WAVELENGTH $\lambda$ s [nm] | SWEEP RANGE W2 OF SECOND SWEEP [$\mu$ m] |
| −30 | | | |
| −29 | | | |
| ⋮ | | | |
| 0 | | | |
| ⋮ | | | |
| 29 | | | |
| 30 | | | |

## FIG.19

<COARSE MODE>

$\underline{S22}$

( SECOND QUANTUM
MEASUREMENT )

↓ S2211

RECEIVE INPUT OF REFRACTIVE INDEX
AND THICKNESS OF SAMPLE

↓ S2212

START OUTPUTTING PUMP LIGHT

↓ S2213

REFER TO MAP MP0 TO DETERMINE
SWEEP RANGE W2 FROM CRYSTAL
ROTATION ANGLE $\theta$

SECOND SWEEP

↓ S2214

ACQUIRE SIGNAL COUNT $P_s$ WHILE
SWEEPING NARROW SWEEP RANGE W2
WITH SWEEP STEP $\delta$L2

↓ S2215

< IS MIRROR SWEEPING
COMPLETED? > NO

YES

↓ S2216

$\theta$(n)→$\theta$(n+1)

↓ S2217

NO < IS ROTATIONAL
SCANNING COMPLETED? >

YES

↓ S2218

STOP OUTPUTTING PUMP LIGHT

↓

( RETURN )

FIG.20

SIGNAL WAVELENGTH λs [nm]

IDLER WAVELENGTH λi [nm]

FIG.21

<FINE MODE>

```
        ┌──────────────┐
        │    START     │
        └──────────────┘
               │
               ▼                    ┌S31
    ┌─────────────────────────────┐
    │ FIRST QUANTUM MEASUREMENT   │
    │ (WITHOUT SAMPLE)            │
    └─────────────────────────────┘
               │
               ▼                    ┌S32
    ┌─────────────────────────────┐
    │ SECOND QUANTUM MEASUREMENT  │
    │ (WITH SAMPLE)               │
    └─────────────────────────────┘
               │
               ▼                    ┌S33
    ┌─────────────────────────────┐
    │ ARITHMETIC PROCESSING       │
    │ (CALCULATION OF INFRARED    │
    │ ABSORPTION SPECTROSCOPY     │
    │ CHARACTERISTIC)             │
    └─────────────────────────────┘
               │
               ▼
        ┌──────────────┐
        │     END      │
        └──────────────┘
```

FIG.22

<FINE MODE>

SECOND QUANTUM
MEASUREMENT

S32

S321

SET LOCAL SCANNING RANGE OF
CRYSTAL ROTATION ANGLE $\theta$

S322

START OUTPUTTING PUMP LIGHT

S323

ACQUIRE SIGNAL COUNT $P_s$ WHILE
SWEEPING ENTIRE SWEEP RANGE WITH
SMALL SWEEP STEP

S324

IS MIRROR SWEEPING
COMPLETED?　　NO

YES

S325

$\theta(n) \rightarrow \theta(n+1)$

S326

NO　　IS ROTATIONAL
SCANNING COMPLETED?

YES

S327

STOP OUTPUTTING PUMP LIGHT

RETURN

FIG.23

<FINE MODE>

$\underline{S33}$

( ARITHMETIC PROCESSING )

S331

CALCULATE AMPLITUDE $A_s(k)$ BY FOURIER TRANSFORM OF QUANTUM INTERFERENCE SIGNAL OBTAINED BY SECOND QUANTUM MEASUREMENT

S332

CALCULATE AMPLITUDE $A_s^0(k)$ BY FOURIER TRANSFORM OF QUANTUM INTERFERENCE SIGNAL OBTAINED BY FIRST QUANTUM MEASUREMENT

S333

CALCULATE COMPLEX TRANSMITTANCE SPECTRUM OR TRANSMISSION SPECTRUM FROM AMPLITUDE RATIO$|A_s(k)/A_s^0(k)|$

( RETURN )

FIG.24

FIG.25

FIG.26

[FIRST EMBODIMENT]

1A

10A

QUANTUM OPTICAL SYSTEM

ROTATION STAGE

118

120 119 Lp Lp, Ls 106 Lp, Ls, Li θ 104 105 103 Ls 113 114 116 115 81

DRIVER

Ls 117 Li 112 SINGLE-PIXEL PHOTODETECTOR

ΔL

108

ATR 121 102

SP Lp

122 EXCITATION LIGHT SOURCE 101

90

CONTROLLER

FIG.27

FIG.28

| CRYSTAL MATERIAL | TRANSPARENT REGION | STRONG POINT |
|---|---|---|
| $LiNbO_3$ | 0.4~5.2 μm | ·VISIBLE LIGHT EXCITATION IS POSSIBLE ( > 400 nm) <br> ·TECHNOLOGY TO PRODUCE WAVEGUIDE STRUCTURE FOR IMPROVING PHOTON PAIR GENERATION EFFICIENCY HAS BEEN ESTABLISHED |
| $LiTaO_3$ | 0.3~5.5 μm | ·VISIBLE LIGHT EXCITATION IS POSSIBLE ( > 300 nm) <br> ·OPTICAL DAMAGE THRESHOLD HIGHER THAN $LiNbO_3$ ALLOWS HIGHER LUMINANCE USING HIGH INTENSITY EXCITATION LIGHT <br> ·AS WITH $LiNbO_3$, TECHNOLOGY TO PRODUCE WAVEGUIDE STRUCTURE HAS BEEN ESTABLISHED |
| $AgGaS_2$ | 0.5~12 μm | ·IT IS POSSIBLE TO ESTIMATE COMPLEX MOLECULAR STRUCTURE BY GENERATING INFRARED PHOTON IN FINGERPRINT REGION (UP TO 12 $\mu$m) <br> ·VISIBLE TO NEAR INFRARED EXCITATION ( > 700 nm) IS POSSIBLE |
| GaP | 0.7~12 μm | ·IT IS POSSIBLE TO ESTIMATE COMPLEX MOLECULAR STRUCTURE BY GENERATING INFRARED PHOTON IN FINGERPRINT REGION (UP TO 12 $\mu$m) <br> ·VISIBLE TO NEAR INFRARED EXCITATION ( > 700 nm) IS POSSIBLE <br> ·HIGH PHOTON PAIR GENERATION EFFICIENCY (APPROXIMATELY TWICE THAT OF $LiNbO_3$) |
| GaAs | 1~18 μm | ·SPECTROSCOPY IS POSSIBLE IN WIDER BAND THAN GaP ( < 18 $\mu$m) (WIDE RANGE OF ANALYTICAL APPLICATIONS) <br> ·EXTREMELY HIGH NONLINEAR CONVERSION EFFICIENCY (GREATER THAN FOUR TIMES THAT OF $LiNbO_3$) <br> ·HIGH-QUALITY CRYSTAL GROWTH TECHNOLOGY HAS BEEN ESTABLISHED |
| ZnSe | 0.4~22 μm | ·TRANSPARENT REGION IS WIDE, AND BROADBAND INFRARED GENERATION IS POSSIBLE BY VISIBLE EXCITATION ( > 400 nm) ALMOST ENTIRE FINGERPRINT REGION ( < 22 $\mu$m) THAT IS IMPORTANT FOR MOLECULAR STRUCTURE ESTIMATION IS COVERED <br> ·HIGH NONLINEAR CONVERSION EFFICIENCY (APPROXIMATELY THREE TIMES THAT OF $LiNbO_3$) |

EP 4 563 975 A1

FIG.29

EP 4 563 975 A1

# FIG.30

FIG.31

IDLER WAVELENGTH $\lambda$i [μm]

POLING PERIOD $\Lambda$ [μm]

FIG.32

MP1

| (REFRACTIVE INDEX, THICKNESS) | | | |
|---|---|---|---|
| MOVEMENT AMOUNT $\Delta X [\mu m]$ | IDLER WAVELENGTH $\lambda i$ [nm] | SIGNAL WAVELENGTH $\lambda s$ [nm] | SWEEP RANGE W2 OF SECOND SWEEP $[\mu m]$ |
| 0 | | | |
| 10 | | | |
| 20 | | | |
| ⋮ | | | |
| 4990 | | | |
| 5000 | | | |

## FIG.33

<COARSE MODE>

$\big($ SECOND QUANTUM MEASUREMENT $\big)$  S22

↓ S421

RECEIVE INPUT OF REFRACTIVE INDEX AND THICKNESS OF SAMPLE

↓ S422

START OUTPUTTING PUMP LIGHT

↓ S423

REFER TO MAP MP1 TO DETERMINE SWEEP RANGE W2 FROM MOVEMENT AMOUNT $\Delta X$

SECOND SWEEP

↓ S424

ACQUIRE SIGNAL COUNT $P_s$ WHILE SWEEPING NARROW SWEEP RANGE W2 WITH SWEEP STEP $\delta L2$

↓ S425

IS MIRROR SWEEPING COMPLETED? —NO

YES

↓ S426

TRANSLATE QPM DEVICE $\Delta X(n) \rightarrow \Delta X(n+1)$

↓ S427

NO— IS TRANSLATION SCANNING COMPLETED?

YES

↓ S428

STOP OUTPUTTING PUMP LIGHT

↓

$\big($ RETURN $\big)$

# FIG.34

[SECOND MODIFICATION OF FIRST EMBODIMENT]

<u>3</u>

EP 4 563 975 A1

63

FIG.35

IDLER WAVELENGTH $\lambda$i
[μm]

CRYSTAL TEMPERATURE T [°C]

## FIG.36

MP2

| (REFRACTIVE INDEX, THICKNESS) | | | |
|---|---|---|---|
| CRYSTAL TEMPERATURE T [°C] | IDLER WAVELENGTH $\lambda$i [nm] | SIGNAL WAVELENGTH $\lambda$s [nm] | SWEEP RANGE W2 OF SECOND SWEEP [$\mu$m] |
| 20 | | | |
| 25 | | | |
| 30 | | | |
| ⋮ | | | |
| 195 | | | |
| 200 | | | |

## FIG.37

<COARSE MODE>

( SECOND QUANTUM MEASUREMENT )  <u>S22</u>

→ S521

RECEIVE INPUT OF REFRACTIVE INDEX AND THICKNESS OF SAMPLE

→ S522

START OUTPUTTING PUMP LIGHT

→ S523

REFER TO MAP MP2 TO DETERMINE SWEEP RANGE W2 FROM CRYSTAL TEMPERATURE T

SECOND SWEEP

→ S524

ACQUIRE SIGNAL COUNT $P_s$ WHILE SWEEPING NARROW SWEEP RANGE W2 WITH SWEEP STEP $\delta$L2

→ S525

IS MIRROR SWEEPING COMPLETED?  —NO

YES

→ S526

CHANGE CRYSTAL TEMPERATURE T $T(n)\rightarrow T(n+1)$

→ S527

NO — IS TEMPERATURE SCANNING COMPLETED?

YES

→ S528

STOP OUTPUTTING PUMP LIGHT

( RETURN )

FIG.38

[THIRD MODIFICATION OF FIRST EMBODIMENT]

FIG.39

IDLER WAVELENGTH $\lambda i$ [μm]

PUMP WAVELENGTH $\lambda p$ [nm]

FIG.40

MP3

| (REFRACTIVE INDEX, THICKNESS) | | | |
|---|---|---|---|
| PUMP WAVELENGTH $\lambda$ p [nm] | IDLER WAVELENGTH $\lambda$ i [nm] | SIGNAL WAVELENGTH $\lambda$ s [nm] | SWEEP RANGE W2 OF SECOND SWEEP [$\mu$ m] |
| 450 | | | |
| 451 | | | |
| 452 | | | |
| ⋮ | | | |
| 569 | | | |
| 570 | | | |

# FIG.41

<COARSE MODE>

SECOND QUANTUM MEASUREMENT    S22

S621
RECEIVE INPUT OF REFRACTIVE INDEX AND THICKNESS OF SAMPLE

S622
START OUTPUTTING PUMP LIGHT

S623
REFER TO MAP MP3 TO DETERMINE SWEEP RANGE W2 FROM PUMP WAVELENGTH $\lambda$ p

SECOND SWEEP

S624
ACQUIRE SIGNAL COUNT $P_s$ WHILE SWEEPING NARROW SWEEP RANGE W2 WITH SWEEP STEP $\Delta$w2

S625
IS MIRROR SWEEPING COMPLETED?    NO

YES

S626
CHANGE PUMP WAVELENGTH $\lambda$ p
$\lambda$ p(n)→$\lambda$ p(n+1)

S627
NO    IS WAVELENGTH SCANNING COMPLETED?

YES

S628
STOP OUTPUTTING PUMP LIGHT

RETURN

FIG.42

FIG.43

FIG.44

<TIME DOMAIN QUANTUM INTERFERENCE SIGNAL>

SIGNAL COUNT $P_s$

OPTICAL PATH DIFFERENCE $\Delta L$ [μm]

<WAVELENGTH DOMAIN QUANTUM INTERFERENCE SIGNAL>

WITH QUANTUM INTERFERENCE
WITHOUT QUANTUM INTERFERENCE

$\Delta L \sim 0\mu m$

INTENSITY [a.u.]

SIGNAL WAVELENGTH $\lambda s$ [nm]

WITH QUANTUM INTERFERENCE

$\Delta L \sim 100\mu m$

INTENSITY [a.u.]

SIGNAL WAVELENGTH $\lambda s$ [nm]

WITH QUANTUM INTERFERENCE

$\Delta L \sim 200\mu m$

INTENSITY [a.u.]

SIGNAL WAVELENGTH $\lambda s$ [nm]

# FIG.45

<TIME DOMAIN QUANTUM INTERFERENCE SIGNAL>

SIGNAL
COUNT $P_s$
[a.u.]

$P_s^{max}$

AMPLITUDE A

$P_s^{min}$

OPTICAL PATH DIFFERENCE $\Delta L$ [mm]

SAME INFORMATION

<WAVELENGTH DOMAIN QUANTUM INTERFERENCE SIGNAL>

$\Delta L$ : FIXED

Imax

AMPLITUDE A

Imin

INTENSITY
[a.u.]

0

SIGNAL WAVELENGTH $\lambda_s$ [nm]

# FIG.46

```
        ╭─────────────────╮
        │ SECOND QUANTUM  │
        │   MEASUREMENT   │
        ╰─────────────────╯
                 │
                 ▼           ⌐S721
  ┌──────────────────────────────┐
  │ RECEIVE INPUT OF REFRACTIVE INDEX │
  │ AND THICKNESS OF SAMPLE      │
  └──────────────────────────────┘
                 │
                 ▼           ⌐S722
  ┌──────────────────────────────┐
  │ START OUTPUTTING PUMP LIGHT  │
  └──────────────────────────────┘
                 │
                 ▼           ⌐S723
  ┌──────────────────────────────┐
  │ REFER TO MAP TO DETERMINE    │
  │ OPTICAL PATH DIFFERENCE ΔL FROM │
  │ CRYSTAL ROTATION ANGLE θ     │
  └──────────────────────────────┘
                 │
                 ▼           ⌐S724
  ┌──────────────────────────────┐
  │ FIX OPTICAL PATH DIFFERENCE ΔL │
  └──────────────────────────────┘
                 │
                 ▼           ⌐S725
  ┌──────────────────────────────┐
  │ ACQUIRE QUANTUM INTERFERENCE │
  │ SIGNAL (INTERFERENCE FRINGE) IN │
  │ WAVELENGTH DOMAIN            │
  └──────────────────────────────┘
                 │
                 ▼           ⌐S726
  ┌──────────────────────────────┐
  │ CHANGE CRYSTAL ROTATION ANGLE θ │
  │ θ(n)→θ(n+1)                  │
  └──────────────────────────────┘
                 │
                 ▼           ⌐S727
       NO ╱──────────────────╲
   ┌─────⟨   IS ROTATIONAL    ⟩
   │      ╲ SCANNING COMPLETED?╱
   │              │ YES
   │              ▼           ⌐S728
   │  ┌──────────────────────────────┐
   │  │ STOP OUTPUTTING PUMP LIGHT   │
   │  └──────────────────────────────┘
   │              │
   │              ▼
   │        ╭──────────╮
   │        │  RETURN  │
   │        ╰──────────╯
```

**SECOND QUANTUM MEASUREMENT**

S721: RECEIVE INPUT OF REFRACTIVE INDEX AND THICKNESS OF SAMPLE

S722: START OUTPUTTING PUMP LIGHT

S723: REFER TO MAP TO DETERMINE OPTICAL PATH DIFFERENCE ΔL FROM CRYSTAL ROTATION ANGLE θ

S724: FIX OPTICAL PATH DIFFERENCE ΔL

S725: ACQUIRE QUANTUM INTERFERENCE SIGNAL (INTERFERENCE FRINGE) IN WAVELENGTH DOMAIN

S726: CHANGE CRYSTAL ROTATION ANGLE θ θ(n)→θ(n+1)

S727: IS ROTATIONAL SCANNING COMPLETED? — NO / YES

S728: STOP OUTPUTTING PUMP LIGHT

RETURN

## FIG.47

```
        ┌─────────────────────────────┐
        │   ARITHMETIC PROCESSING     │
        └─────────────────────────────┘
                     │
                     ▼              ⟋S731
  ┌──────────────────────────────────────────┐
  │ ACQUIRE MAXIMUM VALUE Imax AND MINIMUM    │
  │ VALUE Imin OF INTERFERENCE FRINGE FROM    │
  │ QUANTUM INTERFERENCE SIGNAL IN            │
  │ WAVELENGTH DOMAIN FOR EACH CRYSTAL        │
  │ ROTATION ANGLE  θ  REGARDING FIRST AND    │
  │ SECOND QUANTUM MEASUREMENT                │
  └──────────────────────────────────────────┘
                     │
                     ▼              ⟋S732
  ┌──────────────────────────────────────────┐
  │ CALCULATE VISIBILITY V FROM MAXIMUM       │
  │ VALUE Imax AND MINIMUM VALUE Imin FOR     │
  │ EACH CRYSTAL ROTATION ANGLE  θ            │
  │ REGARDING SECOND QUANTUM MEASUREMENT      │
  └──────────────────────────────────────────┘
                     │
                     ▼              ⟋S733
  ┌──────────────────────────────────────────┐
  │ CALCULATE VISIBILITY Vref FROM MAXIMUM    │
  │ VALUE Imax AND MINIMUM VALUE Imin FOR     │
  │ EACH CRYSTAL ROTATION ANGLE  θ            │
  │ REGARDING FIRST QUANTUM MEASUREMENT       │
  └──────────────────────────────────────────┘
                     │
                     ▼              ⟋S734
  ┌──────────────────────────────────────────┐
  │ CALCULATE TRANSMITTANCE T FROM            │
  │ VISIBILITY V, Vref FOR EACH CRYSTAL       │
  │ ROTATION ANGLE  θ                         │
  └──────────────────────────────────────────┘
                     │
                     ▼              ⟋S735
  ┌──────────────────────────────────────────┐
  │ CREATE TRANSMISSION SPECTRUM FROM         │
  │ CORRESPONDENCE BETWEEN CRYSTAL            │
  │ ROTATION ANGLE  θ  AND IDLER              │
  │ WAVELENGTH  λi                            │
  └──────────────────────────────────────────┘
                     │
                     ▼
        ┌─────────────────────────────┐
        │          RETURN             │
        └─────────────────────────────┘
```

# FIG.48

<u>6</u>

[THIRD EMBODIMENT]

EP 4 563 975 A1

# FIG.49

[COMPARATIVE EXAMPLE]

107  Ls  104  103  83

Li

ΔL  110

DECREASE  INCREASE

SPATIAL PROFILE OF SIGNAL
LIGHT INTENSITY CHANGES
WHILE REMAINING UNIFORM
ACCORDING TO OPTICAL
PATH DIFFERENCE ΔL

[THIRD EMBODIMENT]

107  Ls  104  103  83

Li

FIXED
110  INTENTIONAL CHANGE IN IDLER
OPTICAL PATH

Lp

INTERFERENCE FRINGE APPEARS
ON SPATIAL PROFILE OF SIGNAL
LIGHT INTENSITY

FIG.50

ΔL : FIXED

INTENSITY
[a.u.]

Imax

AMPLITUDE A

Imin

PIXEL POSITION

FIG.51

```
        ┌─────────────────────────┐
        │  SECOND QUANTUM         │
        │  MEASUREMENT            │
        └─────────────────────────┘
                    │
                    ▼            ╭S821
        ┌─────────────────────────────┐
        │ RECEIVE INPUT OF REFRACTIVE │
        │ INDEX AND THICKNESS OF SAMPLE│
        └─────────────────────────────┘
                    │
                    ▼            ╭S822
        ┌─────────────────────────────┐
        │ START OUTPUTTING PUMP LIGHT │
        └─────────────────────────────┘
                    │
    ┌──────────────▶│            ╭S823
    │   ┌─────────────────────────────┐
    │   │ REFER TO MAP TO DETERMINE   │
    │   │ OPTICAL PATH DIFFERENCE ΔL  │
    │   │ FROM CRYSTAL ROTATION ANGLE θ│
    │   └─────────────────────────────┘
    │               │            ╭S824
    │   ┌─────────────────────────────┐
    │   │ FIX OPTICAL PATH DIFFERENCE ΔL│
    │   └─────────────────────────────┘
    │               │            ╭S825
    │   ┌─────────────────────────────┐
    │   │ ACQUIRE SPATIAL PROFILE OF  │
    │   │ SIGNAL LIGHT INTENSITY      │
    │   │ (INTERFERENCE FRINGE)       │
    │   └─────────────────────────────┘
    │               │            ╭S826
    │   ┌─────────────────────────────┐
    │   │ CHANGE CRYSTAL ROTATION ANGLE θ│
    │   │ θ(n)→θ(n+1)                 │
    │   └─────────────────────────────┘
    │               │            ╭S827
    │   NO ╱────────────────────────╲
    └─────┤ IS ROTATIONAL            │
          ╲ SCANNING COMPLETED?      ╱
           ╲────────────────────────╱
                    │ YES
                    ▼            ╭S828
        ┌─────────────────────────────┐
        │ STOP OUTPUTTING PUMP LIGHT  │
        └─────────────────────────────┘
                    │
                    ▼
              ┌───────────┐
              │  RETURN   │
              └───────────┘
```

# FIG.52

ARITHMETIC PROCESSING

S831

ACQUIRE MAXIMUM VALUE Imax AND MINIMUM VALUE Imin OF INTERFERENCE FRINGE OF SPATIAL PROFILE FOR EACH CRYSTAL ROTATION ANGLE $\theta$ REGARDING FIRST AND SECOND QUANTUM MEASUREMENT

S832

CALCULATE VISIBILITY V FROM MAXIMUM VALUE Imax AND MINIMUM VALUE Imin FOR EACH CRYSTAL ROTATION ANGLE $\theta$ REGARDING SECOND QUANTUM MEASUREMENT

S833

CALCULATE VISIBILITY Vref FROM MAXIMUM VALUE Imax AND MINIMUM VALUE Imin FOR EACH CRYSTAL ROTATION ANGLE $\theta$ REGARDING FIRST QUANTUM MEASUREMENT

S834

CALCULATE TRANSMITTANCE T FROM VISIBILITY V, Vref FOR EACH CRYSTAL ROTATION ANGLE $\theta$

S835

CREATE TRANSMISSION SPECTRUM FROM CORRESPONDENCE BETWEEN CRYSTAL ROTATION ANGLE $\theta$ AND IDLER WAVELENGTH $\lambda$ i

RETURN

## INTERNATIONAL SEARCH REPORT

International application No.

**PCT/JP2023/025937**

### A. CLASSIFICATION OF SUBJECT MATTER

*G01N 21/35*(2014.01)i; *G01J 3/42*(2006.01)i; *G01J 3/45*(2006.01)i; *G02F 1/39*(2006.01)i

FI: G01N21/35; G01J3/45; G01J3/42 U; G02F1/39

According to International Patent Classification (IPC) or to both national classification and IPC

### B. FIELDS SEARCHED

Minimum documentation searched (classification system followed by classification symbols)

G01N21/00-G01N21/61; G01J3/00-G01J3/52; G02F1/39

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| Y | WO 2017/160225 A1 (AGENCY FOR SCIENCE, TECHNOLOGY AND RESEARCH) 21 September 2017 (2017-09-21) paragraphs [0055]-[0070], [0074], [0092]-[0095], fig. 5A-5B, 7A-7C | 1-4, 9-14 |
| A | | 5-8 |
| Y | PATEROVA, A et al., Measurement of infrared optical constants with visible photons, New J. Phys., 12 April 2018, vol. 20, 043015, pp. 1-10, https://doi.org/10.1088/1367-2630/aab5ce pp. 4-6, table 1, fig. 2-4 | 1-4, 9-14 |
| Y | JP 2010-243208 A (SONY CORP.) 28 October 2010 (2010-10-28) paragraphs [0015], [0046]-[0049], fig. 9 | 10 |
| Y | US 2017/0075190 A1 (THE UNIVERSITY OF BRISTOL) 16 March 2017 (2017-03-16) paragraphs [0109]-[0111] | 12 |
| Y | WO 2021/117632 A1 (KYOTO UNIVERSITY) 17 June 2021 (2021-06-17) paragraphs [0181]-[0189], fig. 13, 14 | 13 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **07 September 2023** | **26 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/025937**

| Patent document cited in search report | | | Publication date (day/month/year) | Patent family member(s) | | | Publication date (day/month/year) |
|---|---|---|---|---|---|---|---|
| WO | 2017/160225 | A1 | 21 September 2017 | US paragraphs [0076]-[0090], [0094], [0112]-[0115], fig. 5A-5B, 7A-7C | 2019/0086330 | A1 | |
| | | | | SG | 11201807118Y | A | |
| JP | 2010-243208 | A | 28 October 2010 | (Family: none) | | | |
| US | 2017/0075190 | A1 | 16 March 2017 | GB p. 22, line 34 to p. 23, line 17 | 2542189 | A | |
| | | | | GB | 2599048 | A | |
| WO | 2021/117632 | A1 | 17 June 2021 | US paragraphs [0222]-[0231], fig. 13, 14 | 2023/0020945 | A1 | |
| | | | | EP | 4075110 | A1 | |
| | | | | CN | 115135987 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021117632 A

- JP 2004054191 A

**Non-patent literature cited in the description**

- **Y. MUKAI** ; **M. ARAHATA** ; **T. TASHIMA** ; **R. OKAMOTO** ; **S. TAKEUCHI**. Quantum Fourier-Transform Infrared Spectroscopy for Complex Transmittance Measurements. *Physical Review Applied*, 2021, vol. 15, 034019
- **MASAYA ARAHATA** ; **YU MUKAI** ; **BO CAO** ; **TOSHIYUKI TASHIMA** ; **RYO OKAMOTO** ; **SHIGEKI TAKEUCHI**. Wavelength variable generation and detection of photon pairs in visible and mid-infrared regions via spontaneous parametric down conversion. *Journal of the Optical Society of America B*, June 2021, vol. 38 (6)

- **MASAYA ARAHATA** ; **YU MUKAI** ; **TOSHIYUKI TASHIMA** ; **RYO OKAMOTO** ; **SHIGEKI TAKEUCHI**. Wavelength-tunable broadband infrared quantum absorption spectroscopy in the mid-infrared region 2-5 um. *Abstracts of the 4th IFQMS*, 03 December 2021
- **YU MUKAI** ; **RYO OKAMOTO** ; **SHIGEKI TAKEUCHI**. Quantum Fourier-transform infrared spectroscopy in the fingerprint region. *Optics Express*, 2022, vol. 30 (13), 22624-22636
- **CHIARA LINDNER** ; **SEBASTIAN WOLF** ; **JENS KIESSLING** ; **FRANK KUHNEMANN**. Fourier transform infrared spectroscopy with visible light. *Optics Express*, 2020, vol. 28 (4), 4426-4432